# FASCICULE DE BREVET EUROPEEN

(11) **EP 0 859 970 B1**
(45) Date de publication et mention de la délivrance du brevet: **02.07.2003**
(21) Numéro de dépôt: 96938288.6
(22) Date de dépôt: 08.11.1996
(51) Int. Cl.: G02F 1/139

(54) **DISPOSITIF D'AFFICHAGE A BASE DE CRISTAUX LIQUIDES ET A EFFET BISTABLE**
BISTABILE FLÜSSIGKRISTALLANZEIGE
BISTABLE LIQUID CRYSTAL DISPLAY DEVICE

(30) Priorité: 08.11.1995 FR 9513201; 10.04.1996 FR 9604447
(43) Date de publication de la demande: 26.08.1998
(73) Titulaire: NEMOPTIC S.A, 75005 Paris (FR)
(72) Inventeur: BARBERI, Ricardo, I-87036 Arcavacata di Rende (IT); DOZOV, Ivan, F-91190 Gif-sur-Yvette (FR); DURAND, Georges, F-91400 Orsay (FR); MARTINOT-LAGARDE, Philippe, F-91460 Marcoussis (FR); NOBILI, Maurizio, F-33600 Pessac (FR); POLOSSAT, Eric, F-34080 Montpellier (FR); LELIDIS, Ioannis, Inst.de Génie Atomique Dép.Phys., CH-1015 Lausanne (CH); GIOCONDO, Michele, Dip. di Fisica, I-86036 Arcavacata di Rende (IT)
(74) Mandataire: Texier, Christian
(86) Numéro de dépôt international: FR9601771
(87) Numéro de publication internationale: WO97017632

(56) Documents cités:
- EP-A- 0 018 180
- FR-A- 2 587 506
- US-A- 5 040 876
- LIQUID CRYSTALS, AUG. 1991, UK, vol. 10, no. 2, ISSN 0267-8292, pages 289-293, XP000590840 BARBERI R ET AL: "Flow induced bistable anchoring switching in nematic liquid crystals" cité dans la demande
- JOURNAL OF APPLIED PHYSICS, APRIL 1981, USA, vol. 52, no. 4, ISSN 0021-8979, pages 3032-3039, XP002009196 BERREMAN D W ET AL: "New bistable liquid-crystal twist cell" cité dans la demande
- APPLIED PHYSICS LETTERS, 11 DEC. 1989, USA, vol. 55, no. 24, ISSN 0003-6951, pages 2506-2508, XP000095688 BARBERI R ET AL: "Electrically controlled surface bistability in nematic liquid crystals" cité dans la demande
- APPLIED PHYSICS LETTERS, 2 MARCH 1992, USA, vol. 60, no. 9, ISSN 0003-6951, pages 1085-1086, XP000289969 BARBERI R ET AL: "Flexoelectrically controlled surface bistable switching in nematic liquid crystals" cité dans la demande

## Description

La présente invention concerne le domaine des dispositifs d'affichage à base de cristaux liquides.

Plus précisément la présente invention concerne le domaine des dispositifs d'affichage à effet bistable.

Les dispositifs d'affichage à base de cristaux liquides ont déjà donné lieu à une littérature abondante.

On peut citer par exemple, à titre non limitatif, les documents suivants :
(1) Europhysics Letters (25) (7), p 527-531 Critical Behaviour of a Nematic-Liquid-Crystal Anchoring at a Monostable-Bistable Surface Transition, M. Nobili et al. ;
(2) J. Phys. II France 5 (1995), p 531-560 Surface Walls on a Bistable Anchoring of Nematic Liquid Crystals, M. Nobil et al ;
(3) Liquid Crystals 1992, vol. 12, n° 3, p 515-520 Dynamics of surface anchoring breaking in a nematic liquid crystal, A. Gharbi et al ;
(4) Liquid Crystals 1991, vol. 10, n° 2, p 289-293 Flow induced bistable anchoring switching in nematic liquid crystals, R. Barberi et al qui décrit des dispositifs à ancrage bistable ;
(5) Appl. Phys. Letters 55 (24) Electrically Controlled surface bistability in nematic liquid crystals, R. Barberi et al qui décrit des dispositifs à ancrage bistable ;
(6) Appl. Phys. Letters 60 (9) Flexoelectrically controlled surface bistable switching in nematic liquid crystals, R. Barberi et al ;
(7) Appl. Phys. Letters (62) (25) Intrinsic multiplexability of surface bistable nematic displays, R. Barberi et al ;
(8) Appl. Phys. Letters 40 (11) A Multiplexible bistable nematic liquid crystal display using thermal crasure, G.D. Boyd et al ;
(9) Appl. Phys. Letters 37 (12) Threshold and switching characteristics of a bistable nematic liquid-crystal storage display, Julian Cheng et al. ;
(10) Appl. Phys. Letters 36 (7), Liquid-crystal orientational bistability and nematic storage effects, G.D. Boyd et al. ;
(11) J. Appl. Phys. 52 (4), Boundary-layer model of field effects in a bistable liquid-crystal geometry ; J. Cheng et al. ;
(12) J. Appl. Phys. 52 (4), The propagation of disclinations in bistable switching, J. Cheng et al ;
(13) J. Appl. Phys. 52 (2) Surface pinning of disclinations and the stability of bistable nematic storage displays, J. Cheng et al ;
(14) Appl. Phys. Letters 40 (12) A nematic liquid crystal storage display based on bistable boundary layer configurations, J. Cheng et al. ;
(15) App. Phys. Letters 43 (4) Discovery of DC switching of a bistable boundary layer liquid crystal display, R.B. Meyer et al ;
(16) J. Appl. Phys. 56 (2) Physical mechanisms of DC switching in a liquid-crystal bistable boundary layer display R.N. Thurston et al ;
(17) J. Appl. Phys. 53 (6) Optical properties of a new bistable twisted nematic liquid crystal boundary layer display R.N. Thurston et al ;
(18) Le document D.W. Berreman et W. R. Heffner, J. Appl. Phys. 52 (1981), pages 3032-3039 décrit une cellule à cristal liquide comprenant un matériau cholestérique et décrit deux états stables qui peuvent être commutés par application temporaire d'une tension électrique.
(19) Appl. Phys. Letter 37(1) New bistable cholesteric liquid-crystal display, D.W. Berreman et al ;
(20) Asia Display 95, A biscable Twisted Nematic (BTN) LCD Driven by a Passive-Matrix Addressing, T. Tanaka et al ;
(21) J. Appl. Phys. (59) (9) Fast switching in a bistable 270° twist display, H.A. Van Sprang.

Les documents précités concernent essentiellement des études relatives aux cassures d'ancrages bistables, aux énergies d'ancrage et à des changements d'état par propagation de défauts.

Le document EP-A-0018180 décrit une cellule à cristal liquide comprenant un cristal liquide cholestérique disposé entre deux surfaces. La cellule possède deux états stables. Il est décrit que la cellule peut être commutée entre ces deux états stables par application d'un champ électrique alternatif pour porter la cellule dans un état instable à partir duquel la structure peut relaxer vers l'un ou l'autre des états stables selon la manière dont le champ est supprimé, par exemple de façon brusque ou graduelle.

Le document US-A-5040876 décrit des modulateurs optiques à base de cristaux liquides. Pour cela, ce document propose d'établir des interactions asymétriques entre les surfaces d'une couche de cristal liquide et des couches d'alignement. La dissymétrie peut être due à des différences de force d'ancrage ou des angles d'inclinaison différents pour les molécules de cristal liquide sur les deux surfaces. La commutation d'état est obtenue par application d'un champ électrique perpendiculaire aux surfaces du cristal liquide.

La présente invention a pour but de perfectionner les dispositifs d'affichage à cristaux liquides pour permettre l'obtention d'un nouvel effet bistable.

Ce but est atteint selon la présente invention grâce aux moyens définis dans les revendications annexées qui permettent d'obtenir et de commuter deux textures de volume.

Ces deux textures de volume qui gardent un état stable en l'absence de champ électrique externe, doivent être compatibles avec les ancrages monostables sur les plaques.

Selon un mode de réalisation particulier :
- les plaques définissent des seuils d'ancrage différents (ces ancrages pouvant être par exemple planaires ou homéotropes),
- l'épaisseur du dispositif entre les deux plaques, est suffisamment faible pour permettre un couplage hydrodynamique entre les surfaces internes de celles-ci, et
- il est prévu des moyens aptes à appliquer entre les électrodes des deux plaques alternativement une impulsion de champ électrique d'écriture supérieure à un seuil apte à casser les ancrages sur les deux plaques pour définir, après interruption de ce champ électrique, un premier état stable tordu résultant d'un couplage hydrodynamique entre les deux plaques, et un deuxième champ électrique inférieur audit seuil apte à casser un seul ancrage ou à front descendant variant lentement pour découpler les basculements sur les deux plaques, afin de définir un second état stable homogène.

D'autres caractéristiques, buts et avantages de la présente invention apparaîtront à la lecture de la description détaillée qui va suivre, et en regard des dessins annexés donnés à titre d'exemple non limitatif et sur lesquels :
- les figures 1a et 1b illustrent schématiquement deux textures de cristaux liquides nématiques obtenues avec des ancrages planaires,
- la figure 2 illustre l'alignement forcé des molécules de cristaux liquides d'anisotropie diélectrique positive, sur un champ électrique appliqué,
- la figure 3 illustre la courbe reliant l'angle des molécules en surface des électrodes par rapport à une normale aux plaques et le champ électrique appliqué,
- la figure 4 illustre la courbe reliant le seuil de champ pour casser les ancrages et la durée de l'impulsion de champ appliquée,
- les figures 5a, 5b, 5c et 5d illustrent schématiquement quatre textures obtenues successivement lorsque l'on abaisse progressivement le champ électrique appliqué,
- les figures 6a, 6b, 6c et 6d illustrent les textures obtenues lorsque au contraire on coupe brusquement le champ électrique,
- la figure 7 schématise un courant de masse obtenu près d'une plaque lorsque le champ électrique est interrompu,
- la figure 8 représente schématiquement un cisaillement d'écoulement localisé adjacent à une plaque et s'étalant jusqu'à l'autre plaque lors de la coupure du champ électrique de commande,
- la figure 9 illustre l'effet de couplage hydrodynamique entre les deux plaques,
- la figure 10 illustre une structure de flexion obtenue grâce au couplage hydrodynamique,
- la figure 11 illustre une structure tordue obtenue après la relaxation de la structure de flexion de la figure 10,
- la figure 12 illustre le basculement de molécules sur une seconde plaque sous l'effet d'un couplage hydrodynamique,
- les figures 13, 14 et 15 schématisent l'orientation azimuthale des molécules et le couple azimuthal obtenu sous l'effet du couplage hydrodynamique pour différentes orientations relatives entre les directions d'ancrage facile,
- la figure 16 schématise la structure obtenue lorsqu'un seul ancrage est cassé,
- la figure 17 schématise deux plaques superposées possédant des directions d'orientation facile tournées l'une par rapport à l'autre,
- la figure 18 illustre schématiquement une cellule conforme à la présente invention,
- la figure 19 représente schématiquement un écran matriciel conforme à la présente invention,
- les figures 20, 21 et 22 représentent schématiquement trois types de signaux électriques de commande,
- les figures 23 et 24 représentent des courbes tension de commutation/durée du champ électrique respectivement pour du 5CB pur et du 5CB dopé,
- les figures 25, 26 et 27 illustrent schématiquement trois orientations possibles de directeur nématique, au voisinage d'une surface,
- les figures 28, 29 et 30 illustrent schématiquement trois textures possibles pour des ancrages homéotropes,
- les figures 31 et 32 illustrent schématiquement deux textures possibles pour des ancrages obliques,
- la figure 33 illustre schématiquement la commutation commandée par un champ oblique appliqué par des électrodes interdigitales,
- la figure 34 schématise une autre variante de moyens permettant d'appliquer un champ oblique de commutation basés sur la résistance des électrodes, et la figure 35 représente le schéma équivalent de ces électrodes,
- la figure 36 illustre schématiquement la commutation commandée par un effet hydrodynamique obtenu grâce à une électrode de commande auxiliaire,
- la figure 37 représente schématiquement quatre étapes d'un dispositif conforme à l'invention comprenant une lame-maître d'ancrage oblique,
- la figure 38 illustre schématiquement l'angle des molécules en surface en fonction du champ électrique de commande statique,
- la figure 39 illustre le même angle en fonction du temps, après l'arrêt du champ de commande en l'absence de couplage entre les deux surfaces,
- la figure 40 représente un exemple de champ électrique de commande pour l'effacement de ce dispositif,
- la figure 41 représente schématiquement trois étapes du même dispositif, aboutissant à un effacement, grâce au champ électrique de commande illustré sur la figure 40,
- la figure 42 représente un autre exemple de champ électrique de commande pour l'effacement,
- la figure 43 représente quatre étapes du même dispositif, conduisant à un effacement grâce au champ électrique de commande illustré sur la figure 42,
- la figure 44 représente un diagramme de la tension U₂ en fonction du temps τ₂ et illustre les états inscription/effacement en conséquence,
- la figure 45 représente cinq étapes d'un dispositif conforme à l'invention comprenant une lame-esclave d'ancrage oblique et conduisant à une inscription,
- la figure 46 représente l'évolution de l'angle des molécules en surface en fonction du champ électrique de commande statique,
- la figure 47 représente l'orientation des molécules en surface,
- la figure 48 représente cinq étapes du même dispositif à lame-esclave d'ancrage oblique et conduisant à un effacement,
- la figure 49 représente l'angle des molécules en surface en fonction du champ électrique,
- la figure 50 représente le temps d'effacement spontané en fonction de l'épaisseur de la cellule,
- la figure 51 illustre le comportement optique d'un dispositif comprenant un mélange nématique-cholestérique,
- les figures 52A et 52B illustrent schématiquement deux textures bistables d'énergie élastique différentes respectivement en demi-tour de torsion et non tordue en éventail, avec un ancrage oblique sur une plaque et planaire sur l'autre,
- les figures 53A et 53B représentent des vues similaires pour des ancrages obliques sur les deux plaques,
- la figure 54 représente schématiquement l'intensité de la réponse optique du dispositif en fonction de la tension de commande pour un dispositif volumique habituel (courbe a) et pour le dispositif proposé (courbe b),
- la figure 55 représente le seuil d'inscription en fonction de la durée de l'impulsion,
- la figure 56 représente la réponse optique du dispositif dans le temps et illustre notamment un temps d'effacement spontané relativement court, et
- les figures 57, 58, 59 et 60 illustrent schématiquement quatre signaux de commande d'un dispositif conforme à l'invention.

On va tout d'abord décrire une mise en oeuvre préférentielle de la présente invention exploitant un couplage hydrodynamique, basée sur les études et expérimentations qui vont maintenant être exposées.

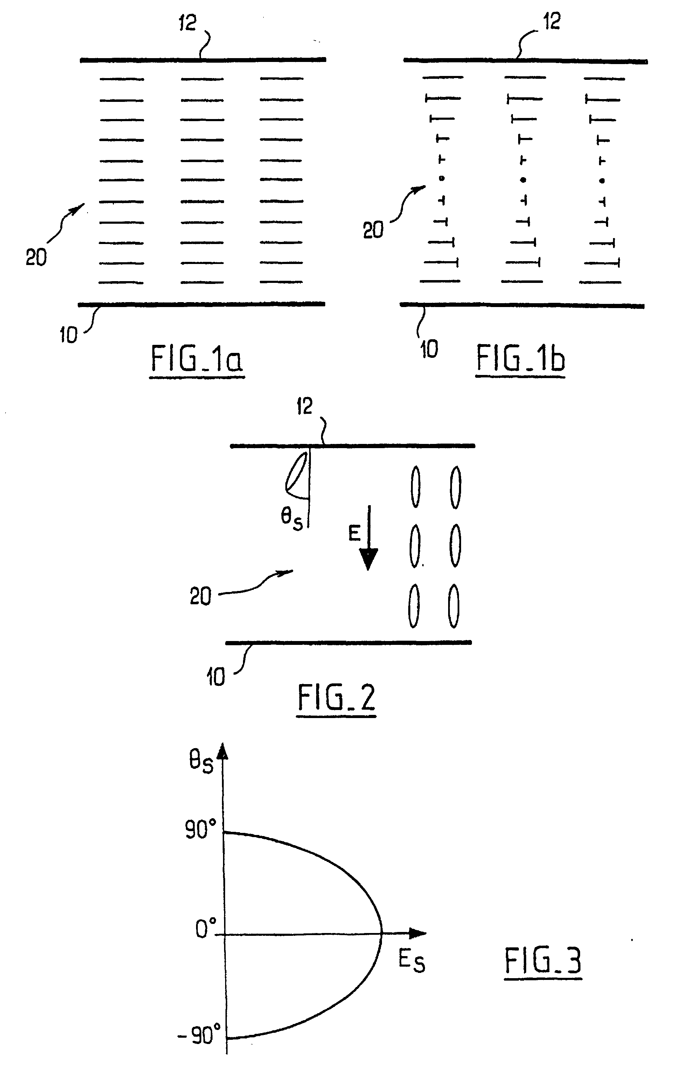

Les cristaux liquides nématiques peuvent former différentes textures pour des conditions d'ancrage identiques sur les deux plaques transparentes 10, 12 de confinement d'une cellule d'affichage : par exemple pour des ancrages faciles à réaliser dits "planaires" monostables. on peut obtenir les deux textures illustrées sur les figures 1a et 1b. Selon la lexture illustrée sur la figure la, les molécules 20 de cristaux liquides sont toutes parallèles entre elles dans le volume. et en surface sur les plaques 10, 12. Par contre, selon la texture illustrée sur la figure 1b, les molécules 20 de cristaux liquides présentent une structure tordue de 180°. c'est-à-dire que les molécules tout en restant parallèles aux plaques 10, 12, tournent progressivement de 180°, d'une plaque 10, à l'autre 12.

Ces deux textures des figures 1a et 1b ont des propriétés optiques différentes, et pourraient être utilisées en théorie pour définir deux états, noir et blanc, de transmission de lumière polarisée, en conservant les conditions d'ancrage aux surfaces sur les plaques 10, 12. On ne peut pas passer par déformation continue de l'une à l'autre (elles sont "topologiquement" différentes) ; on ne peut le faire qu'en créant des défauts qui représentent une barrière d'énergie importante devant l'agitation thermique : même si l'énergie des deux textures a et b est très différente, en l'absence de défauts, ces états peuvent être considérés comme éternellement stables. Il en est de même si les défauts deviennent immobiles en se collant aux surfaces. La façon la plus simple d'assurer la bistabilité des deux textures de torsion différente est bien connue de l'homme de l'art : elle consiste à cholesteriser le cristal liquide nématique sur une torsion spontanée intermédiaire entre celle des deux textures.

La multiplicité des textures correspondant à des ancrages monostables définis est une propriété générale des cristaux liquides nématiques ou cholestériques. Parmi ces textures, l'homme de l'art sait en choisir deux d'énergies voisines, mais de propriétés optiques différentes.

La présente invention vise à commander la transition entre ces deux textures, pour permettre la réalisation de pixels stables, donc des afficheurs à cristaux liquides bistables.

On reste pour l'instant avec les ancrages planaires. On sait (voir document [1]) que l'on peut "casser" les ancrages de surface, en utilisant un champ électrique E normal aux plaques (voir figure 2) et un cristal liquide nématique d'anisoiropie diélectrique positive εₐ = ε_{//} - ε_{┴} > 0, qui force l'alignement le long du champ. Le champ critique pour casser l'ancrage est défini par la condition :
ξ_{E}=*l*
où ξ_{E} est donnée par K/ξ_{E}² = (εₐ/4π) E²
K est la constante élastique de courbure (~10⁻⁶ cgs) et *l* est la longueur d'extrapolation définissant l'énergie d'ancrage zénithale. Cette énergie s'écrit :
Wₛ = (1/2) (K/*l*) cos² θₛ (θₛ ^{.} angle des molécules en surface).

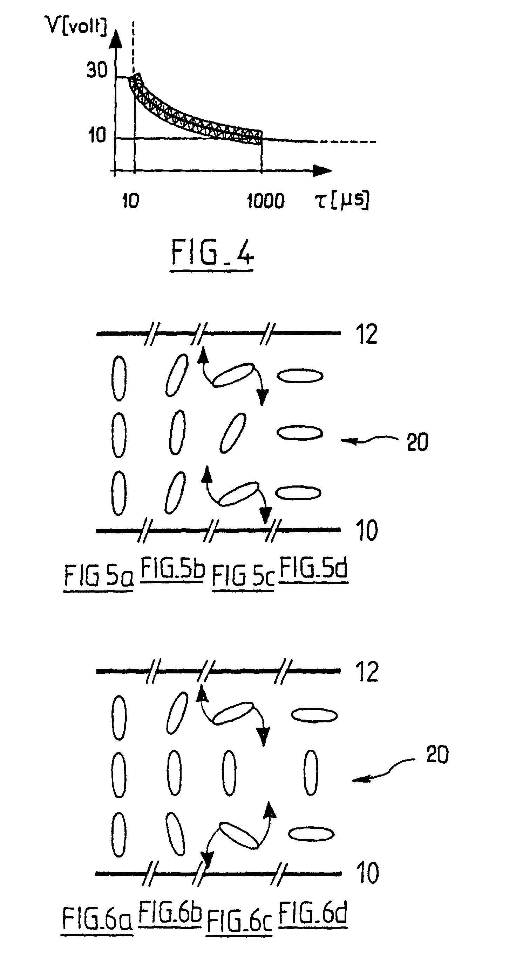

Pour des ancrages "forts", *l*~1000Å, on trouve Eₛ ~5V/µm et pour des ancrages "faibles", (*l* -1µm), Eₛ ~ 0,5 V/µm. Pour E croissant et s'approchant de Eₛ, l'angle en surface θₛ passe rapidement de 90° à 0. Au-dessus de Eₛ, l'angle θₛ reste nul, la surface est dite "cassée". La courbe reliant θₛ et E est illustrée sur la figure 3. Quand on applique le champ E sous forme d'une impulsion de longueur τ, le seuil augmente quand τ diminue (voir document [3]), mais la dynamique de surface étant rapide, on peut obtenir la brisure de l'ancrage de surface avec des tensions qui restent modérées : par exemple de l'ordre 30V, pour des temps τ ∼ 10µs, avec le cristal liquide 5CB à température ambiante (εₐ ∼ 10). La courbe reliant le seuil Eₛ et la durée τ de l'impulsion est illustrée sur la figure 4.

Quand les deux ancrages de surface sont cassés, la texture de la cellule est uniforme (comme illustré sur la figure 2), et n'a aucune mémoire de l'état initial, puisque les molécules 20 vues par le bout ne peuvent garder aucune torsion.

L'effet utilisé dans le cadre de l'invention pour commander les textures est un effet dynamique. Il repose sur les études et constatations suivantes.

Supposons d'abord qu'on ait cassé les deux ancrages des plaques 10 et 12 comme expliqué précédemment ; si l'on baisse lentement le champ électrique, à chaque instant, le système va choisir son état de moindre énergie, pour définir une texture lentement variable.

A partir de l'orientation homéotrope illustrée sur la figure 2, sous champ électrique, en champ nul, ces textures vont toujours vers l'état non tordu illustré sur la figure 5d, d'orientation planairc, en passant par une situation intermédiaire illustrée sur les figures 5b et 5c où les molécules sur les deux surfaces des plaques 10, 12 tournent dans la même direction, en restant parallèles. Ceci provient d'une interaction élastique entre les plaques 10, 12, qui minimise la courbure et l'énergie de courbure du système.

En revanche, si l'on coupe brutalement le champ électrique l'effet obtenu est très différent comme illustré sur la figure 6.

Les effets dynamiques sont contrôles par deux temps caractéristiques : celui du volume τᵥ et celui de la surface τₛ.
τᵥ est donné universellement par l'élasticité de courbure sur l'épaisseur d de l'échantillon, comme :
l/τᵥ = K/d²η où η est une viscosité (η=0.1 ou 1 poise).
τₛ est donné par la même formule, où d est remplacé par la longueur d'extrapolation de surface *l*.
l/τₛ = K/*l* ²η.

Comme *l*<<d, τₛ est très inférieur à τᵥ ; typiquement, pour d = 1µ. et *l* ∼ 1000Å, τᵥ = 1 ms et τₛ = 10µs.

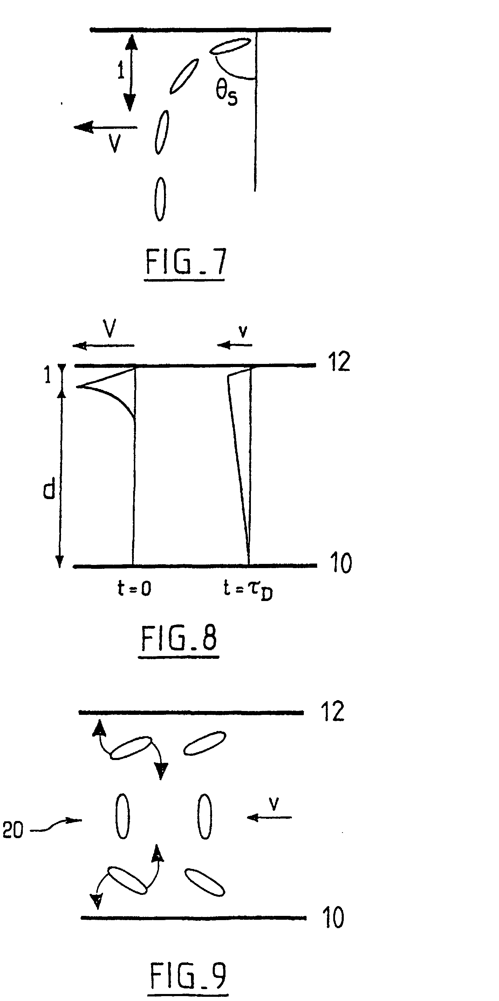

Quand on relache le champ E, les molécules sur les deux surfaces tournent rapidement pendant leur temps τₛ , les molécules en volume restant quasi immobiles. A cette échelle de temps, le couplage élastique entre les plaques 10 et 12 est négligeable, mais il existe un couplage hydrodynamique. A la rotation des molécules est associé un courant de masse (voir document [22]). Ce courant existe près de chaque plaque, sur une épaisseur ~*l*. Sa vitesse V est environ V = *l* /τₛ. Un tel courant est schématisé sur la figure 7.

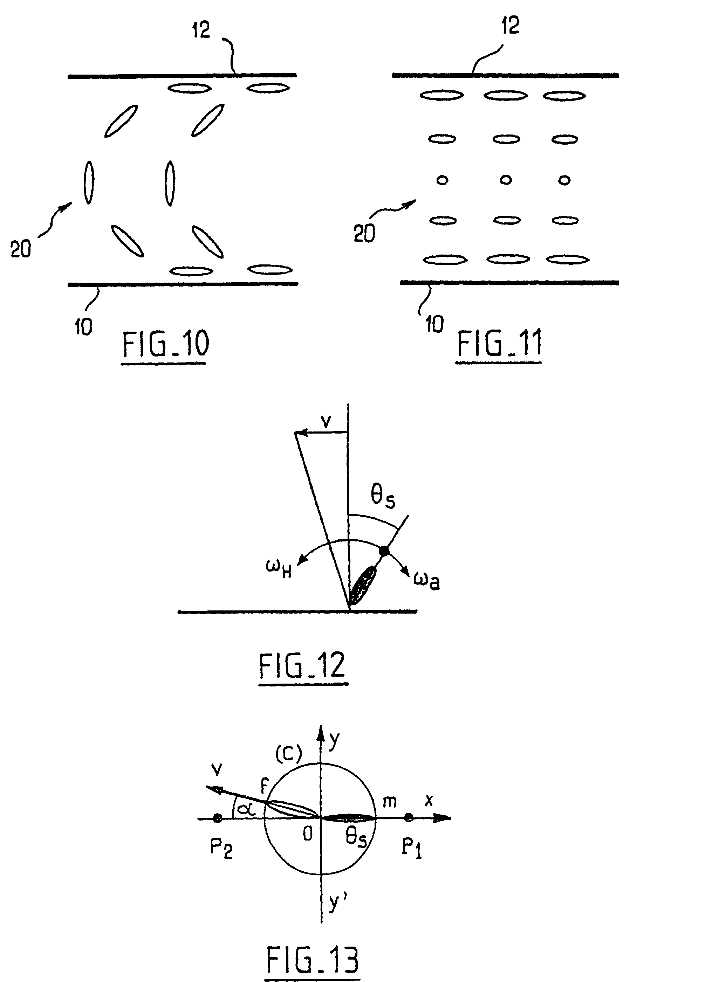

Supposons que la plaque 12 ait un seuil Eₛ₁₂ supérieur à celui Eₛ₁₀ de la plaque 10. Dans ce cas, les molécules 20 adjacentes à la plaque 12 tendent à revenir à l'état planaire avant les molécules adjacentes à la plaque 10. Et le retour des molécules de surface adjacentes à la plaque 12, de l'orientation θₛ = 0 à l'orientation stable θₛ = 90° (dite planaire) produit un cisaillement d'écoulement V localisé sur *l* comme schématisé sur la figure 8.

Ce cisaillement diffuse sur l'épaisseur de la cellule d dans un temps classiquement donné par la relaxation des tourbillons (équation de Navier-Stokes en hydrodynamique) par :
l/τ_{D} = η/d²ρ où ρ est la masse spécifique (p ~ 1).

Si τ_{D} < τₛ, l'information du basculement sur la plaque 12 arrive sur la plaque 10 pendant son basculement, et les deux plaques 10 et 12 sont couplées hydrodynamiquement. Cet effet hydrodynamique est transitoire et ne dure que le temps de basculement τₛ.

Pendant le temps de diffusion τ_{D}, le profil de vitesse s'allonge de la plaque 12 vers la plaque 10. L'amplitude de vitesse devient v ∼ V*l*/d, puisque on répartit le mouvement de la tranche *l*, vers la tranche d. Il apparaît sur la plaque 10 un gradient de vitesse v/d qui entraîne le basculement des molécules de la plaque 10 dans la direction de v.

Le couplage hydrodynamique entre les basculements de surface des deux plaques 10, 12 peut être assez fort (ceci sera explicité par la suite). Alors, la situation de basculement favorisée est toujours celle de la figure 9, où les molécules sur les deux surfaces tournent en sens opposé, et où le courant hydrodynamique total ν est uniforme dans la cellule, pour minimiser la friction. On obtient donc toujours une rotation de 180° entre les orientations des deux plaques 10, 12. Cette rotation peut être une flexion comme illustré sur la figure 10, généralement instable, qui se transforme en une torsion de 180° d'énergie élastique plus faible, donc une texture tordue comme illustré sur la figure 11.

Si le couplage hydrodynamique est faible, on pourrait obtenir au hasard l'une ou l'autre des textures a ou b illustrées sur la figure 1, mais à cause de l'interaction élastique, la texture uniforme est généralement obtenue.

L'influence de la force du couplage va maintenant être explicitée.

Supposons que la plaque 12 a un seuil Eₛ plus élevé que la plaque 10. Si après avoir appliqué ce champ Eₛ pour casser les ancrages, on baisse le champ E brutalement à zéro, la plaque 12 voit ses molécules tourner rapidement pendant τₛ et créer le cisaillement v/d sur la plaque 10, avec
τ_{D} < τₛ.

Pour diverses raisons (couplage élastique, hysteresis, etc ...), les molécules sur la plaque 10 peuvent vouloir tomber de la direction θₛ=0 vers la position stable planaire θₛ=90° en restant parallèles aux molécules qui tournent sur la plaque 12 (direction ωₐ). Si ce mouvement continue, il va donner une texture finale uniforme. Le cisaillement de gradient de vitesse v/d donne en volume une densité de couple η v/d sur les molécules. La somme de ces couples de volume est un couple de surface (η v/d) d ~ηv = η V *l* /d qui va faire tourner les molécules de surface dans le sens ω_{H} comme illustré sur la figure 12.

Pour obtenir le basculement qui crée une structure tordue comme illustré sur la figure 11, le couple de surface ainsi obtenu doit donc être supérieur au couple d'ancrage qui fait tourner dans la direction ωₐ (figure 12).

Cette condition est :
(K/*l*) θₛ < η V*l* /d. En remplaçant V par *l* /τₛ, avec l/τₛ = K/*l* ²η,
on obtient : θₛ < *l* /d
θₛ est de l'ordre de la variation d'angle pendant le temps τ_{D}, donc de l'ordre de τ_{D}/τₛ = (Kρ/η²) (d²/*l*²). La condition devient : d/l < (η² / Kρ)^{1/3}
avec η ~ 0,1 poise, on a : d < 20 *l*. Si *l* ∼ 1000Å, d doit être inférieur à 2 µm. Cependant, comme d=2µm est l'épaisseur type des échantillons, cette condition est parfois un peu délicate à réaliser. Il faudrait utiliser des ancrages faibles, avec un temps de réponse plus long.

Dans le cadre de l'invention, on considère que de préférence, l'épaisseur d de la cellule doit être inférieure à 5µm.

Il est donc proposé dans le cadre de l'invention, une méthode de couplage hydrodynamique des ancrages plus efficace, et qui fonctionne pour les ancrages forts.

Jusqu'à présent, seul l'ancrage zénithal en θₛ, qui est généralement plus fort a été pris en compte. Mais il existe aussi une direction privilégiée azimutale sur les plaques qui s'orientent "planaires" dans une direction définie. Appelant ϕ l'angle azimutal des molécules par rapport à cette direction, l'énergie de surface doit s'écrire :
Wₛ = (1/2) (K/*l*) cos² θₛ + (1/2) (K/L) sin² θₛ sin² ϕ.
où L est la longueur d'extrapolation définissant l'énergie d'ancrage azimutale K/L.

En général, le terme azimutal a une amplitude d'un ordre de grandeur plus faible (voir document [1]) que le terme zénithal : L est d'un ordre de grandeur supérieur à *l*. Si l'on regarde la plaque inférieure 10 en vue de dessus, on suppose que les molécules de surface se sont inclinées d'un angle θₛ, après le temps τ_{D} comme illustré sur la figure 13.

Si la direction planaire sur la plaque 10 est P, les molécules peuvent prendre les deux états possibles P1 et P2 sur celle-ci. Pour forcer les molécules à tomber sur l'état P2 qui donnera le demi-tour et non l'état P1, il suffit de déplacer l'extrémité m de la molécule de l'autre côté de yy', médiatrice de P1, P2 (figure 13). Pour ce faire, au lieu de changer θₛ en déplaçant m le long de P1 P2, il est plus efficace de tourner m à θₛ constant. sur le cercle C (figure 13). Il suffit pour cela de tourner la direction d'ancrage facile de la plaque supérieure 10 d'un angle α par rapport à P1 P2. La vitesse v est dans la direction α et produit un alignement final f. Le couple exercé par le gradient de vitesse transitoire est maintenant équilibré par la seule réaction de l'énergie d'ancrage azimutal, la condition des couples s'écrit ici pour θₛ petit :
K/l θ²ₛ < K/d θₛ.

La condition à réaliser est maintenant : θₛ < L/d, Comme L est un ordre de grandeur plus grand que l, la condition de couplage est plus facile à réaliser. On trouve finalement : d_{ϕ} = d_{θ} (L/*l*)^{1/3} > d_{θ}.

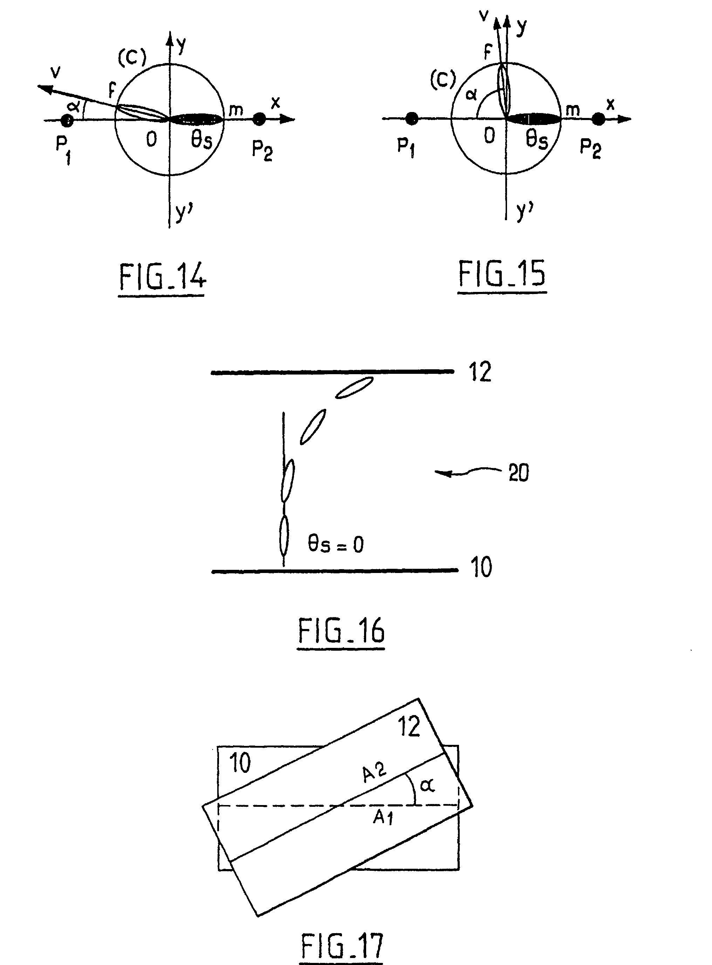

Il existe un angle optimal de rotation α des deux plaques. Si α est très petit, on va basculer très près de P2 (à 180° - α ~ 180°), mais on aura du mal à exercer le couple initial de rotation azimutale : le système préférera changer θₛ avec moins d'efficacité, comme illustré sur la figure 14. En revanche, si α est voisin de 90°, on obtiendra le couple azimutal le plus fort possible, comme illustré sur la figure 15 mais la rotation obtenue sera seulement de 90°, inefficace pour assurer le basculement, puisqu'elle place le système juste sur la ligne d'égale énergie entre P1 et P2. Il existe une valeur optimale qui peut être autour de 45°, ou de 135° si les ancrages ont une polarité définie dans le plan, comme c'est le cas de SiO évaporé ou d'un polymère frotté unidirectionnellement.

Pour effacer un état tordu "1/2 tour" tel que schématisé sur la figure 1b, il suffit de ne "casser" qu'un seul ancrage de surface si on procède rapidement, ou de descendre lentement le champ appliqué pour découpler dans le temps les deux basculements de surface, supposés de seuils différents. On choisira dans tous les cas des traitements de surface donnant des seuils d'ancrage différents, sur les deux plaques 10, 12.

Le principe du déroulement de la torsion en 1/2 tour repose sur le phénomène suivant. Quand une des deux surfaces est cassée seulement comme schématisé sur la figure 16, ou quand on relâche successivement les deux ancrages à un intervale de temps >τₛ, il n'y a plus d'effet hydrodynamique de couplage : les couplages élastiques dominent, l'orientation verticale d'une surface ne peut conserver la torsion qui disparaît. La torsion en 1/2 tour est donc effacée.

Sur la base des constatations qui précèdent, les inventeurs proposent de réaliser un afficheur (en fait un pixel), à l'aide de deux lames 10, 12 traitées pour donner des ancrages planaires A1 et A2 (ou à composante planaire) différents. Ces ancrages couplés à un nématique de εₐ>0 ont respectivement des seuils de cassure E1 et E2. On les place à α=45° l'un de l'autre comme schématisé sur la figure 17 ou à un autre angle α, différent de 0°, 90°, 180 ou de 270°, mais qui optimise le couplage hydrodynamique en rotation.

Cet angle α est aussi choisi pour donner un bon contraste entre la texture initiale, qui est maintenant tordue de l'angle α, et la texture finale dite "1/2 tour", qui est maintenant tordue d'un angle 180°-α. Pour inscrire, on applique une impulsion de champ électrique supérieure aux deux seuils E>E1 et E>E2. On coupe brutalement le champ : on obtient toujours l'état 180°-α, sous l'effet du couplage hydrodynamique, quel que soit l'état initial α ou 180°-α. Pour effacer, on applique une impulsion E comprise entre E1 et E2 en coupant rapidement l'impulsion, ou une impulsion d'intensité supérieure aux deux seuils E1 et E2, mais dont on abaisse lentement l'amplitude, pour découpler les basculements sur les deux plaques 10, 12 ; on obtient toujours l'état α, quel que soit l'état initial α ou 180°-α.

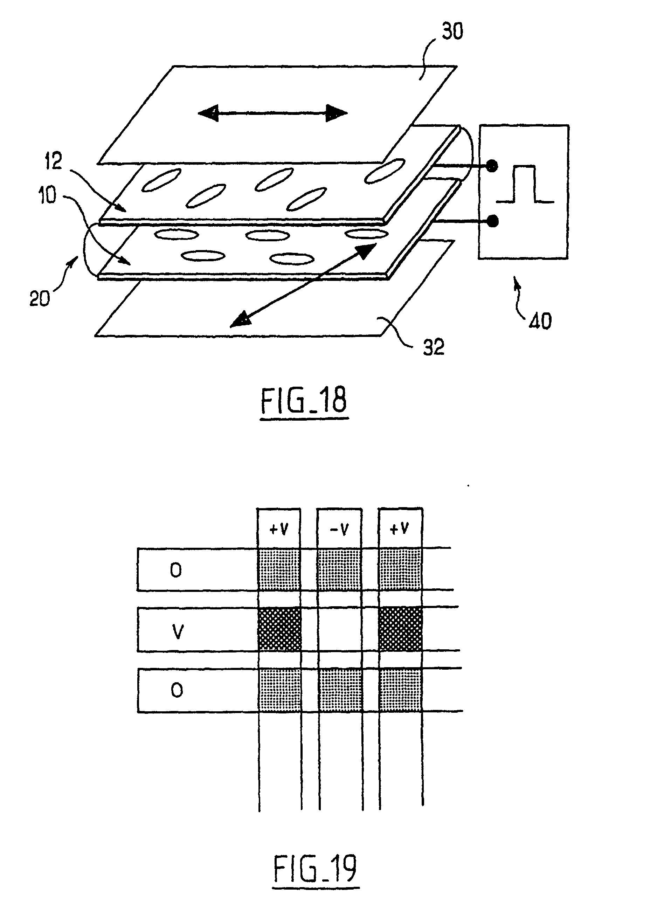

Les moyens d'alimentation conçus pour appliquer de telles impulsions de commande sont schématisés sous la référence 40 sur la figure 18.

Le contraste optique entre les deux états d'un tel pixel dépend dc l'épaisseur de l'échantillon et de l'orientation des polariscurs 30 et analyseurs 32 utilisés (voir figure 18),

Ce problème d'optimisation est connu des spécialistes (voir document 23). En pratique, pour chaque cristal liquide et chaque cellule, on trouve une position des polariseurs 30, 32 qui donne un pixel quasi transparent pour l'un des états, et un pixel quasi noir pour l'autre état.

Le système de commutation décrit précédemment possède des seuils, et une mémoire quasi infinie. Il est donc en principe quasi-bistable et multiplexable à l'infini. Pour le multiplexer, il suffit dans un écran matriciel comportant des lignes et des colonnes comme schématisé sur la figure 19, d'ouvrir une ligne en lui appliquant une tension légèrement inférieure à V = E₁d, seuil supérieur en tension de la surface la plus dure à casser. On applique sur les colonnes une tension ± v. La tension résultante sera V - ( ± v) = V-v ou V+v. V-v est inférieur au plus grand seuil. Si on a choisi |v| < (E₁-E₂)d, V-v est supérieur au petit seuil et donc "efface". V+v est supérieur au grand seuil, il "inscrit". On a intérêt à choisir v le plus petit possible pour ne pas soumettre les autres lignes à une tension alternative d'amplitude (±v) qui pourrait créer des instabilités d'autre type, par exemple l'instabilité de Freedericks ; on choisira v de l'ordre de 1 volt, par exemple v ≤ 1 volt typique pour ce faire. Le seuil le plus élevé devra donc être bien défini et uniforme. La valeur du seuil le plus faible est moins contraignante. Elle ne peut pas être trop faible pour que le système reste rapide. En pratique, on choisira donc des ancrages donnant des valeurs de seuil en volt, voisines à 1 volt près. Comme les seuils typiques sont de l'ordre de 10V/µm (document 1), pour une cellule de 2 µm d'épaisseur, les seuils doivent différer de 5 à 10%.

Pour réaliser des seuils d'ancrage et donc de tension de cassure peu différents sur les deux plaques 10, 12, on peut avoir intérêt à utiliser une même technologie de préparation des surfaces (évaporation oblique de SiO ou polymère frotté en surface par exemple) mais à jouer sur la polarité des seuils. On peut ainsi presque annuler ou amplifier une différence de seuil existante faible. On peut utiliser pour cela l'effet flexoélectrique ou l'effet de transport d'ions.

Les deux ancrages sur les deux plaques 10, 12 jouent dans le mécanisme proposé des rôles interchangeables. Donner une différence de seuil entre les deux ancrages liée à la polarité du champ appliqué n'a de sens que si la cellule est initialement dissymétrique, avec deux champs seuils différents E1#E2 donc deux tensions seuils différents V1 et V2.

Une première façon de jouer sur les seuils est d'utiliser l'effet flexoélectrique qui décale les forces d'ancrages proportionnellement au champ appliqué (voir document 24). Cet effet est d'ordre relatif e/(K)^{1/2} ~quelques10⁻¹, c'est-à-dire moyen ou faible.

Un effet polaire plus fort peut être obtenu avec un dopage d'ions. On observe en effet une dépendance de l'énergie d'ancrage en fonction de la polarité, par l'expérience suivante :

On prend une cellule tordue à 45°, avec deux ancrages planaires obtenus par une même évaporation de SiO. On choisit une épaisseur de cellule de 6 µm. La texture est tordue et la lumière polarisée suit cette torsion lente. On applique des impulsions électriques carrées, longues de 100 ms, de polarité définie. L'amplitude des impulsions varie de 0 à ±40 V. Le temps long est choisi pour être sûr de transporter tous les ions de la cellule d'une plaque à l'autre. La cellule contient du pentylcyanobiphényl (5CB) à température ambiante, dopé à 10⁻³ mole de tétraphénylborate de sodium, qui donne deux ions : Na⁺ et TΦB-. On observe pendant l'application du champ l'orientation des axes propres et la biréfringence de la cellule en lumière polarisée. On peut ainsi déterminer quelle plaque a cassé : les axes propres s'alignent sur la direction de l'autre plaque, et à quelles valeurs du champ les deux ancrages cassent. Les résultats montrent que la surface qui attire les Na⁺ casse la première à V=3 V, c'est-à-dire à 0,5 V/µm, un ordre de grandeur plus faible que d'habitude. L'autre plaque casse pour V=30 V, c'est-à-dire pour une valeur de champ de 5 V/µm (quasi normale).

On répète l'expérience avec un autre ion. On dope maintenant le nématique avec du chlorure de tétrabutyl ammonium, qui donne deux ions Cl- et TBA+. On constate que la surface qui attire Cl- voit baisser son seuil jusqu'à 1,5V/µm. Si on dope avec le bromure de cétyltributyl ammonium, qui donne des ions Br- et CTBA+, on observe une baisse jusqu'à 1 V/µm. de l'énergie d'ancrage sur la surface qui attire l'ion CTBA+.

L'effet des deux premiers dopages peut se comprendre par l'affinité plus grande des ions petits et minéraux pour la surface de SiO. Ces ions créent un champ électrique normal à la surface, qui diminue la force d'ancrage comme si on avait appliqué un champ extérieur. Le troisième dopage s'explique par l'action des chaînes cétyl de 16 carbones. Quand le bout de chaîne chargé se colle à la surface, la chaîne induit une orientation perpendiculaire, qui diminue la force d'ancrage planaire.

L'homme de l'art comprendra qu'un rapprochement des seuils E1, E2 est favorable à la procédure d'inscription, en revanche un éloignement des seuils E1 et E2 est favorable à la procédure d'effacement.

### Exemple de réalisation

Les inventeurs ont réalisé un afficheur avec le cristal liquide nématique pentylcyanobiphényl (5CB) qui a une phase nématique à température ambiante et une forte anisotropie diélectrique εₐ ~10>0. L'afficheur comprend des lames 10, 12 de verre traitées ITO (Indium Tin Oxyde) qui donnent des électrodes transparentes de faible résistance (30Ω/carré). Celles-ci sont traitées par évaporation oblique de SiO, avec un angle d'évaporation de 75°, presque rasant, et des épaisseurs vraies de 25Å et 30Å, connues pour donner un ancrage planaire, de force d'ancrage légèrement différentes (document 25). La cellule possède une épaisseur d=1,5µm, avec une rotation α=45°. La géométrie des orientations de la cellule est montrée sur la figure 18.

Cette cellule a permis d'obtenir pour la texture 45° une couleur jaune clair et une forte intensité transmise. Pour l'état 180°-α=135°, une intensité transmise faible, de couleur bleu très foncé, presque noire a été obtenue.

Pour tester le modèle, les inventeurs ont appliqué au système des impulsions carrées de longueur fixe 300 µs et d'amplitude variable V de 0 à 40 volts. Le temps de descente était inférieure à 1 µs. Un basculement clair vers foncé (blanc vers noir) a été obtenu à V=24,5 volts. En partant d'un état noir, les inventeurs ont toujours obtenu un état noir avec ces mêmes impulsions. Les inventeurs ont ensuite appliqué une impulsion de même polarité sur cet état noir, mais d'amplitude 21,5 volts. Une transition noir vers blanc, correspondant à un effacement a été obtenu. Ces mêmes impulsions de 21,5 volts laissent inchangé un état initial blanc. L'état final du système ne dépend donc que de l'amplitude de V, à même polarité. Ce comportement est expliqué par les inventeurs par le fait que l'un des seuils est un peu inférieur à 24,5 V et l'autre inférieur à 21,5 V.

Pour vérifier que le comportement du système est contrôlé par la seule décroissance finale du signal de commande, les inventeurs ont réalisé les expériences suivantes :

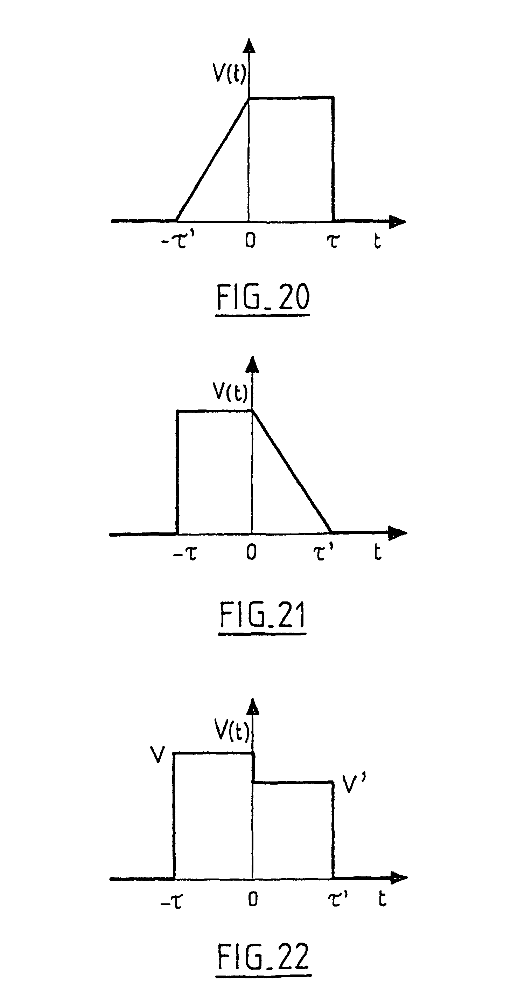

En premier lieu, les inventeurs ont utilisé des impulsions dont le front avant est linéaire en temps comme illustré sur la figure 20.

Plus précisément, les inventeurs ont choisi une durée de palier τ= 100 µs et on fait varier le temps de montée du front avant τ' de 0 à 300µs. Avec τ'=0, le système passe la transition blanc vers noir à V = 25 volts (ou noir vers noir si l'état initial est noir). Dans toute la plage utilisée pour τ', le comportement ne change pas, le seuil reste à 25 volts ± 0,5 volt. Ceci montre que seules l'amplitude et la descente d'impulsion sont efficaces.

En second lieu, les inventeurs ont utilisé des impulsions dont la descente est linéaire en temps comme illustré sur la figure 21. Pour des temps de descente de 0 < τ' < 30µs le comportement reste inchangé. Au-delà, pour 30 < τ' < 300µs, on obtient un effacement noir vers blanc en partant du noir et blanc vers blanc en partant du blanc. Pour τ=100µs et τ' = 0, on trouve un seuil V = 25 volts. Ce comportement confirme que seule la descente lente de l'impulsion est efficace pour un effacement. En descendant linéairement, on décale dans le temps le déclenchement des deux seuils. Avec les valeurs 21 volts et 25 volts, le temps de décalage est de [(25-21)/25] 30µs ∼ 5µs.

Cette valeur est la valeur estimée du temps de basculement de surface.

Pour bien isoler les deux seuils dans une même expérience, les inventeurs ont utilisé ensuite une impulsion de forme bicarrée d'amplitudes V et V' et de durées τ et τ', comme illustré sur la figure 22.

Les inventeurs ont choisi τ = 1 ms pour être sûr que le système ne se déclenche que sur la descente sans mémoire d'effet antérieur. Avec V'=0, un déclenchement blanc vers noir ou noir vers noir a été obtenu à V=22 volts.

Les inventeurs ont ensuite choisi V=30 volts pour être largement au-dessus du seuil. Et en prenant τ' = 0,5 ms, ils ont fait varier V'. Pour 30 volts > V' > 20 volts, l'inscription noire a été conservée. Pour 20 volts > V' > 7 volts, par contre le système devient un compteur binaire, c'est-à-dire qu'il produit des commutations blanc vers noir ou noir vers blanc. Entre zéro et 7 volts pour V', on retrouve l'inscription noire bien définie.

Les inventeurs ont ensuite changé la polarité de V' en gardant celle de V. Le même comportement a été observé :
- 30 volts < V' < -20 volts : inscription du noir
- 20 volts < V' < -7 volts : régime "compteur"
- 7 volts < V' < 0 volt : inscription du noir.

En l'état de leurs travaux, les inventeurs expliquent le régime compteur par un effacement incomplet : le système se souvient de l'état initial.

Le résultat important de cette expérience est que pour V'=-V, on obtient l'inscription ; ceci est aussi vérifié pour τ' = τ = 1 ms. Les inventeurs ont donc montré qu'une commande en courant alternatif était possible.

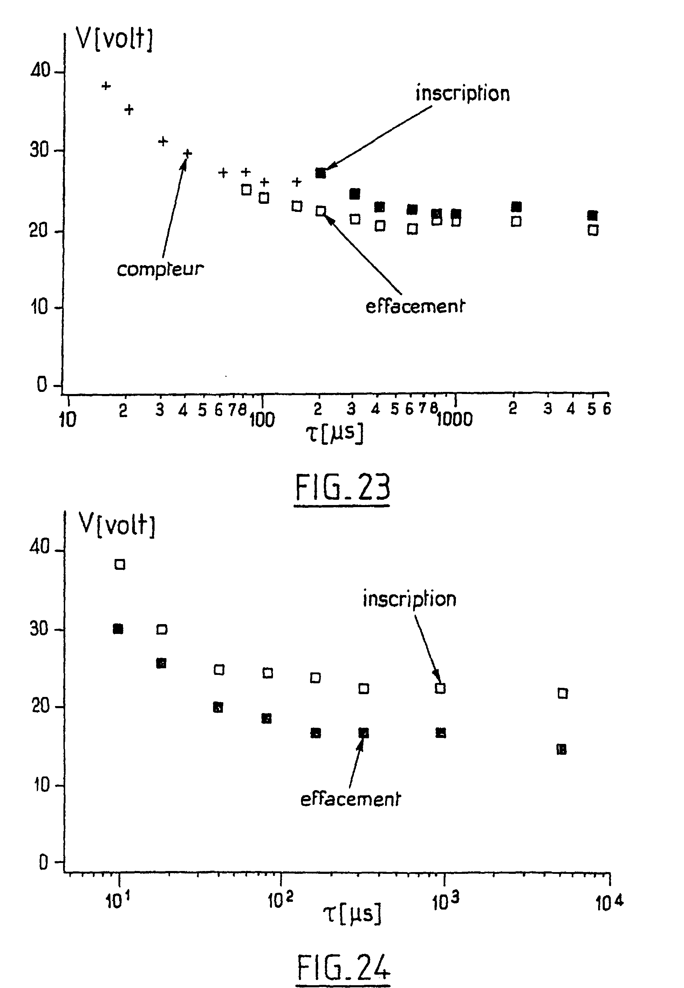

Les inventeurs ont mesuré V(τ) pour l'échantillon précédent. Ils ont observé sur du 5CB pour la courbe de V inscription (τ) illustré sur la figure 23. Ce comportement inscription/effacement à polarité fixée est satisfaisant jusqu'à τ=150µs. Pour des temps plus courts, on observe un régime "compteur".

Pour améliorer ce comportement, les inventeurs ont ensuite utilisé un cristal liquide 5CB dopé à 10⁻³ molaire de Na+ TΦB-, d'épaisseur 1,5µm. Ils ont utilisé des impulsions positives pour l'inscription et négatives pour l'effacement. Ils ont obtenu alors un régime contrôlé d'inscription et d'effacement jusqu'à 10µs, à des tensions de 30 et 38 volts comme illustré sur la figure 24. A 30µs l'effacement et l'inscription ont été obtenu pour 22 et 26 volts.

En lumière blanche, les inventeurs ont obtenu un contraste de 20 entre les deux états.

Bien entendu la présente invention n'est pas limitée au mode de réalisation particulier qui vient d'être décrit mais s'étend à toute variante conforme à l'étendue des revendications.

En particulier, la présente invention n'est pas limitée à l'utilisation de cristaux liquides nématiques. Elle s'étend également à l'utilisation de cristaux liquides de type cholestérique.

En outre, la commutation par couplage hydrodynamique n'est pas limitée à l'utilisation d'ancrages planaires sur les plaques. Elle peut s'étendre à des ancrages homéotropes, voire obliques.

Par ailleurs, d'une façon plus générale, comme on l'a indiqué précédemment, l'invention n'est pas limitée à l'exploitation d'une commutation par couplage hydrodynamique, mais s'étend à tous dispositifs à ancrage monostable, comprenant des moyens aptes à assurer sur commande une cassure de l'un au moins des ancrages et à induire ensuite un effet bistable en volume.

En outre l'invention s'applique à un grand nombre de textures possibles.

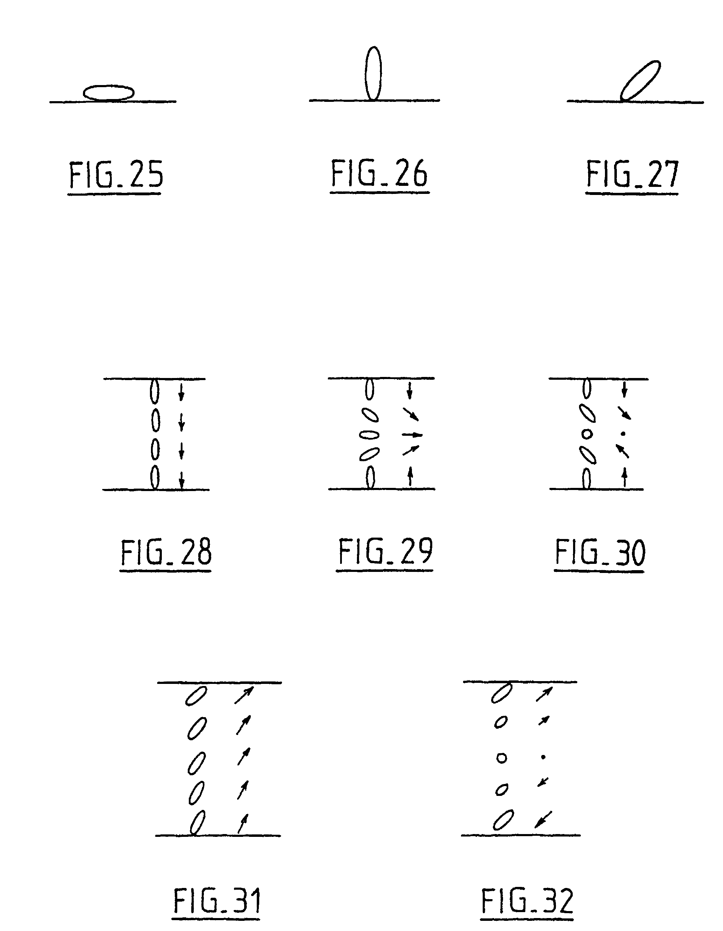

On sait que les traitements appliqués sur chacune des plaques 10, 12 d'une cellule cristal liquide peuvent être adaptés pour imposer une direction d'ancrage planaire (directeur nématique parallèle aux plaques voir figure 25), homéotrope (directeur nématique perpendiculaire aux plaques voir figure 26) ou inclinée (directeur nématique oblique par rapport aux plaques voir figure 27).

Avec deux de ces plaques arbitraires, on peut définir plusieurs textures avec une seule direction d'ancrage des molécules sur chaque plaque.

Par exemple, pour deux ancrages planaires on peut réaliser une texture planaire uniforme comme illustré sur la figure la ou des structures tordues, à gauche ou à droite, d'un demi-tour comme illustré sur la figure 1b, voire plusieurs demi-tours, le directeur nématique restant dans ce cas parallèle aux plaques mais tournant progressivement autour d'un axe perpendiculaire à celles-ci, ou encore des structures fléchies comme schématisées sur la figure 10 pour lesquelles le directeur nématique ne reste pas parallèle aux plaques mais s'incline progressivement par rapport à celles-ci.

Pour deux ancrages homéotropes, on peut obtenir une texture uniforme homéotrope (figure 28) ou des textures fléchies d'un (figure 29) ou plusieurs demi-tours. Ces textures fléchies peuvent en plus être tordues (figure 30).

D'une façon générale avec deux ancrages monostables de surface selon deux directions arbitraires, on peut obtenir des textures différentes : une texture simple qui raccorde directement par une torsion simple et une flexion simple les deux directions d'ancrage arbitraires, comme illustré sur la figure 31, et des textures qui diffèrent de celle-ci en ajoutant un ou plusieurs demi-tours en passant d'une surface à l'autre, comme schématisé sur la figure 32.

Sur les figures annexées 28 à 32, on a schématisé le directeur nématique sous forme d'une flèche.

On voit en comparant les figures 28 et 29 ou 30, 31 et 32 que les flèches correspondantes sur les deux plaques sont opposées. Physiquement, comme l'interaction du cristal liquide nématique et de la surface n'est pas polaire, les directions opposées des deux flèches sont équivalentes pour la surface. Ces flèches par contre permettent de bien visualiser les différences de textures de volume, tournées par exemple d'un demi-tour entre les figures 28 et 29 ou 30, 31 et 32. Il en serait de même pour les figures 1a et 1b.

Et ces différentes textures correspondant à une même direction d'ancrage possèdent des propriétés optiques différentes, qui permettent de les distinguer optiquement et de les utiliser comme l'un des deux états d'un pixel d'afficheur noir et blanc.

Comme indiqué précédemment, la commutation entre les différentes textures est opérée après avoir cassé l'ancrage de surface.

On a illustré sur la figure 3, la variation de l'angle θ d'une molécule de surface d'ancrage planaire en fonction d'un champ électrique E appliqué.

Au-dessus de Eₛ, les molécules de surface sont dans une situation où l'énergie élastique d'interaction avec la surface est maximale. Si on coupe le champ E, les molécules de surface vont retomber dans l'orientation planaire initiale, mais elles peuvent choisir deux chemins différents. Sur la figure 3, ces deux chemins correspondent à la bifurcation au-dessous de Eₛ entre les angles positifs et négatifs. Les deux états finaux θ = ± 90° sont identiques pour la surface comme expliqué précédemment. Ils donnent cependant des textures différentes dans le volume : la rotation supplémentaire de 180° correspond à une texture tordue d'un demi-tour par rapport à la texture initiale. Si la distorsion reste dans le plan de la figure, on obtient une texture fléchie de 180° (figure 10). Généralement, la torsion étant plus facile que la flexion, la flexion de 180° se transforme continuement en torsion de 180° sur la figure 1b.

Les moyens de commutation aptes à induire un effet bistable, après cassure de l'ancrage, ont pour fonction de contrôler la bifurcation de l'orientation Eₛ, afin d'obtenir au choix l'une ou l'autre des deux textures bistables correspondantes.

Plus généralement, pour toute texture bistable évoquée précédemment obtenue par le jeu des angles, des constantes élastiques, et du pouvoir torseur correspondant au même ancrage sur une plaque et à deux ancrages différents d'un demi-tour pour l'autre, il existe pour l'énergie de surface sur la deuxième plaque une ligne de séparation analogue à la bifurcation déjà décrite.

La cassure de l'ancrage a pour but d'amener les molécules de surface au voisinage de cette ligne de séparation par un champ électrique fort.

Et les moyens de commutation ont pour fonction par un petit effet extérieur, de contrôler le déplacement du système de part et d'autre de la ligne de séparation. Les deux directions résultantes sont équivalentes pour la surface, mais conduisent à l'une ou l'autre des deux textures bistables.

Pour casser les surfaces, on choisira des moyens appropriés : si le champ est perpendiculaire aux plaques, pour casser un ancrage planaire, il faut un cristal liquide d'anisotropie diélectrique positive pour que les molécules s'alignent parallèlement au champ ; pour casser un ancrage homéotrope, il faut un matériau d'anisotropie diélectrique négative.

On notera qu'une propriété importante et générale des cassures de surface est leur rapidité : les temps de relaxation correspondants sont dans la gamme des microsecondes. Ils sont indépendants de l'épaisseur des cellules nématiques.

On va maintenant décrire différents moyens permettant d'assurer une commutation entre les différentes textures possibles, c'est-à-dire permettant de contrôler la bifurcation de l'orientation à Eₛ.

Supposons un ancrage planaire cassé au-dessus de son point de bifurcation. Les molécules de surface sont perpendiculaires aux plaques. Quand on coupe le champ, les molécules retombent, selon l'un ou l'autre des deux états d'équilibre +90° et -90°. Les moyens de commutation ont pour fonction de contrôler la direction finale d'orientation entre ces deux états. Ils ont pour but d'appliquer un petit couple sur les molécules pour les faire basculer d'un côté ou de l'autre. Ce couple peut être appliqué soit en même temps que le champ de cassure soit juste après, mais il doit agir tant que les molécules restent proche de la ligne de séparation.

Une première voie pour générer un tel couple consiste à appliquer un champ électrique latéral sur la cellule.

Un tel champ latéral peut lui-même être obtenu de plusieurs façons.

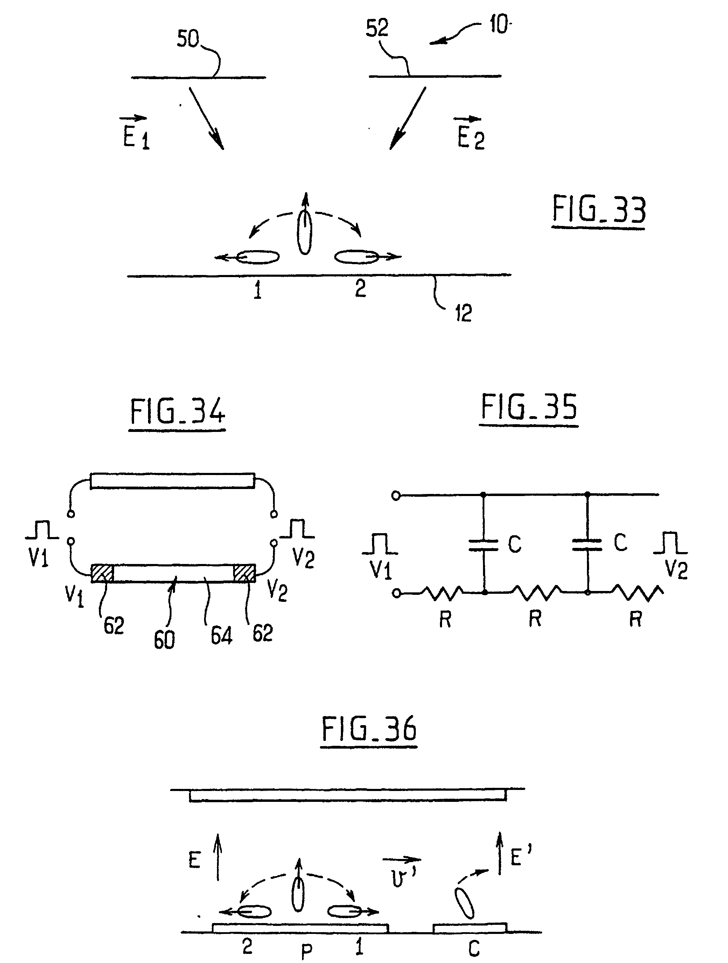

Selon une première variante, le champ latéral peut être appliqué à l'aide d'électrodes interdigitales 50, 52 sur l'une des plaques 10, faisant face à la plaque 12 dont l'ancrage est cassé comme schématisé sur la figure 33. Le champ moyen reste appliqué entre les deux plaques 10, 12 du haut et du bas. Le champ latéral donne une petite composante oblique au champ résultant. Suivant son signe, on obtient les champs obliques E₁ ou E₂.

L'application de E₁ ou de E₂ décalés d'un angle faible autour de la normale, permet de contrôler la retombée sur les états planaires 1 ou 2, identiques pour la surface, mais différents pour la texture.

Selon une seconde variante, le champ latéral peut être appliqué grâce à des électrodes prévues sur le chant de la cellule.

Selon une troisième variante, le champ latéral peut résulter de la résistance des électrodes transparentes elle-même prévues sur les plaques 10, 12. Comme illustré sur la 34, l'une des électrodes 60 possède dans ce cas, au moins un bord 62, de préférence deux bords 62, plus conducteurs que sa partie centrale 64. Le signal électrique V nécessaire pour casser l'ancrage diffuse le long du circuit RC constitué par la résistance de surface R et de la capacité C du cristal liquide (voir figures 34 et 35). A haute fréquence, il est atténué rapidement, le pixel apparaît comme un bord d'électrode, donnant un champ oblique. A basse fréquence, il n'y a pas d'atténuation, le champ est vertical. Ce mécanisme est décrit dans le document FR-A-86 06916. On obtient un champ incliné dans les deux directions en utilisant des pixels à double commande latérale : on applique le signal V₁ ou V₂ sur l'un ou l'autre des bords très conducteurs de l'électrode semi-transparente du pixel. V₁ donne l'orientation à droite, V₂ à gauche.

Une seconde voie pour générer le couple d'orientation précité consiste à exploiter un effet hydrodynamique.

Dans ce cas au moment du retour à l'équilibre, on génère un petit cisaillement v entre la plaque d'ancrage cassé et le nématique.

Ceci peut s'obtenir par un déplacement mécanique de tout ou partie de la plaque, sous l'effet d'un système piezoélectrique par exemple, ou encore sous l'effet d'ondes sonores.

Le nématique est sensible au gradient de vitesse près de la plaque et tombe suivant le sens de v (v₁ ou v₂) d'un côté ou de l'autre de la bifurcation.

Le cisaillement v peut aussi être produit par un écoulement entre les deux plaques, produit par une source quelconque, par exemple par simple appui sur l'écran perpendiculairement aux plaques.

Le système constitue alors un détecteur de pression. Il peut servir à écrire sur un écran, en transformant la pression en propriété électrique liée à l'une des deux textures bistables.

Une autre variante consiste à exploiter l'écoulement de cisaillement provoqué par le basculement de certaines molécules. C'est l'effet inverse de l'effet précédent, où un cisaillement contrôle un basculement.

On peut utiliser pour cela par exemple une électrode de commande linéaire c à côté d'un pixel carré (figure 36).

En c l'ancrage est par exemple oblique, en P il est planaire.

Sous l'effet d'un champ appliqué au pixel, on casse l'ancrage P.

Si l'on applique un champ de commande E' sur l'électrode latérale, au moment où on coupe le champ E, l'écoulement v' associé à la réorientation de c sous l'effet de E' fait basculer l'orientation du pixel P vers l'état 1.

Si au contraire on applique le champ E' en même temps que E, et si on le coupe aussi en même temps, l'écoulement provoqué par E' est en sens inverse -v', et le pixel bascule dans l'état 2.

Une autre variante qui exploite un couplage hydrodynamique et consiste à casser deux ancrages face à face a été décrite précédemment.

Bien entendu, l'invention n'est pas limitée aux exemples de contrôle de bifurcation décrits précédemment dans la géométrie planaire, et devenant homéotropes après cassure.

En effet, comme on l'a évoqué, l'invention s'applique également au contrôle de bifurcations dans des géométries homéotropes ou inclinées au repos.

En outre, le basculement peut se faire à deux dimensions, en faisant intervenir non seulement l'angle zénithal de surface θ, mais également l'angle azimutal ϕ, comme on l'a décrit précédemment dans le cas du couplage hydrodynamique. La rotation de θ égale -90° à +90° peut aussi se comprendre comme une simple rotation de ϕ de 180°. Ceci est important pour les couplages avec les champs électriques latéraux ou les écoulements hydrodynamiques latéraux, qui ont une direction azimutale bien définie.

On notera en outre que la commutation peut être opérée sur toute la surface d'un pixel à la fois, pour former un afficheur noir et blanc, ou sur une partie variable de ce pixel, pour former un afficheur à teinte de gris.

La commande d'une partie variable seulement d'un pixel peut être obtenue soit par un champ de cassure non uniforme, sur celui-ci, soit par des moyens de contrôle non uniformes de la bifurcation.

On notera enfin que dans certaines configurations, les moyens de cassure d'ancrage et les moyens aptes à induire un effet bistable en volume, précédemment décrits, peuvent être utilisés avec des ancrages multistables, par exemple bistables, et non pas seulement monostables.

Jusqu'à présent, il a été essentiellement démontré dans la description précédente que la cassure d'ancrage planaire permet de contrôler une transition entre deux textures volumiques bistables. Il s'agit dans ce cas d'une cassure complète - sous champ électrique les molécules sur la surface s'orientent exactement le long du champ en passant par le point de la bifurcation. La cassure des ancrages obliques, également mentionnée dans la description qui précède, est différente. C'est une cassure partielle : les molécules s'approchent de la direction du champ, sans jamais l'atteindre et sans passer au point de la bifurcation.

Nous allons préciser maintenant l'utilisation dans le cadre de l'invention de cette cassure partielle des ancrages obliques.

La lame d'ancrage oblique peut jouer deux rôles différents : 1) soit un rôle émetteur ("lame-maître") - Dans ce cas la lame d'ancrage oblique sert pour commander l'autre lame. La lame-maître ne passe jamais par son point de bifurcation et à la coupure du champ, elle revient toujours vers son orientation, en émettant un courant de cisaillement très fort et rapide, - 2) soit un rôle récepteur ("lame-esclave") - Dans ce cas le champ électrique casse partiellement l'ancrage oblique sur la lame, mais n'arrive pas à l'emmener jusqu'à son point de la bifurcation. Pourtant, elle arrive assez près du point de la bifurcation, pour pouvoir le dépasser sous l'effet hydrodynamique ou élastique émis par la lame-maître-.

Nous allons tout d'abord aborder le cas d'une lame-maître d'ancrage oblique.

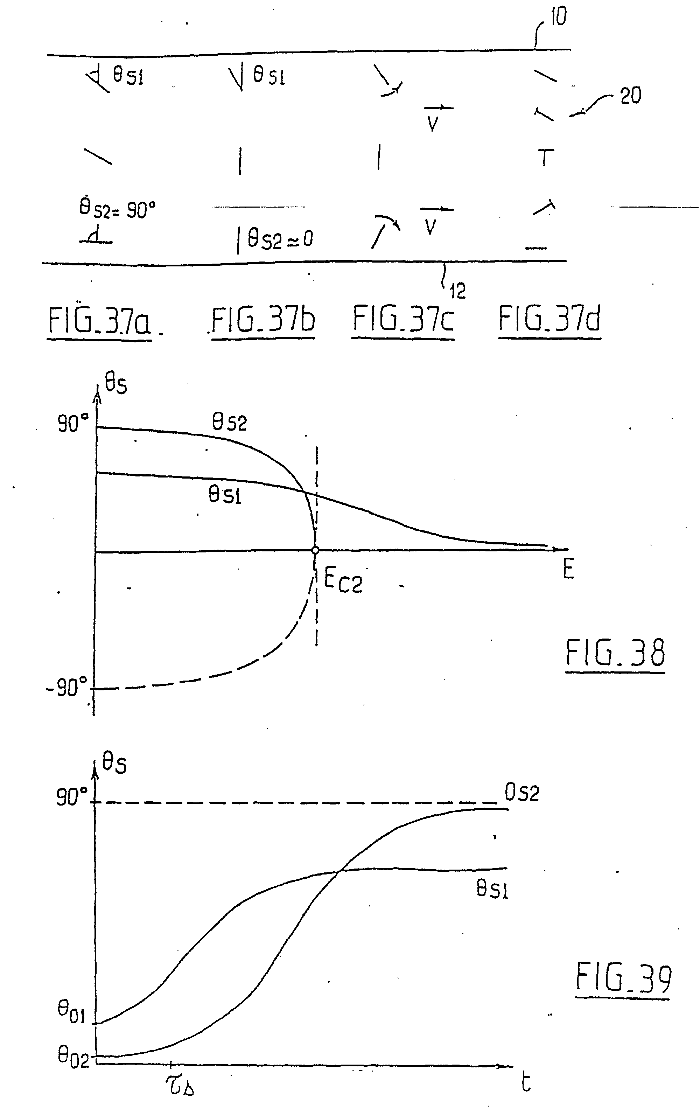

Pour rendre l'effet hydrodynamique plus efficace on peut utiliser comme source rapide de cisaillement une lame 10 d'ancrage oblique. Cette lame 10 va donc commander par couplage hydrodynamique l'autre lame 12, qu'on choisira par exemple d'ancrage planaire (figure 37).

Supposons qu'avant l'application du champ électrique de cassure la texture de la cellule soit sans torsion, légèrement tordue en éventail à cause des ancrages asymétriques (figure 37a). Sous champ électrique de cassure, par exemple perpendiculaire aux plaques, les molécules s'orientent presque parallèles au champ, tirant sur les deux surfaces. Au-dessus du seuil (figure 37b) E_{c2} la surface planaire 12 casse et on obtient θ_{S2} = 0. Sur la surface oblique 10 les molécules restent toujours à un petit angle θ_{S1} par rapport au champ : pour une lame oblique il n'existe pas un seuil de cassure de surface et elle ne passe pas par le point de bifurcation (figure 38).

Quand on coupe le champ brusquement à partir de E>E_{c2} la lame oblique 10 qui se trouve maintenant en déséquilibre bascule rapidement vers son⁻ orientation initiale (voir figure 39). L'angle θ_{S1} croît exponentiellement θ_{S1} ≅ θ₀₁ exp(t/τ_{S}) à partir de la forte valeur initiale θ₀₁ et après sature vers la valeur imposée par l'ancrage oblique. La lame planaire 12, par contre, est en équilibre instable à t=0, et bascule lentement : θ_{S2} croît aussi exponentiellement, mais à partir d'un très faible angle θ₀₂, définit par les fluctuations.

Le cisaillement produit par chacune des lames 10, 12 est proportionnel à la dérivée de l'angle par rapport au temps. Il est beaucoup plus fort pour la lame oblique 10 (de l'ordre de θ₀₁/τ_{S} >> θ₀₂/τ_{S}). Celle-ci devient ainsi une lame-maître : son courant de cisaillement après diffusion à travers l'échantillon 20 entraîne la lame-esclave planaire 12 au-delà du point de la bifurcation (figure 37c). On produit donc un demi-tour en flexion dans l'échantillon 20, qui se transforme en demi-tour en torsion (figure 37d).

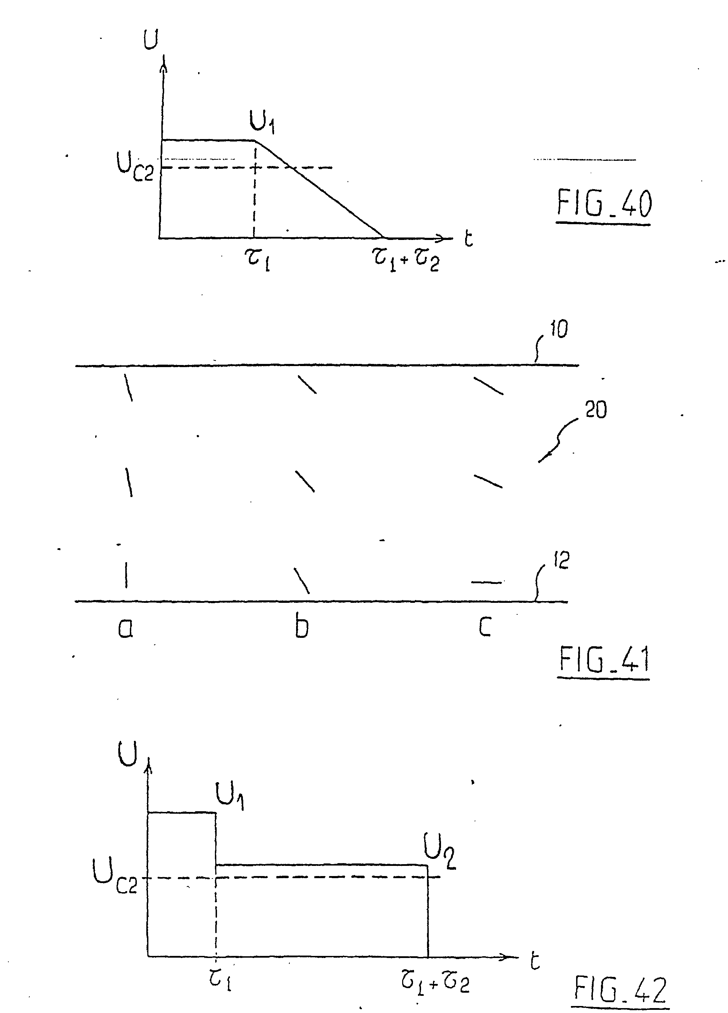

Alternativement, pour effacer le demi-tour il faut empêcher le couplage hydrodynamique entre les deux plaques 10, 12. Une façon de faire est de baisser progressivement la tension à travers le seuil U_{C2} comme illustré sur la figure 40.

Pendant la première partie de l'impulsion (soit de t = 0 à τ₁), l'ancrage sur la lame planaire 12 est cassé et quelle que soit la texture initiale on obtient la texture presque homéotrope de la figure 37b ou 41a. La lente descente (τ>>τ_{S}) à travers le seuil rend l'effet hydrodynamique émis par la lame-maître 10 peu efficace. La lame esclave 12 est maintenant commandée par le faible couplage statique élastique (figure 41b), qui favorise toujours la texture finale uniforme (figure 41c).

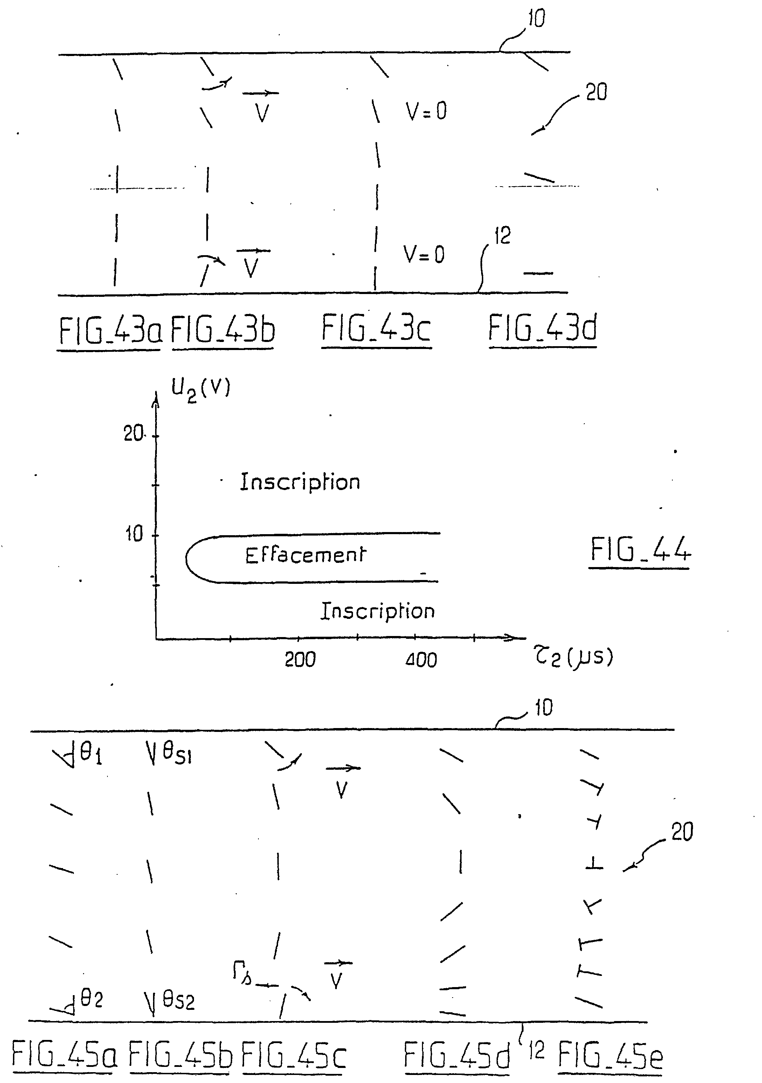

Une autre façon d'obtenir le même effet - c'est-à-dire d'effacer le demi-tour précédemment obtenu dans l'échantillon 20 - est d'utiliser un signal électrique rectangulaire à deux échelons (figure 42). A nouveau la texture initiale est effacée pendant la première partie de l'impulsion (figure 43a) (de 0 à τ₁ sur la figure 42). A t = τ₁ la tension descend brusquement à U₂ très légèrement en dessus du seuil U_{c2}. La lame maître 10 produit un fort courant hydrodynamique (figure 43b) transitoire, qui disparaît progressivement. L'ancrage reste perpendiculaire dans la position cassée. L'effet élastique, qui dans cette géométrie est permanent, l'emporte et à la fin de l'impulsion la lame-esclave 12 a choisi déjà une orientation (figure 43c) qui va relaxer sans champ vers la texture uniforme. La coupure brutale du champ à t = τ₁+τ₂ crée toujours un petit effet hydrodynamique, mais si l'ancrage sur la lame planaire 12 est assez faible (U_{c2} < U_{c1}), le couplage hydrodynamique est trop faible pour s'opposer à l'effet statique élastique. La texture finale sera à nouveau uniforme (figure 43d).

Pour tester l'efficacité de l'inscription et de l'effacement induits par une lame oblique maître 10, les inventeurs ont préparé des cellules minces (épaisseur d = 1,5µm). Sur la lame-maître 10 ils ont choisi un ancrage fort oblique (θ_{S1} ≅ 55°), produit par évaporation rasante de SiO sur la lame 10. Un ancrage planaire plus faible a été produit sur la lame-esclave 12 par évaporation de SiO sous des conditions appropriées. Les composantes planaires des deux ancrages ont été choisies parallèles entre elles, cependant cette disposition n'est pas obligatoire. Deux textures se réalisent spontanément pendant le remplissage de l'échantillon avec le cristal liquide nématique 5CB : la texture uniforme (figure 37a) et la texture demi-tour en torsion (figure 37d). La texture tordue a une énergie plus haute et en quelques secondes elle est effacée par un mouvement des défauts. Tout l'échantillon devient ainsi spontanément uniforme.

On applique maintenant une impulsion rectangulaire de tension U et de durée τ entre les plaques 10, 12. Jusqu'au U=U_{c2}(τ), le seuil de cassure de l'ancrage planaire de la lame 12, on observe seulement un clignotement transitoire, sans changement de la texture. A U≥U_{c2} (en l'espèce le seuil dynamique de cassure d'ancrage U_{c2} est égal à 20,8 V pour τ=100µs) par contre, on inscrit des demi-tours sur toute la surface de la cellule. Si on applique la même impulsion sur la texture tordue, l'état final reste toujours tordu. On peut donc utiliser une impulsion rectangulaire pour inscrire les demi-tours. Pour effacer on applique l'impulsion de figure 42 avec U₁=24V τ₁=100µs, et U₂, τ₂ variables. Si τ₂<50µs on n'efface jamais et on inscrit le demi-tour, comme avec l'impulsion rectangulaire. Si on rallonge τ₂, il existe toujours une fourchette de tensions pour U₂ dans laquelle on efface le demi-tour (figure 44).

Un autre échantillon du même type a été utilisé pour essayer l'effacement avec une descente progressive de la tension comme illustré sur la figure 40. Avec un temps de descente τ₂ plus petit que 30µs les inventeurs ont constaté l'inscription de demi-tours. En rallongeant τ₂ sans changer la tension U, ils ont toujours obtenu une texture finale uniforme.

Ces observations confirment le modèle exposé précédemment et montrent que l'utilisation d'une lame-maître d'ancrage oblique 10 est un moyen très efficace pour commander l'inscription et l'effacement des demi-tours. Des résultats semblables ont été obtenus aussi avec des cellules avec une prétorsion entre 0° et 90°, obtenus en tournant une des lames par rapport à l'autre (comme on a déjà expliqué, cette géométrie facilite le couplage hydrodynamique).

Nous allons maintenant aborder le cas d'une lame-esclave d'ancrage oblique.

Pour comprendre l'utilité d'une lame-esclave d'ancrage oblique 12, nous allons analyser la cassure des ancrages dans une cellule où sur les deux lames 10, 12 les molécules sont d'ancrage oblique (figure 45) : l'angle d'inclinaison θ est fort sur la lame-maître 10 et beaucoup plus petit sur la lame-esclave 12.

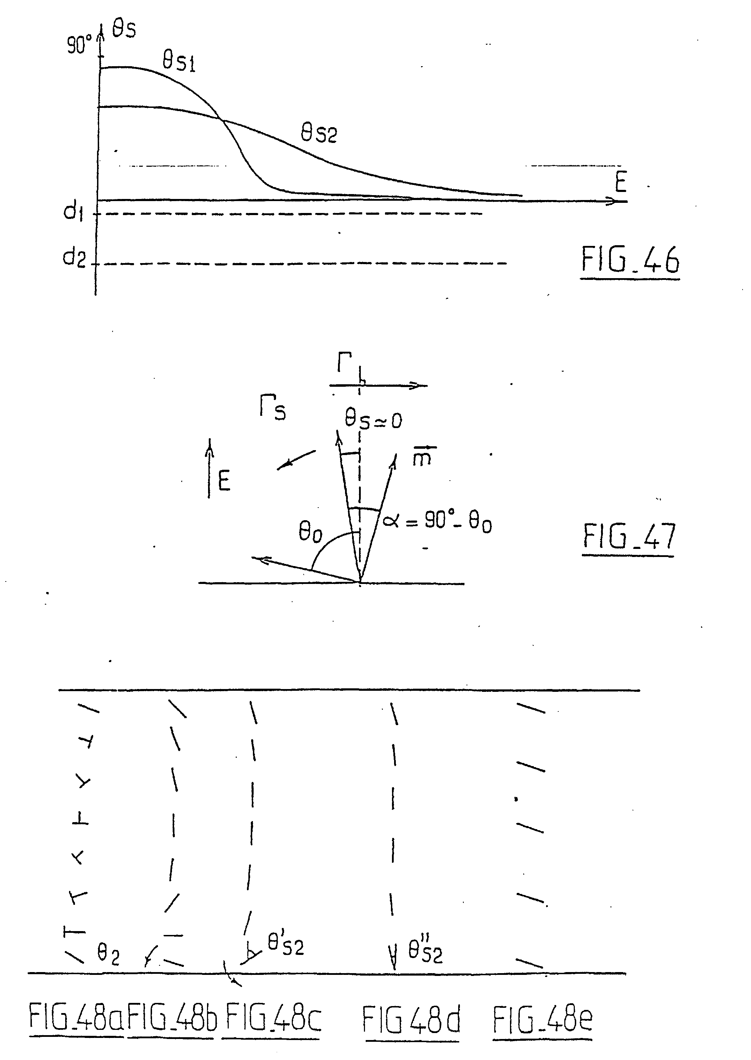

On part d'abord avec la texture "uniforme" (sans torsion) de la figure 45a. Sous champ électrique perpendiculaire aux plaques 10, 12 les molécules sur les deux surfaces 10, 12 s'approchent de la verticale, sans jamais l'atteindre (figure 45b et 46) : pour les deux surfaces le point de bifurcation est de l'autre côté de la verticale (figure 47). Sur la figure 47, Γₕ illustre le couple hydrodynamique, Γₛ le couple élastique, et m la direction du maximum de l'énergie d'ancrage (bifurcation).

Supposons maintenant que le champ est assez fort pour orienter les molécules sur les deux surfaces 10, 12 (figure 45b) presqu'à la verticale (θₛ₁ ≅ 0, θₛ₂ ≅ 0). A la coupure du champ un grand couple élastique de surface Γₛ ≅ (K/l₁)α₁ agit sur la lame-maître 10. l₁ représente la force d'ancrage sur la lame 10. Les molécules sur cette lame 10 basculent vers leur position initiale en émettant un fort courant de cisaillement. Le couple hydrodynamique Γₕ transmis à la lame-esclave 12 est de l'ordre de K/d et il essaie de basculer les molécules à travers la verticale (figure 45c). Un couple élastique de surface Γ_{S} de l'ordre de K_{α2}/l₂ s'y oppose. l₂ représente la force d'ancrage sur la lame 12. On obtient donc la condition d'inscription des demi-tours dans cette géométrie. K/d > K_{α2}/l₂, soit α₂<l₂/d, c'est-à-dire que la lame-esclave oblique 12 peut être commandée efficacement si son ancrage est faible et son inclinaison sans champ θ₂ est très proche de 90° (presque planaire). Si c'est le cas, on obtient le demi-tour en flexion de la figure 45d et finalement le demi-tour en torsion de la figure 45e.

Pour effacer on applique à nouveau un champ électrique sur la texture demi-tour en torsion (figure 48a). Sous champ elle se transforme en demi-tour en flexion (figure 48b), qui permet aux molécules de s'orienter le long du champ presque partout dans l'échantillon. Il reste pourtant près de la lame-esclave 12 une mince zone d'orientation presque planaire. Cette zone est bloquée topologiquement dans la texture : son existence dépend de l'orientation relative des deux ancrages et de la texture initiale en volume. Une grande énergie (élastique et électrique) est stockée dans la zone planaire et le couple résultant tire sur les molécules à la surface vers la plaque 12 et non plus vers la verticale : de cette façon la zone planaire est "expulsée" de l'échantillon et l'énergie diminue (figure 48b et 48c).

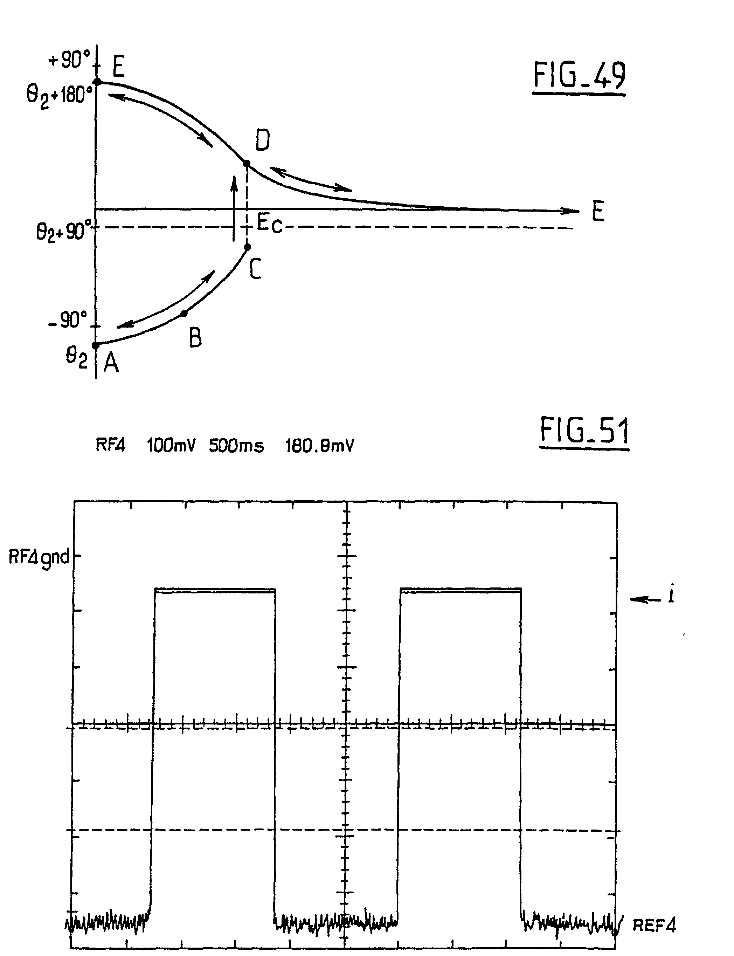

Le comportement de l'angle de surface θ_{S2} en fonction du champ est montré schématiquement sur la figure 49 en supposant que sans champ θ₂ est grand et négatif (| θ₂ | >90°, θ₂<0, le point A sur la figure 49). Sous champ | θ₂ | diminue (trajectoire ABC sur la figure 49) et les molécules s'approchent de la direction θ₂+90°, qui correspond au maximum de l'énergie d'ancrage et donc au couple d'ancrage nul. A la valeur critique E_{c} du champ le couple d'ancrage ne peut plus équilibrer le couple électrique et la surface devient instable : θₛ₂ passe sur la trajectoire CD (figure 49) et les molécules sont maintenant de l'autre côté de la verticale (figure 48d). Si maintenant on diminue progressivement le champ (pour éliminer le couplage hydrodynamique) θₛ₂ suit la trajectoire DE (figure 49) et l'état final du système est la texture non tordue de la figure 48e : le demi-tour est effacé.

Ce mécanisme d'effacement, découvert par les inventeurs, utilise une cassure de l'ancrage oblique sur la lame-esclave 12 induite par l'interaction élastique avec la lame-maître oblique 10 et la texture initiale. Une texture initiale peut être effacce par ce mécanisme seulement si elle comporte une zone planaire dans le volume. Par contre, pour inscrire une telle texture il faut utiliser d'autres moyens, par exemple l'effet hydrodynamique : la cassure élastique de l'anerage de la lame-esclave 12 est un phénomène transitoire et irréversible, le passage sur la trajectoire CD (figure 49) étant à sens unique.

Par contre si on coupe le champ avant de franchir le point C on revient en A et on reste tordu après coupure d'un champ. En effet, si le champ est trop faible pour passer le point C, on réinscrit.

Pour démontrer l'utilité des lames-esclaves obliques 12 les inventeurs ont préparé plusieurs échantillons minces (d ≅ 1,5µm) avec les lames-maîtres obliques 10 (SiO évaporé, angle d'inclinaison des molécules par rapport à la surface d'environ 35°) (θ₂ = 90 - 35 = 55°). Les lames-esclaves ont été préparées avec différents polymères frottés (α₂, angle d'inclinaison entre 2° et 10°).

Pour faciliter l'inscription des demi-tours par le couplage hydrodynamique un angle de prétorsion ϕ (entre 0° et 90°) a été imposé en tournant une des lames par rapport à l'autre. Comme on a déjà expliqué, cette prétorsion aide l'effet hydrodynamique. L'inscription des demi-tours a été observée pour ϕ proche de 80° et avec une tension de 40-50V. Cette difficulté de l'inscription est due au fait que les ancrages polymères ont une très forte énergie d'ancrage.

Par contre, dans toutes les géométries les inventeurs ont observé un effacement par cassure transitoire élastique des structures initiales comportant une zone planaire dans le volume. Les lames-esclaves obliques peuvent donc être utilisées pour l'inscription et l'effacement des textures volumiques bistables à condition d'avoir une faible énergie d'ancrage et une faible inclinaison.

Les deux textures de volume utilisées dans les dispositifs décrits précédemment sont bistables : en absence de champ extérieur elles ne peuvent pas transiter dans une autre texture à moindre énergie, sauf par cassure de surface ou par défauts. Donc, en absence de champ extérieur et de défauts, chacune des textures est stable pour un temps infiniment long, grâce à l'incompatibilité topologique des deux textures.

Cependant en pratique les deux textures peuvent avoir des énergies très différentes notamment dans le cas de cristaux liquides nématiques. Cela peut créer des défauts, qui vont se déplacer plus ou moins rapidement, effaçant spontanément la texture à large énergie et inscrivant l'autre. Cette propriété peut être gênante pour certaines applications, si on exige un temps long de mémoire du dispositif.

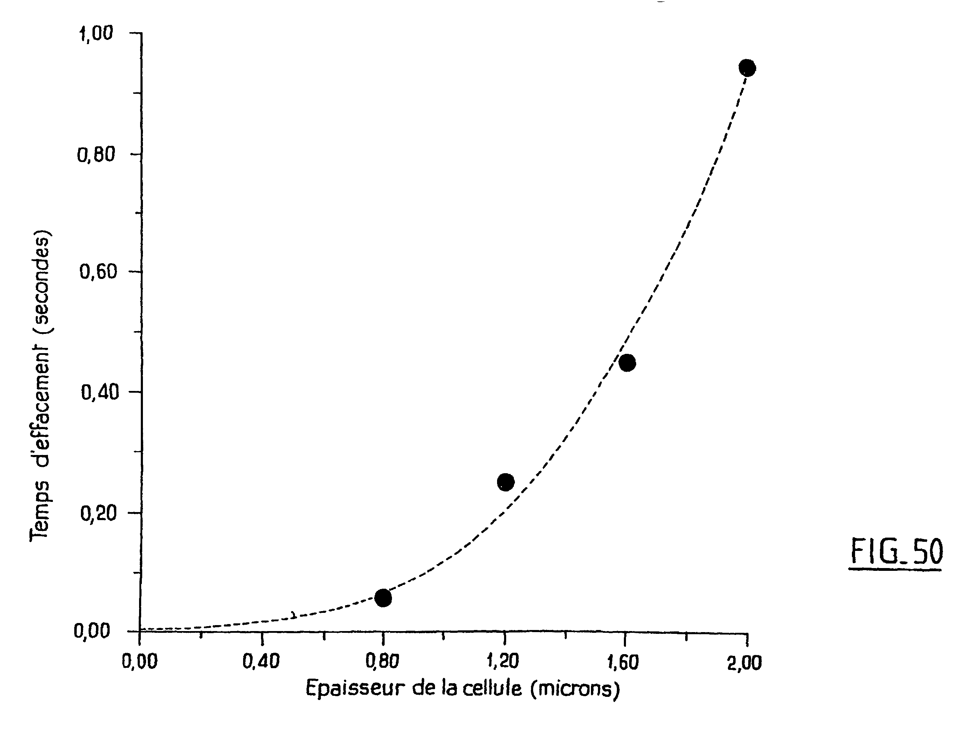

Le temps d'effacement spontané par mouvement des défauts dépend de plusieurs paramètres : épaisseur de la cellule, dimensions du pixel, dopant chiral, géométrie (prétorsion plus ou moins grande), etc ... Certains de ces paramètres peuvent être ajustés pour rallonger ou raccourcir le temps de l'effacement spontané. Par exemple, sur la figure 50 est présentée la dépendance du temps d'effacement spontané τₑ en fonction de l'épaisseur de la cellule (pixel 2x2 mm², nématique 5CB non dopé, texture tordue à demi-tour, qui se transforme en texture uniforme sans prétorsion. On voit que le temps τₑ change avec l'épaisseur sur une large plage (de 0,1 à 1 seconde) et peut être ajusté selon l'application. Le temps d'effacement spontané τₑ peut être contrôlé aussi par la prétorsion ϕ de la cellule. A ϕ =90°, par exemple, les énergies des deux textures s'égalisent et τₑ tend vers l'infini.

Pourtant, l'épaisseur et la prétorsion sont aussi des paramètres importants pour les transitions de surface induites par le champ. Il est donc préférable de contrôler τₑ par d'autres moyens, en particulier par la torsion spontanée induite dans le nématique en ajoutant une faible concentration de cholestérique.

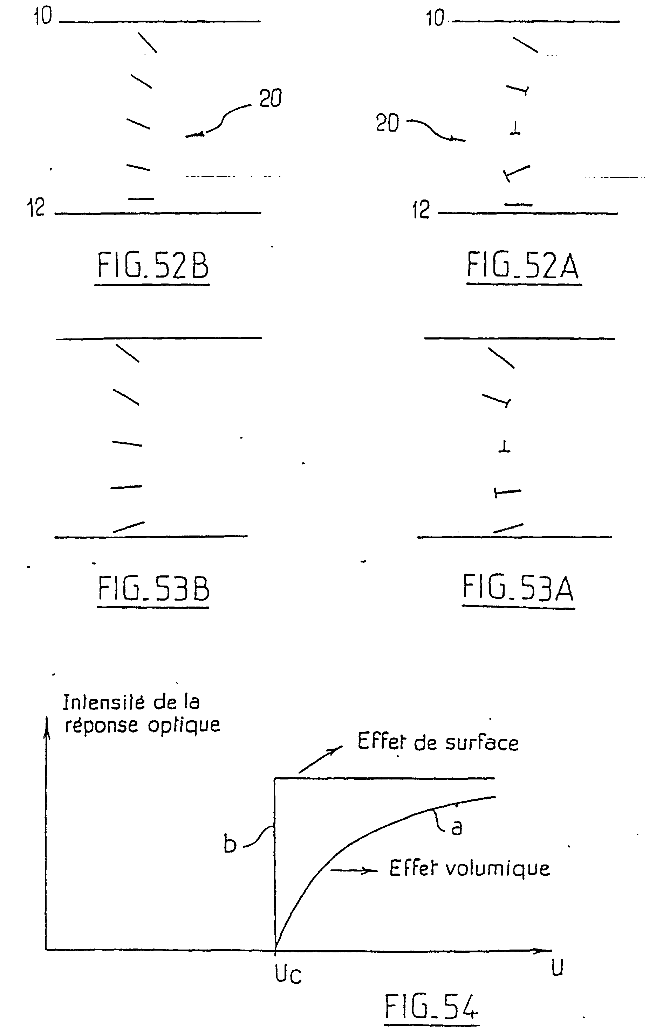

Les inventeurs ont préparé plusieurs échantillons avec des mélanges, nématique-cholestérique pour contrôler le temps d'effacement spontané τₑ. La figure 51 montre le comportement optique d'un tel échantillon, quand on inscrit la texture demi-tour (tordue à 180°) et quand on l'efface (texture uniforme, sans aucune torsion). Les énergies des deux textures ont été rendues presque égales en ajoutant quelques pourcent de cholestérique. En résultat, le temps τₑ s'est rallongé à plusieurs heures ; il est infiniment grand par rapport à l'échelle de la figure.

On a décrit précédemment la possibilité de rallonger le temps d'effacement spontané des textures bistables en égalisant leurs énergies. Cela permet d'utiliser un des avantages principaux de la bistabilité : après la coupure du champ la texture finale est conservée indéfiniment, ou au moins pendant un temps τₑ très long par rapport au temps de rafraîchissement du dispositif τᵣ, spécifique pour chaque application. Pour certaines applications τᵣ est très long ou mal défini. Par exemple, l'écran d'affichage de certains dispositifs portables (téléphone mobile, agenda électronique, journal électronique, etc.) doit être rafraîchi le plus rarement possible pour conserver l'énergie. On demandera dans tel cas τₑ→∞.

Il existe pourtant des applications dont la nature même demande des rafraîchissements réguliers et fréquents. Par exemple, pour l'affichage vidéo on exige τᵣ = 20-40 ms (temps de répétition des images). Dans ce cas on peut utiliser les afficheurs nématiques bistables déjà décrits dans un nouveau mode métastable. Il sera montré plus loin que de tels afficheurs à mode métastable présentent alors des avantages importants sur les dispositifs habituels.

Selon un premier exemple, pour réaliser ce mode de fonctionnement métastable on peut choisir deux textures bistables (figure 52) dont l'une (figure 52A) a une énergie élastique sans champ beaucoup plus grande que l'autre (figure 52B). Comme exemple non limitatif corespondant à un ancrage oblique sur la plaque 10 et planaire sur la plaque 12, la texture de basse énergie B sur la figure 52B est la texture non-tordue, légèrement en éventail ; et la texture A de la figure 52A est la texure demi-tour en torsion.

Sans champ électrique externe la texture A est métastable : dans un temps caractéristique τₑ , elle se transforme en B par nucléation et propagation des défauts. Le temps τₑ est ajusté à τₑ = τᵣ , la fréquence de rafraichissement, en contrôlant par exemple la densité des centres de nucléation des défauts sur les plaques ou par chiralisation du nématique. De telle façon, la texture A une fois inscrite s'auto-efface au bout de τᵣ, c'est-à-dire à la fin de l'image. Pour commander la cassure de l'ancrage on a maintenant besoin d'un seul mécanisme, celui qui inscrit la texture A. Pour cet exemple on peut utiliser le couplage hydrodynamique déjà décrit.

Un deuxième exemple non limitatif de dispositif à mode métastable est présenté sur la figure 53. Cette fois on a choisi un ancrage oblique opposé sur les deux plaques 10, 12 et on peut inscrire la texture A par la cassure transitoire irréversible de l'ancrage sur la plaque esclave 12. Sous champ E> E_{c} l'ancrage sur la plaque 12 casse et θ_{S2} saute de l'autre côté de la bifurcation, comme déjà décrit. Dans ce cas précis, les couplages hydrodynamiques et élastique ne s'opposent pas, mais par contre s'aident pour inscrire la texture A. L'inscription devient très efficace et rapide et le seuil E_{c} baisse.

Les afficheurs métastables à cassure d'ancrage précédemment décrits présentent notamment les avantages suivants.

L'afficheur métastable garde tous les avantages de la bistabilité de surface, sauf la mémoire infinie, qui est limitée dans ce cas au temps τₑ. Le temps d'inscription τᵢ est très court, typiquement ≅ 10µs pour U ≅ 20 volts.

Un premier avantage de l'afficheur métastable par rapport aux afficheurs nématiques traditionnels est son seuil abrupt.

Dans un afficheur traditionnel on produit un changement de texture (et donc une réponse optique) en appliquant une impulsion forte et courte. La réponse optique juste après l'impulsion est portée sur la figure 54 (courbe a) en fonction de la tension appliquée. A U<U_{c} , la tension seuil, aucun changement de texture n'a lieu. A U>U_{c} on obtient une réponse optique, dont l'amplitude croit avec la tension. Le seuil est très étalé, du au passage progressif des textures, qui passent pendant et après la tension de commande tout un continuum d'états intermédiaires. Cet étalement limite fortement le taux de multiplexage des systèmes à réponse continue.

Dans les afficheurs métastables conformes à la présente invention, le seuil U_{c} est très abrupt (courbe b figure 54) : il n'existe plus de passage progressif B → A, l'afficheur inscrit en "tout ou rien". Il n'existe pas d'états intermédiaires qui donneraient de la progressivité à la réponse optique. L'homme de l'art sait qu'un tel seuil brutal permet un multiplexage infini. C'est un avantage très important par rapport aux afficheurs classiques de volume.

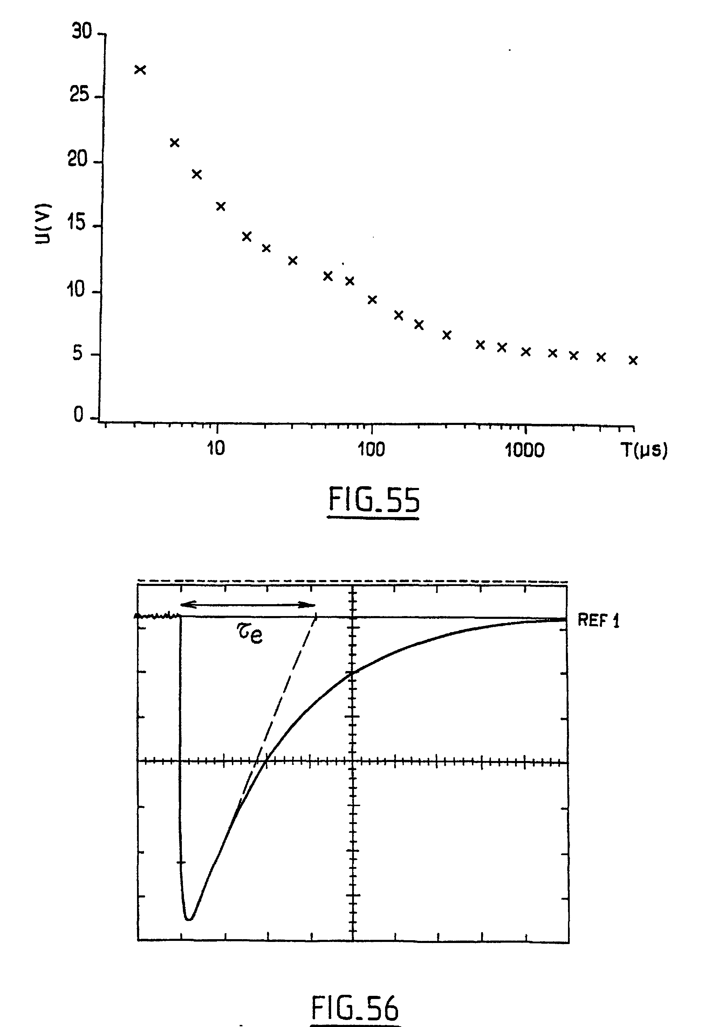

Un autre avantage de l'invention par rapport aux afficheurs volumiques à cristal liquide nématique est la possibilité d'ajuster le temps d'effacement τₑ selon l'application, sans changer la durée et la tension des impulsions de commande. On peut, par exemple, contrôler τₑ par le dopage cholestérique ou par la densité des centres de nucléation des défauts, indépendamment du seuil de cassure de surface. Par contre, dans les afficheurs traditionnels nématiques de volume, il existe un lien entre le temps d'inscription τᵢ, le temps d'effacement sans champ τₑ et la tension seuil U_{c} : τₑ = τᵢ U_{c}²/U₀², ou U₀ ≅ 1V pour les nématiques à forte anisotropie diélectrique. Pour une inscription rapide (τ_{i ∼} 10µs) et un effacement à la fréquence vidéo (τ_{e ∼} 40ms) on obtient U_{c} ≅ 60V pour un afficheur nématique en volume, contre seulement U_{c} ≅ 15V pour l'afficheur métastable de l'invention (figure 55).

Les inventeurs ont réalisé une cellule dans la géométrie de la figure 52 qui correspond au premier exemple précité, avec le cristal liquide 5CB non-dopé. La lame-maître 10 est oblique (SiO évaporation rasante, θ_{S1} ≈ 55°) et la lame-esclave 12 est planaire (SiO, θ_{S2} = 90°). L'épaisseur de la cellule est définie par des espaceurs billes (d = 1,5µm) déposés sur la lame planaire 12. La texture A (demi-tour en torsion) est inscrite avec des impulsions courtes rectangulaires. Le très bas seuil d'inscription dans cette cellule (figure 55) confirme l'efficacité du contrôle hydrodynamique par la lame-maître oblique 10. L'effacement spontané s'effectue par nucléation de défauts sur les billes espaceurs, dont la densité a été choisie assez forte pour obtenir un temps d'effacement raisonnablement court τₑ ∼ 300ms (figure 56).

Dans une seconde cellule qui correspond au deuxième exemple précité, les inventeurs ont testé l'inscription par cassure élastique dans la géométrie de la figure 53. Cette cellule, remplie de 5CB pur, est plus épaisse (d = 3,3µm) pour démontrer que l'effet élastique ne dépend pas critiquement de l'épaisseur. La lame-maître 10 est d'ancrage fortement oblique (SiO évaporation rasante, θ_{S1} ≈ 55°), tandis que la lame-esclave 12, préparée par dépôt d'une fine couche de PVA sur SiO évaporé, est légèrement oblique (θ_{S2} ≈ 86°). Encore une fois le seuil d'inscription de l'état demi-tour est très bas (E_{c} = 11 V/µm pour τᵢ ∼ 10µs), démontrant l'efficacité du mécanisme élastique pour la cassure de l'ancrage. Pour cette cellule épaisse on mesure τₑ ∼ 3s.

On va maintenant préciser les modalités d'excitation en champ alternatif, conformes à la présente invention.

Pour des raisons pratiques, les afficheurs à cristaux liquides doivent préférentiellement être commandés par des signaux "alternatifs", tels que la valeur moyenne de la tension appliquée soit la plus faible possible. Ceci permet d'éviter les effets électrochimiques irréversibles qui limiteraient la durée de vie de l'afficheur. Les inventeurs ont démontré expérimentalement l'équivalence des signaux "polaires" et "alternatifs" pour commander la cassure de surface. Ceci provient physiquement du fait que les couples de volume, transmis aux surfaces sont d'origine principale diélectrique (∼E²) et ne dépendent pas du signe du champ électrique.

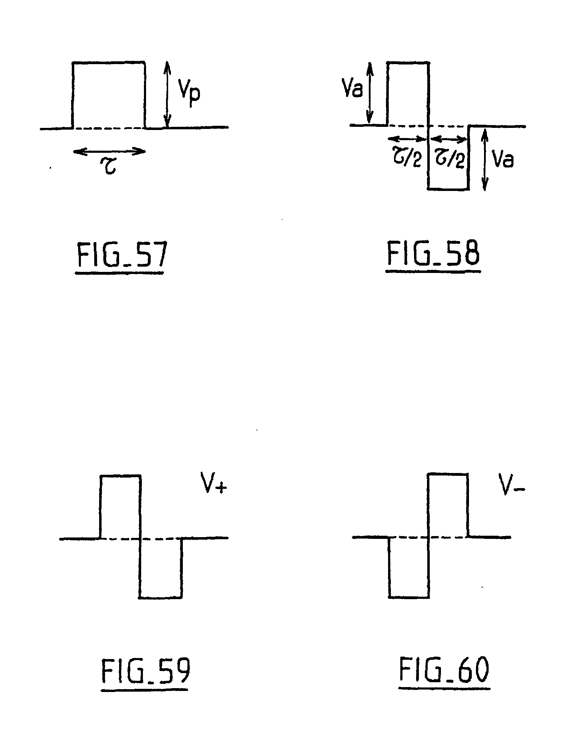

A titre d'exemple, les inventeurs ont montré l'équivalence pour l'inscription d'un signal "polaire" d'amplitude Vₚ=13V et de durée τ=40µs tel qu'illustré sur la figure 57, avec un signal "alternatif" carré, d'amplitude très voisine Vₐ = 13,4 et de même durée tel qu'illustré sur la figure 58.

La même équivalence est observée pour les signaux d'effacement : une tension polaire V'ₚ=5V, τ=240µs donne un effacement, une tension alternative voisine V'ₐ=5,3 donne le même effacement.

Les inventeurs ont observé une petite différence entre deux signaux "alternatifs" de phase inversée tels qu'illustrés sur les figures 59 et 60. Cette différence provient d'une faible contribution de la flexoélectricité à la cassure d'ancrage de surface. Ils observent par exemple que le signal de la figure 59 à V₊=5,8, τ=240µs inscrit le demi-tour, et que le signal V₋ de même amplitude et de même durée de la figure 60 produit un effacement. Ceci peut permettre en pratique d'utiliser seulement la phase des signaux alternatifs pour commander les cassures de surface comme précédemment expliqué en utilisant le signe des signaux polaires.
[22] P.G. de Gennes, "The Physics of Liquid Crystals", Clarendon Press, Oxford 1974.
[23] Journal of Applied Physics, vol. 64, n° 2, pp 614-628, 1988, "Origan and characteristics of the optical properties of general twisted nematic liquid crystal displays", H.L. Ong.
[24] Journal de Physique Lettres, vol. 46, pp L195-L200, 1985, "Linear flexo-electro-optic effect in a hybrid aligned nematic liquid crystal cell", N.V. Madhusudana and G. Durand.
[25] Europhysics Letters, vol. 5, n° 8, pp 697-702, 1988, "Order Electricity and Oblique Nematic Orientation on Rough Solid Surfaces", M. Monkade, M. Boix, G. Durand.

## Revendications

1. Procédé d'affichage à l'aide d'un dispositif comprenant deux plaques transparentes parallèles (10, 12) munies d'électrodes sur leurs surfaces internes et contenant un matériau cristal liquide (20), **caractérisé par le fait qu'**il comprend les étapes consistant à
- définir un ancrage monostable sur chaque plaque (10, 12),
- appliquer sur commande une tension suffisamment élevée pour casser l'un au moins de ces ancrages, et
- induir, suite à cette cassure, un effet bistable en volume.

2. Procédé selon la revendication 1, **caractérisé par le fait qu'**il comprend l'étape consistant à casser les ancrages sur les deux plaques (10, 12).

3. Procédé selon l'une des revendications 1 ou 2, **caractérisé par le fait que** les ancrages monostables sont planaires.

4. Procédé selon l'une des revendications 1 ou 2, **caractérisé par le fait que** les ancrages monostables sont homéotropes.

5. Procédé selon l'une des revendications 1 ou 2, **caractérisé par le fait que** l'un au moins des ancrages monostables est oblique par rapport aux plaques (10, 12).

6. Procédé selon l'une des revendications 1 ou 2, **caractérisé par le fait que** l'un des ancrages est homéotrope et l'autre planaire.

7. Procédé selon l'une des revendications 1 ou 2, **caractérisé par le fait que** l'un des ancrages est planaire et l'autre oblique.

8. Procédé selon l'une des revendications 1 ou 2, **caractérisé par le fait que** l'un des ancrages est homéotrope et l'autre oblique.

9. Procédé selon l'une des revendications 1 à 8, **caractérisé par le fait que** l'étape consistant à appliquer sur commande une tension suffisamment élevée pour casser l'un an moins des ancrages, consiste à appliquer un champ électrique perpendiculairement aux plaques (10, 12).

10. Procédé selon la revendication 9, **caractérisé par le fait que** l'ancrage qui casse est planaire et le cristal liquide possède une anisotropie diélectrique positive.

11. Procédé selon la revendication 9, **caractérisé par le fait que** l'ancrage qui casse est homéotrope et le cristal liquide possède une anisotropie diélectrique négative.

12. Procédé selon l'une des revendications 1 à 10, **caractérisé par le fait qu'**il comprend l'étape consistant à placer le cristal liquide dans une situation instable dans laquelle l'énergie élastique d'interaction des molécules de surface du cristal liquide avec la surface des plaques (10, 12) est maximale.

13. Procédé selon l'une des revendications 1 à 12, **caractérisé par le fait que** l'effet bistable en volume est induit par l'application d'un champ électrique latéral sur le dispositif.

14. Procédé selon la revendication 13, **caractérisé par le fait que** l'effet bistable en volume est induit par des électrodes interdigitales (50, 52) sur l'une des plaques (10) faisant face à la plaque (12) dont l'ancrage est cassé, et des moyens aptes à appliquer une tension de commande sur l'une au moins choisie, alternativement, de ces électrodes.

15. Procédé selon la revendication 13, **caractérisé par le fait que** l'effet bistable en volume est induit par au moins une électrode (60) possédant au moins un bord (62) plus conducteur que sa partie centrale (64).

16. Procédé selon la revendication 13, **caractérisé par le fait que** l'effet bistable en volume est induit par des électrodes, sur le chant du dispositif.

17. Procédé selon l'une des revendications 1 à 10 et 12, **caractérisé par le fait que** l'effet bistable en volume est induit far des moyens aptes à générer un effet hydrodynamique.

18. Procédé selon la revendication 17, **caractérisé par le fait que** l'effet bistable en volume est induit par des moyens aptes à générer un cisaillement sur les molécules de cristal liquide près de la plaque dont l'ancrage est cassé.

19. Procédé selon la revendication 18, **caractérisé par le fait que** l'effet bistable en volume est induit par des moyens aptes à opérer un déplacement mécanique d'une partie au moins de la plaque, par exemple à l'aide d'un système piézo-électrique ou à l'aide d'ondes sonores.

20. Procédé selon la revendication 18, **caractérisé par le fait que** l'effet bistable en volume est induit par des moyens aptes à assurer une sollicitation transversale mécanique sur les plaques.

21. Procédé selon la revendication 18, **caractérisé par le fait que** l'effet bistable en volume est induit par des moyens comportant une électrode auxiliaire (c) placée à côté d'une électrode (p) définissant un pixel.

22. Procédé selon la revendication 21, **caractérisé par le fait que** l'ancrage est oblique sur l'électrode auxiliaire (c) et que le procédé consiste à appliquer sélectivement un champ de commande sur l'électrode auxiliaire au moment où on coupe le champ électrique sur l'électrode (p) de pixel ou un champ de commande sur l'électrode auxiliaire en même temps que le champ électrique sur l'électrode (p) de pixel.

23. Procédé selon l'une des revendications 17 ou 18, **caractérisé par le fait que** l'effet bistable en volume est induit par un couplage hydrodynamique entre les deux plaques (10, 12).

24. Procédé selon l'une des revendications 1 à 23, **caractérisé par le fait que** les électrodes définissent des pixels et que le procédé consiste à commander de façon homogène toute la surface d'un desdits pixels.

25. Procédé selon l'une des revendications 1 à 23, **caractérisé par le fait qu'**il consiste à commander une partie variable d'un pixel.

26. Procédé selon la revendication 18 ou 23, **caractérisé par le fait que** :
- les plaques (10, 12) définissent des seuils d'ancrage différents,
- l'épaisseur du dispositif entre les deux plaques (10, 12) est suffisamment faible pour permettre un couplage hydrodynamique entre les surfaces internes de celles-ci, et
- que le procédé consiste à appliquer entre les électrodes des deux plaques alternativement une impulsion de champ électrique d'écriture supérieure à un seuil apte à casser les ancrages sur les deux plaques (10, 12) pour définir, après interruption de ce champ électrique, un premier état stable tordu résultant d'un couplage hydrodynamique entre les deux plaques (10, 12) et un deuxième champ électrique inférieur audit seuil apte à casser un seul ancrage ou à front descendant variant lentement pour découpler les basculements sur les deux plaques, afin de définir un second état stable homogène.

27. Procédé selon la revendication 26, **caractérisé par le fait que** le matériau cristal liquide (20) est un cristal liquide nématique.

28. Procédé selon la revendication 26, **caractérisé par le fait que** le matériau cristal liquide (20) est un cristal liquide cholestérique.

29. Procédé selon l'une des revendications 26 à 28, **caractérisé par le fait que** le matériau cristal liquide (20) possède une anisotropie diélectrique positive.

30. Procédé selon l'une des revendications 26 à 29, **caractérisé par le fait que** l'épaisseur (d) du matériau cristal liquide est inférieure à *l* /θₛ, relation dans laquelle :
*l* représente la longueur d'extrapolation définissant l'énergie d'ancrage zenithal, et
θₛ représente l'angle des molécules en surface.

31. Procédé selon l'une des revendications 26 à 30, **caractérisé par le fait que** l'épaisseur (d) du matériau cristal liquide respecte la relation : d/l < (η² / Kρ)^{1/3}
dans laquelle :
l représente la longueur d'extrapolation définissant l'énergie d'ancrage zénithal,
η représente une viscosité.
K est la constante élastique de courbure, et
ρ est la masse spécifique.

32. Procédé selon l'une des revendications 26 à 31, **caractérisé par le fait que** l'épaisseur du matériau cristal liquide est inférieure à L/θ_{S}, relation dans laquelle L représente la longueur d'extrapolation définissant l'énergie d'ancrage azimuthal et θₛ représente l'angle des molécules en surface.

33. Procédé selon l'une des revendications 26 à 32, **caractérisé par le fait que** l'épaisseur (d) du matériau cristal liquide (20) est inférieure à 5µm.

34. Procédé selon l'une des revendications 26 à 33, **caractérisé par le fait que** les directions d'ancrage facile sur les deux plaques (10, 12) sont non parallèles entre elles.

35. Procédé selon l'une des revendications 26 à 33, **caractérisé par le fait que** les directions d'ancrage facile sur les deux plaques (10, 12) sont parallèles entre elles.

36. Procédé selon l'une des revendications 26 à 33, **caractérisé par le fait que** les directions d'ancrage facile sur les deux plaques (10, 12) sont orthogonales entre elles.

37. Procédé selon l'une des revendications 26 à 35, **caractérisé par le fait que** les directions d'ancrage facile sur les deux plaques (10, 12) sont non orthogonales entre elles.

38. Procédé selon l'une des revendications 26 à 34, **caractérisé par le fait que** les directions d'ancrage facile sur les deux plaques (10, 12) sont tournées d'environ 45° ou 135°.

39. Procédé selon l'une des revendications 26 à 38, **caractérisé par le fait qu'**il utilise un écran matriciel comportant des lignes et des colonnes et qu'il met en oeuvre des moyens d'alimentation (40) adaptés pour ouvrir une ligne en lui appliquant une tension légèrement inférieure à V=E₁₀d, seuil supérieur en tension de la surface la plus dure à casser et pour appliquer sur les colonnes une tension ±v < = |E1-E2|d soit une tension inférieure à l'écart en tension entre les seuils des deux surfaces.

40. Procédé selon la revendication 39, **caractérisé par le fait que** la tension appliquée aux colonnes moyennée dans le temps, est inférieure au seuil de l'instabilité de Freedericksz.

41. Procédé selon l'une des revendications 26 à 40, **caractérisé par le fait que** les traitements de surface sur les deux plaques (10, 12) sont adaptés pour définir des seuils d'ancrage qui diffèrent de 5 à 10%.

42. Procédé selon l'une des revendications 26 à 41, **caractérisé par le fait que** les seuils d'ancrage dépendent de la polarité du champ électrique appliqué.

43. Procédé selon l'une des revendications 26 à 42, **caractérisé par le fait que** le matériau cristal liquide (20) est dopé par des ions permettant de modifier les seuils de basculement des molécules sur l'une au moins des plaques.

44. Procédé selon la revendication 43, **caractérisé par le fait que** les ions sont choisis dans le groupe comprenant du tétraphénylborate de sodium, du chlorure de tétrabutyl ammonium et du bromure de cétyltributyl ammonium.

45. Procédé selon l'une des revendications 26 à 44, **caractérisé par le fait que** le temps de descente de la tension de commande d'écriture est inférieur à 30µs.

46. Procédé selon l'une des revendications 26 à 45, **caractérisé par le fait que** le temps de descente de la tension de commande d'effacement est supérieur à 30µs.

47. Procédé selon l'une des revendications 26 à 46, **caractérisé par le fait qu'**il comprend une étape d'application d'une tension électrique alternative.

48. Procédé selon l'une des revendications 5 ou 7, **caractérisé par le fait qu'**il consiste à appliquer des impulsions de champ électrique d'écriture d'amplitude supérieure au seuil de cassure d'ancrage sur la plaque (12) opposée à la plaque maître (10) d'ancrage oblique.

49. Procédé selon la revendication 48, **caractérisé par le fait qu'**il consiste à appliquer un champ électrique d'effacement dont l'amplitude décroit progressivement pour franchir par défaut le seuil de cassure d'ancrage sur la plaque (12) opposée à la plaque maître (10) d'ancrage oblique.

50. Procédé selon la revendication 48, **caractérisé par le fait qu'**il consiste à appliquer un champ électrique d'effacement constitué de deux échelons successifs : l'un premier nettement supérieur au seuil de cassure d'ancrage sur la plaque (12) opposée à la plaque maître (10) d'ancrage oblique et l'autre second juste légèrement supérieur à ce seuil de cassure d'ancrage pour limiter l'effet hydrodynamique lors de la coupure de ce deuxième échelon.

51. Procédé selon la revendication 1, **caractérisé par le fait que** les ancrages sont obliques sur les deux plaques (10, 12).

52. Procédé selon la revendication 51, **caractérisé par le fait que** l'angle d'inclinaison de l'ancrage est fort sur une plaque maître (10) et plus faible pour une plaque-esclave (12).

53. Procédé selon l'une des revendications 51 ou 52, **caractérisé par le fait qu'**il consiste à appliquer des impulsions de champ électrique d'écriture d'amplitude supérieure au seuil de cassure d'ancrage sur les deux plaques (10, 12).

54. Procédé selon l'une des revendications 51 à 53, **caractérisé par le fait qu'**il consiste à appliquer un champ électrique d'effacement d'amplitude supérieure au seuil de cassure d'ancrage sur la plaque esclave (12) d'ancrage oblique.

55. Procédé selon l'une des revendications 51 à 54, **caractérisé par le fait que** les ancrages sur les deux plaques (10, 12) présentent une prétorsion au repos, favorisant l'effet hydrodynamique.

56. Procédé selon l'une des revendications 51 à 55, **caractérisé par le fait que** les ancrages sur les deux plaques (10, 12) sont tordus de 90°.

57. Procédé selon l'une des revendications 1 à 56, **caractérisé par le fait que** le cristal liquide comprend un mélange nématique-cholestérique.

58. Procédé selon l'une des revendications 1 ou 2, **caractérisé par le fait que** pour un fonctionnement métastable, les ancrages sur les plaques (10, 12) définissent en l'absence de champ deux textures : l'une à énergie élastique beaucoup plus grande que l'autre.

59. Procédé selon la revendication 58, **caractérisé par le fait que** les deux textures correspondent à un ancrage oblique sur une plaque (10) et planaire sur l'autre (12).

60. Procédé selon la revendication 58, **caractérisé par le fait que** les deux textures correspondent à des ancrages obliques sur chacune des plaques.

61. Procédé selon l'une des revendications 58 à 60, **caractérisé par le fait que** les deux textures correspondent l'une à une texture non tordue légèrement en éventail, l'autre à une texture demi-tour en torsion.

62. Procédé selon l'une des revendications 58 à 61, **caractérisé par le fait qu'**il comprend l'étape consitant à placer en contact avec le matériau cristal liquide, des centres de nucléation de défauts à densité contrôlée.

63. Procédé selon la revendication 61, **caractérisé par le fait que** la texture des molécules de LCD comporte une zone planaire dans le volume et qu'il consiste à appliquer des impulsions de champ électrique d'amplitude supérieure au seuil de cassure irréversible pour transformer la texture stable comportant une zone planaire dans le volume en une autre texture stable.

64. Dispositif d'affichage comprenant deux plaques transparentes parallèles (10, 12) munies d'électrodes sur leurs surfaces internes et contenant un matériau cristal liquide (20), **caractérisé par le fait qu'**il comprend :
- des moyens définissant un ancrage monostable sur chaque plaque (10, 12),
- des moyens (40) assurant sur commande une cassure de l'un au moins de ces ancrages à chaque commutation d'affichage, et
- des moyens aptes à générer une effet hydrodynamique pour induire, suite à cette cassure, un effet bistable en volume.

65. Dispositif selon la revendication 64, **caractérisé par le fait que** les moyens de cassure d'ancrage (40) sont adaptés pour casser les ancrages sur les deux plaques (10, 12).

66. Dispositif selon l'une des revendications 64 ou 65, **caractérisé par le fait que** les ancrages monostables sont planaires.

67. Dispositif selon l'une des revendications 64 ou 65, **caractérisé par le fait que** les ancrages monostables sont homéotropes.

68. Dispositif selon l'une des revendications 64 ou 65, **caractérisé par le fait que** l'un au moins des ancrages monostables est oblique par rapport aux plaques (10, 12).

69. Dispositif selon l'une des revendications 64 ou 65, **caractérisé par le fait que** l'un des ancrages est homéotrope et l'autre planaire.

70. Dispositif selon l'une des revendications 64 ou 65, **caractérisé par le fait que** l'un des ancrages est planaire et l'autre oblique.

71. Dispositif selon l'une des revendications 64 ou 65, **caractérisé par le fait que** l'un des ancrages est homéotrope et l'autre oblique.

72. Dispositif selon l'une des revendications 64 à 71, **caracterisé par le fait que** les moyens de cassure d'ancrage comprennent des moyens de commande electrique aptes à appliquer un champ électrique.

73. Dispositif selon la revendication 72, **caractérisé par le fait que** les moyens de cassure d'ancrage comprennent des moyens aptes à appliquer un champ électrique perpendiculairement aux plaques (10, 12).

74. Dispositif selon la revendication 73, **caractérisé par le fait que** l'ancrage est planaire et le cristal liquide possède une anisotropie diélectrique positive.

75. Dispositif selon la revendication 73, **caractérisé par le fait que** l'ancrage est homéotrope et le cristal liquide possède une anisotropie diélectrique négative.

76. Dispositif selon l'une des revendications 64 à 75, **caractérisé par le fait que** les moyens de cassure d'ancrage sont adaptés pour placer le cristal liquide dans une situation instable dans laquelle l'énergie élastique d'interaction des molécules de surface du cristal liquide avec la surface des plaques (10, 12) est maximale.

77. Dispositif selon l'une des revendications 64 à 76, **caractérisé par le fait que** les moyens induisant un effet bistable en volume comprennent des moyens aptes à appliquer un champ électrique latéral sur le dispositif.

78. Dispositif selon la revendication 77, **caractérisé par le fait que** les moyens induisant un effet bistable en volume comprennent des électrodes interdigitales (50, 52) sur l'une des plaques (10) faisant face à la plaque (12) dont l'ancrage est cassé, et des moyens aptes à appliquer une tension de commande sur l'une au moins choisie, alternativement, de ces électrodes.

79. Dispositif selon la revendication 77, **caractérisé par le fait que** les moyens induisant un effet bistable en volume comprennent au moins une électrode (60) possédant au moins un bord (62) plus conducteur que sa partie centrale (64).

80. Dispositif selon la revendication 77, **caractérisé par le fait que** les moyens induisant un effet bistable en volume comprennent des électrodes, sur le chant du dispositif.

81. Dispositif selon l'une des revendications 64 à 74, **caractérisé par le fait que** les moyens induisant un effet bistable en volume comprennent des moyens aptes à générer un cisaillement sur les molécules de cristal liquide près de la plaque dont l'ancrage est cassé.

82. Dispositif selon la revendication 81, **caractérisé par le fait que** les moyens induisant un effet bistable en volume comprennent des moyens aptes à opérer un déplacement mécanique d'une partie au moins de la plaque, par exemple à l'aide d'un système piézo-électrique ou à l'aide d'ondes sonores.

83. Dispositif selon la revendication 81, **caractérisé par le fait que** les moyens induisant un effet bistable en volume comprennent des moyens aptes à assurer une sollicitation transversale mécanique sur les plaques.

84. Dispositif selon la revendication 81, **caractérisé par le fait que** les moyens induisant un effet bistable en volume comprennent des moyens comportant une électrode auxiliaire (c) placée à côté d'une electrode (p) définissant un pixel.

85. Dispositif selon la revendication 84, **caractérisé par le fait que** l'ancrage est oblique sur l'électrode auxiliaire (c) et il est prévu des moyens appliquant sélectivement un champ de commande sur l'électrode auxiliaire au moment où on coupe le champ électrique sur l'électrode (p) de pixel ou un champ de commande sur l'électrode auxiliaire en même temps que le champ électrique sur l'électrode (p) de pixel.

86. Dispositif selon l'une des revendications 64 à 74, **caractérisé par le fait que** les moyens induisant un effet bistable en volume comprennent des moyens définissant un couplage hydrodynamique entre les deux plaques (10, 12).

87. Dispositif selon l'une des revendications 64 à 86, **caractérisé par le fait que** les moyens de cassure d'ancrage et de commutation bistable en volume sont adaptés pour commander de façon homogène toute la surface d'un pixel.

88. Dispositif selon l'une des revendications 64 à 86, **caractérisé par le fait que** l'un au moins des moyens de cassure d'ancrage et de commutation bistable en volume est adapté pour commander une partie variable d'un pixel.

89. Dispositif selon la revendication 81 ou 86 prise en combinaison avec la revendication 72, **caractérisé par le fait que** :
- les plaques (10, 12) définissent des seuils d'ancrage différents,
- l'épaisseur du dispositif entre les deux plaques (10, 12) est suffisamment faible pour permettre un couplage hydrodynamique entre les surfaces internes de celles-ci, et
- les moyens de commande électrique comprennent des moyens (40) appliquant entre les électrodes des deux plaques alternativement une impulsion de champ électrique d'écriture supérieure à un seuil apte à casser les ancrages sur les deux plaques (10, 12) pour définir, après interruption de ce champ élcctrique, un premier état stable tordu résultant d'un couplage hydrodynamique entre les deux plaques (10, 12) et un deuxième champ électrique inférieur audit seuil apte à casser un seul ancrage ou à front descendant variant lentement pour découpler les basculements sur les deux plaques, afin de définir un second état stable homogène.

90. Dispositif selon la revendication 89, **caractérisé par le fait que** le matériau cristal liquide (20) est un cristal liquide nématique.

91. Dispositif selon la revendication 89, **caractérisé par le fait que** le matériau cristal liquide (20) est un cristal liquide cholestérique.

92. Dispositif selon l'une des revendications 89 à 91, **caractérisé par le fait que** le matériau cristal liquide (20) possède une anisotropie diélectrique positive.

93. Dispositif selon l'une des revendications 89 à 92, **caractérisé par le fait que** l'épaisseur (d) du matériau cristal liquide est infrieure à *l* /θ₅, relation dans laquelle :
*l* représente la longueur d'extrapolation définissant l'énergie d'ancrage zénithal, et
θₛ représente l'angle des molécules en surface.

94. Dispositif selon l'une des revendications 89 à 93, **caractérisé par le fait que** l'épaisseur (d) du matériau cristal liquide respecte la relation : d/l < (η² / Kρ)^{1/3}
dans laquelle :
l représente la longueur d'extrapolation définissant l'énergie d'ancrage zénithal,
η représente une viscosité,
K est la constante étastique de courbure, et
ρ est la masse spécifique.

95. Dispositif selon l'une des revendications 89 à 94, **caractérisé par le fait que** l'épaisseur du matériau cristal liquide est inférieure à L/θ_{S}, relation dans laquelle L représente la longueur d'extrapolation définissant l'énergie d'ancrage azimuthal et θₛ représente l'angle des molécules en surface.

96. Dispositif selon l'une des revendications 89 à 95, **caractérisé par le fait que** l'épaisseur (d) du matériau cristal liquide (20) est inférieure à 5µm.

97. Dispositif selon l'une des revendications 89 à 96, **caractérisé par le fait que** les directions d'ancrage facile sur les deux plaques (10, 12) sont non parallèles entre elles.

98. Dispositif selon l'une des revendications 89 à 96, **caractérisé par le fait que** les directions d'ancrage facile sur les deux plaques (10, 12) sont parallèles entre elles.

99. Dispositif selon l'une des revendications 89 à 96, **caractérisé par le fait que** les directions d'ancrage facile sur les deux plaques (10, 12) sont orthogonales entre elles.

100. Dispositif selon l'une des revendications 89 à 96, **caractérisé par le fait que** les directions d'ancrage facile sur les deux plaques (10, 12) sont non orthogonales entre elles.

101. Dispositif selon l'une des revendications 89 à 97, **caractérisé par le fait que** les directions d'ancrage facile sur les deux plaques (10, 12) sont tournées d'environ 45° ou 135°.

102. Dispositif selon l'une des revendications 89 à 101 prise en combinaison avec la revendication 72, **caractérisé par le fait qu'**il est conformé en écran matriciel comportant des lignes et des colonnes et que les moyens de commande électrique (40) sont adaptés pour ouvrir une ligne en lui appliquant une tension légèrement inférieure à V=E₁₀d, seuil supérieur en tension de la surface la plus dure à casser et pour appliquer sur les colonnes une tension =v < = |E1-E2|d soit une tension inférieure à l'écart en tension entre les seuils des deux surfaces.

103. Dispositif selon la revendication 102, **caractérisé par le fait que** la tension appliquée aux colonnes moyennée dans le temps, est inférieure au seuil de l'instabilité de Freedericksz.

104. Dispositif selon l'une des revendications 89 à 103, **caractérisé par le fait que** les traitements de surface sur les deux plaques (10, 12) sont adaptés pour définir des seuils d'ancrage qui diffèrent de 5 à 10%.

105. Dispositif selon l'une des revendications 89 à 104, **caractérisé par le fait que** les seuils d'ancrage dépendent de la polarité du champ électrique appliqué.

106. Dispositif selon l'une des revendications 89 à 105, **caractérisé par le fait que** le matériau cristal liquide (20) est dopé par des ions permettant de modifier les seuils de basculement des molécules sur l'une au moins des plaques.

107. Dispositif selon la revendication 106, **caractérisé par le fait que** les ions sont choisis dans le groupe comprenant du tétraphénylborate de sodium, du chlorure de tétrabutyl ammonium et du bromure de cétyltributyl ammonium.

108. Dispositif selon l'une des revendications 89 à 107, **caractérisé par le fait que** le temps de descente de la tension de commande d'écriture est inférieur à 30µs.

109. Dispositif selon l'une des revendications 89 à 108, **caractérisé par le fait que** le temps de descente de la tension de commande d'effacement est supérieur à 30µs.

110. Dispositif selon l'une des revendications 89 à 109 prise en combinaison avec la revendication 72, **caractérisé par le fait que** les moyens de commande électriques (40) sont adaptés pour appliquer une tension électrique alternative.

111. Dispositif selon l'une des revendications 68 ou 70 prise en combinaison avec la revendication 72, **caractérisé par le fait que** les moyens de commande électriques sont adaptés pour appliquer des impulsions de champ électrique d'écriture d'amplitude supérieure au seuil de cassure d'ancrage sur la plaque (12) opposés à la plaque maître (10) d'ancrage oblique.

112. Dispositif selon le revendication 111, **caractérisé par le fait que** les moyens de commande électriques sont adaptés pour appliquer un champ électrique d'effacement dont l'amplitude décroit progressivement pour franchir par défaut le seuil de cassure d'ancrage sur la plaque (12) opposée à la plaque maître (10) d'ancrage oblique.

113. Dispositif selon la revendication 111, **caractérisé par le fait que** les moyens de commande électiques sont adaptés pour appliquer un champ électrique d'effacement constitué de deux échelons successifs : l'un premier nettement supérieur au seuil de cassure d'ancrage sur la plaque (12) opposée à la plaque maître (10) d'ancrage oblique et l'autre second juste légèrement supérieur à ce seuil de cassure d'ancrage pour limiter l'effet hydrodynamique lors de la coupure de ce deuxième échelon.

114. Dispositif selon la revendication 64, **caractérisé par le fait que** les ancrages sont obliques sur les deux plaques (10, 12).

115. Dispositif selon la revendication 114, **caractérisé par le fait que** l'angle d'inclinaison de l'ancrage est fort sur une plaque maître (10) et plus faible pour une plaque-esclave (12).

116. Dispositif selon l'une des revendications 114 ou 115 prise en combinaison avec la revendication 72, **caractérisé par le fait que** les moyens de commande électriques comprennent des moyens appliquant des impulsions de champ électrique d'écriture d'amplitude supérieure au seuil de cassure d'ancrage sur les deux plaques (10, 12).

117. Dispositif selon l'une des revendications 114 à 116 prise en combinaison avec la revendication 72, **caractérisé par le fait que** les moyens de commande électriques comprennent des moyens appliquant un champ électrique d'effacement d'amplitude supérieure au seuil de cassure d'ancrage sur la plaque esclave (12) d'ancrage oblique.

118. Dispositif selon l'une des revendications 114 à 117, **caractérisé par le fait que** les ancrages sur les deux plaques (10, 12) présentent une prétorsion au repos, favorisant l'effet hydrodynamique.

119. Dispositif selon l'une des revendication 114 à 118, **caractérisé par le fait que** les ancrages sur les deux plaques (10, 12) sont tordus de 90°.

120. Dispositif selon l'une des revendications 64 à 119, **caractérisé par le fait que** le cristal liquide comprend un mélange nématique-cholestérique.

121. Dispositif selon l'une des revendications 64 ou 65, **caractérisé par le fait que** pour un fonctionnement métastable, les ancrages sur les plaques (10, 12) définissent en l'absence de champ deux textures : l'une à énergie élastique beaucoup plus grande que l'autre.

122. Dispositif selon la revendication 121, **caractérisé par le fait que** les deux textures correspondent à un ancrage oblique sur une plaque (10) et planaire sur l'autre (12).

123. Dispositif selon la revendication 121, **caractérisé par le fait que** les deux textures correspondent à des ancrages obliques sur chacune des plaques.

124. Dispositif selon l'une des revendications 121 à 123, **caractérisé par le fait que** les deux textures correspondent l'une à une texture non tordue légèrement en éventail, l'autre à une texture demi-tour en torsion.

125. Dispositif selon l'une des revendications 121 à 124, **caractérisé par le fait qu'**il comprend des centres de nucléation de défauts à densité contrôlée, en contact avec le matériau cristal liquide.

126. Dispositif selon la revendication 115, **caractérisé par le fait que** la texture des molécules de LCD comporte une zone planaire dans le volume et que le dispositif comprend des moyens aptes à appliquer des impulsions de champ électrique d'amplitude supérieure au seuil de cassure irréversible pour transformer la texture stable comportant une zone planaire dans le volume en une autre texture stable.

## Patentansprüche

1. Anzeigeverfahren mit Hilfe einer Vorrichtung, die zwei transparente parallele Platten (10, 12), die auf ihren inneren Oberflächen mit Elektroden ausgestattet sind, umfaßt und die ein Flüssigkristallmaterial (20) enthält, **dadurch gekennzeichnet, daß** es die Schritte umfaßt, die darin bestehen,
- eine monostabile Verankerung mit jeder Platte (10, 12) zu definieren,
- auf Befehl eine Spannung, die ausreichend hoch ist, um mindestens eine dieser Verankerungen zu brechen, anzuwenden und
- infolge dieses Bruches einen bistabilen Volumeneffekt zu induzieren.

2. Verfahren nach Anspruch 1, **dadurch gekennzeichnet, daß** es den Schritt umfaßt, der darin besteht, die Verankerungen mit den zwei Platten (10, 12) zu brechen.

3. Verfahren nach einem der Ansprüche 1 oder 2, **dadurch gekennzeichnet, daß** die monostabilen Verankerungen planar sind.

4. Verfahren nach einem der Ansprüche 1 oder 2, **dadurch gekennzeichnet, daß** die monostabilen Verankerungen homeotrop sind.

5. Verfahren nach einem der Ansprüche 1 oder 2, **dadurch gekennzeichnet, daß** mindestens eine der monostabilen Verankerungen schiefwinklig bezüglich der Platten (10, 12) ist.

6. Verfahren nach einem der Ansprüche 1 oder 2, **dadurch gekennzeichnet, daß** die eine der Verankerungen homeotrop und die andere planar ist.

7. Verfahren nach einem der Ansprüche 1 oder 2, **dadurch gekennzeichnet, daß** die eine Verankerung planar und die andere schiefwinklig ist.

8. Verfahren nach einem der Ansprüche 1 oder 2, **dadurch gekennzeichnet, daß** die eine der Verankerungen homeotrop und die andere schiefwinklig ist.

9. Verfahren nach einem der Ansprüche 1 bis 8, **dadurch gekennzeichnet, daß** der Schritt, der darin besteht, auf Befehl eine Spannung anzulegen, die ausreichend hoch ist, um mindestens eine der Verankerungen zu brechen, darin besteht, ein zu den Platten (10, 12) senkrechtes elektrisches Feld aufzugeben.

10. Verfahren nach Anspruch 9, **dadurch gekennzeichnet, daß** die Verankerung, die bricht, planar ist und das Flüssigkristall eine positive dielektrische Anisotropie besitzt.

11. Verfahren nach Anspruch 9, **dadurch gekennzeichnet, daß** die Verankerung, die bricht, homeotrop ist und das Flüssigkristall eine negative dielektrische Anisotropie besitzt.

12. Verfahren nach einem der Ansprüche 1 bis 10, **dadurch gekennzeichnet, daß** es den Schritt umfaßt, der darin besteht, das Flüssigkristall in eine instabile Lage zu bringen, in der die elastische Energie der Wechselwirkung der Moleküle der Oberfläche des Flüssigkristalls mit der Oberfläche der Platten (10, 12) maximal ist.

13. Verfahren nach einem der Ansprüche 1 bis 12, **dadurch gekennzeichnet, daß** der bistabile Volumeneffekt durch die Anwendung eines seitlichen elektrischen Feldes auf die Vorrichtung induziert wird.

14. Verfahren nach Anspruch 13, **dadurch gekennzeichnet, daß** der bistabile Volumeneffekt induziert wird durch ineinandergreifende Elektroden (50, 52) auf der einen der Platten (10), die der Platte (12), deren Verankerung gebrochen ist, gegenüberliegt, und durch Mittel, die geeignet sind, eine Steuerspannung auf mindestens einer Elektrode, die aus diesen Elektroden alternativ ausgewählt wird, anzulegen.

15. Verfahren nach Anspruch 13, **dadurch gekennzeichnet, daß** der bistabile Volumeneffekt durch mindestens eine Elektrode (60) induziert wird, die mindestens einen Rand (62) besitzt, der ein stärkerer Leiter als ihr zentraler Teil (64) ist.

16. Verfahren nach Anspruch 13, **dadurch gekennzeichnet, daß** der bistabile Volumeneffekt durch Elektroden auf der Schmalseite der Vorrichtung induziert wird.

17. Verfahren nach einem der Ansprüche 1 bis 10 und 12, **dadurch gekennzeichnet, daß** der bistabile Volumeneffekt durch Mittel induziert wird, die geeignet sind, einen hydrodynamischen Effekt zu generieren.

18. Verfahren nach Anspruch 17, **dadurch gekennzeichnet, daß** der bistabile Volumeneffekt durch Mittel induziert wird, die geeignet sind, eine Scherkraft auf die Flüssigkristallmoleküle nahe der Platte, dessen Verankerung gebrochen ist, zu generieren.

19. Verfahren nach Anspruch 18, **dadurch gekennzeichnet, daß** der bistabile Volumeneffekt durch Mittel induziert wird, die geeignet sind, eine mechanische Verschiebung wenigstens eines Teils der Platte z.B. mit Hilfe eines piezoelektrischen Systems oder mit Hilfe von Schallwellen durchzuführen.

20. Verfahren nach Anspruch 18, **dadurch gekennzeichnet, daß** der bistabile Volumeneffekt durch Mittel induziert wird, die geeignet sind, eine transversale mechanische Belastung auf die Platten sicherzustellen.

21. Verfahren nach Anspruch 18, **dadurch gekennzeichnet, daß** der bistabile Volumeneffekt durch Mittel induziert wird, die eine Hilfselektrode (c) aufweisen, die neben einer Elektrode (p), die ein Pixel definiert, angeordnet ist.

22. Verfahren nach Anspruch 21, **dadurch gekennzeichnet, daß** die Verankerung zur Hilfselektrode (c) schiefwinklig ist und daß das Verfahren darin besteht, selektiv ein Steuerfeld auf die Hilfselektrode in dem Moment anzuwenden, in dem man das elektrische Feld auf der Pixelelektrode (p) abschaltet, oder ein Steuerfeld auf die Hilfselektrode zur gleichen Zeit wie das elektrische Feld auf der Pixelelektrode (p) anzuwenden.

23. Verfahren nach einem der Ansprüche 17 oder 18, **dadurch gekennzeichnet, daß** der bistabile Volumeneffekt durch eine hydrodynamische Kopplung zwischen den beiden Platten (10, 12) induziert wird.

24. Verfahren nach einem der Ansprüche 1 bis 23, **dadurch gekennzeichnet, daß** die Elektroden Pixel definieren und daß das Verfahren darin besteht, auf homogene Weise die gesamte Oberfläche eines der Pixel zu steuern.

25. Verfahren nach einem der Ansprüche 1 bis 23, **dadurch gekennzeichnet, daß** es darin besteht, einen variablen Teil eines Pixels zu steuern.

26. Verfahren nach einem der Ansprüche 18 oder 23, **dadurch gekennzeichnet, daß**:
- die Platten (10, 12) verschiedene Verankerungsschwellen definieren,
- die Dicke der Vorrichtung zwischen den beiden Platten (10, 12) ausreichend gering ist, um eine hydrodynamische Kopplung zwischen deren internen Oberflächen zu ermöglichen, und
- das Verfahren darin besteht, zwischen den Elektroden der zwei Platten alternativ einen Puls eines elektrischen Feldes zum Schreiben anzuwenden, der über einer Schwelle liegt, die geeignet ist, die Verankerungen mit den zwei Platten (10, 12) zu brechen, um nach Unterbrechung dieses elektrischen Feldes einen ersten stabilen gedrehten Zustand zu definieren, der aus einer hydrodynamischen Kopplung zwischen den zwei Platten (10, 12) resultiert und darin, ein zweites elektrisches Feld, das unterhalb der besagten Schwelle, die geeignet ist, eine einzelne Verankerung zu brechen, liegt oder eine langsam variierende absteigende Flanke hat, anzuwenden, um die Umschaltungen auf den zwei Platten zu entkoppeln, um einen zweiten homogenen stabilen Zustand zu definieren.

27. Verfahren nach Anspruch 26, **dadurch gekennzeichnet, daß** das Flüssigkristallmaterial (20) ein nematisches Flüssigkristall ist.

28. Verfahren nach Anspruch 26, **dadurch gekennzeichnet, daß** das Flüssigkristallmaterial (20) ein cholesterinisches Flüssigkristall ist.

29. Verfahren nach einem der Ansprüche 26 bis 28, **dadurch gekennzeichnet, daß** das Flüssigkristallmaterial (20) eine positive dielektrische Anisotropie besitzt.

30. Verfahren nach einem der Ansprüche 26 bis 29, **dadurch gekennzeichnet, daß** die Dicke (d) des Flüssigkristallmaterials geringer als l/θₛ ist, wobei in dieser Beziehung:
l die Extrapolationslänge darstellt, die die zenitale Verankerungsenergie definiert, und
θₛ den Winkel der Moleküle zur Oberfläche darstellt.

31. Verfahren nach einem der Ansprüche 26 bis 30, **dadurch gekennzeichnet, daß** die Dicke (d) des Flüssigkristalls der Beziehung gehorcht: d/l < (η²/Kρ)^{1/3} in der:
l die Extrapolationslänge darstellt, die die zenitale Verankerungsenergie definiert,
η eine Viskosität darstellt,
K die elastische Krümmungskonstante ist, und
ρ die spezifische Masse ist.

32. Verfahren nach einem der Ansprüche 26 bis 31, **dadurch gekennzeichnet, daß** die Dicke des Flüssigkristallmaterials kleiner als L/θₛ ist, wobei in dieser Beziehung L die Extrapolationslänge darstellt, die die azimutale Verankerungsenergie definiert und θₛ den Winkel der Moleküle zur Oberfläche darstellt.

33. Verfahren nach einem der Ansprüche 26 bis 32, **dadurch gekennzeichnet, daß** die Dicke (d) des Flüssigkristallmaterials (20) kleiner als 5 µm ist.

34. Verfahren nach einem der Ansprüche 26 bis 33, **dadurch gekennzeichnet, daß** die Richtungen der leichten Verankerung mit den zwei Platten (10, 12) untereinander nicht parallel sind.

35. Verfahren nach einem der Ansprüche 26 bis 33, **dadurch gekennzeichnet, daß** die Richtungen der leichten Verankerung mit den zwei Platten (10, 12) untereinander parallel sind.

36. Verfahren nach einem der Ansprüche 26 bis 33, **dadurch gekennzeichnet, daß** die Richtungen der leichten Verankerung mit den zwei Platten (10, 12) zueinander orthogonal sind.

37. Verfahren nach einem der Ansprüche 26 bis 35, **dadurch gekennzeichnet, daß** die Richtungen der leichten Verankerung mit den zwei Platten (10, 12) zueinander nicht orthogonal sind.

38. Verfahren nach einem der Ansprüche 26 bis 34, **dadurch gekennzeichnet, daß** die Richtungen der leichten Verankerung mit den zwei Platten (10, 12) etwa um 45° oder 135° gedreht sind.

39. Verfahren nach einem der Ansprüche 26 bis 38, **dadurch gekennzeichnet, daß** es ein Matrixdisplay verwendet, das Zeilen und Spalten aufweist und daß es Versorgungsmittel (40) einsetzt, die ausgebildet sind, um eine Zeile zu öffnen, indem auf sie eine Spannung aufgegeben wird, die etwas unterhalb von V=E₁₀d ist, der oberen Spannungsschwelle der am härtesten zu brechenden Oberfläche, und um auf die Spalten eine Spannung ±v < ±|E1-E2|d aufzugeben, was eine Spannung unterhalb des Spannungsunterschieds zwischen den Schwellen der zwei Oberflächen ist.

40. Verfahren nach Anspruch 39, **dadurch gekennzeichnet, daß** die auf die Spalten aufgegebene zeitlich gemittelte Spannung unterhalb der Instabilitätsschwelle von Freedericksz ist.

41. Verfahren nach einem der Ansprüche 26 bis 40, **dadurch gekennzeichnet, daß** die Oberflächenbehandlungen auf den zwei Platten (10, 12) ausgebildet sind, um Verankerungsschwellen zu definieren, die sich um 5 bis 10% unterscheiden.

42. Verfahren nach einem der Ansprüche 26 bis 41, **dadurch gekennzeichnet, daß** die Verankerungsschwellen von der Polarität des angewendeten elektrischen Feldes abhängen.

43. Verfahren nach einem der Ansprüche 26 bis 42, **dadurch gekennzeichnet, daß** das Flüssigkristallmaterial (20) mit Ionen dotiert ist, die es ermöglichen, die Umschaltschwellen der Moleküle wenigstens auf einer der Platten zu modifizieren.

44. Verfahren nach Anspruch 43, **dadurch gekennzeichnet, daß** die Ionen aus der Gruppe ausgewählt sind, die Natriumtetraphenylborat, Tetrabutylammoniumchlorid und Cetyltributylammoniumbromid umfaßt.

45. Verfahren nach einem der Ansprüche 26 bis 44, **dadurch gekennzeichnet, daß** die Abfallzeit der Steuerspannung zum Schreiben kleiner als 30 µs ist.

46. Verfahren nach einem der Ansprüche 26 bis 45, **dadurch gekennzeichnet, daß** die Abfallzeit der Steuerspannung zum Löschen größer als 30 µs ist.

47. Verfahren nach einem der Ansprüche 26 bis 46, **dadurch gekennzeichnet, daß** es einen Schritt zur Anwendung einer elektrischen Wechselspannung umfaßt.

48. Verfahren nach einem der Ansprüche 5 oder 7, **dadurch gekennzeichnet, daß** es darin besteht, Pulse eines elektrischen Feldes zum Schreiben mit einer Amplitude über der Bruchschwelle der Verankerung mit der Platte (12), die der Hauptplatte (10) mit schiefwinkliger Verankerung gegenüberliegt, anzuwenden.

49. Verfahren nach Anspruch 48, **dadurch gekennzeichnet, daß** es darin besteht, ein elektrisches Feld zum Löschen anzuwenden, dessen Amplitude progressiv abnimmt, um standardmäßig die Bruchschwelle der Verankerung mit der Platte (12), die gegenüber der Hauptplatte (10) mit schiefwinkliger Verankerung liegt, zu überschreiten.

50. Verfahren nach Anspruch 48, **dadurch gekennzeichnet, daß** es darin besteht, ein elektrisches Feld zum Löschen anzuwenden, das aus zwei aufeinanderfolgenden Stufen zusammengesetzt ist: die eine, erste Stufe, die deutlich über der Bruchschwelle der Verankerung mit der Platte (12), die gegenüber der Hauptplatte (10) mit schiefwinkliger Verankerung liegt, ist, und die andere, zweite Stufe, die gerade etwas oberhalb dieser Bruchschwelle der Verankerung ist, um den hydrodynamischen Effekt beim Abschalten dieser zweiten Stufe zu begrenzen.

51. Verfahren nach Anspruch 1, **dadurch gekennzeichnet, daß** die Verankerungen mit den zwei Platten (10, 12) schiefwinklig sind.

52. Verfahren nach Anspruch 51, **dadurch gekennzeichnet, daß** der Neigungswinkel der Verankerung mit einer Hauptplatte (10) groß ist und für eine Nebenplatte (12) geringer ist.

53. Verfahren nach einem der Ansprüche 51 oder 52, **dadurch gekennzeichnet, daß** es darin besteht, Pulse eines elektrischen Feldes zum Schreiben mit einer Amplitude über der Bruchschwelle der Verankerung auf den zwei Platten (10, 12) anzuwenden.

54. Verfahren nach einem der Ansprüche 51 bis 53, **dadurch gekennzeichnet, daß** es darin besteht, ein elektrisches Feld zum Löschen mit einer Amplitude über der Bruchschwelle der Verankerung mit der Nebenplatte (12) mit schiefwinkliger Verankerung anzuwenden.

55. Verfahren nach einem der Ansprüche 51 bis 54, **dadurch gekennzeichnet, daß** die Verankerungen mit den zwei Platten (10, 12) im Ruhezustand eine Vorverdrehung aufweisen, die den hydrodynamischen Effekt begünstigt.

56. Verfahren nach einem der Ansprüche 51 bis 55, **dadurch gekennzeichnet, daß** die Verankerungen mit den zwei Platten (10, 12) um 90° verdreht sind.

57. Verfahren nach einem der Ansprüche 1 bis 56, **dadurch gekennzeichnet, daß** das Flüssigkristall eine nematisch-cholesterinische Mischung umfaßt.

58. Verfahren nach einem der Ansprüche 1 oder 2, **dadurch gekennzeichnet, daß** für einen metastabilen Betrieb die Verankerungen mit den Platten (10, 12) bei Abwesenheit des Feldes zwei Texturen definieren: die eine mit einer viel größeren elastischen Energie als die andere.

59. Verfahren nach Anspruch 58, **dadurch gekennzeichnet, daß** die zwei Texturen einer schiefwinkligen Verankerung mit einer Platte (10) und einer planaren Verankerung mit der anderen (12) entsprechen.

60. Verfahren nach Anspruch 58, **dadurch gekennzeichnet, daß** die zwei Texturen schiefwinkligen Verankerungen mit jeder der Platten entsprechen.

61. Verfahren nach einem der Ansprüche 58 bis 60, **dadurch gekennzeichnet, daß** von den zwei Texturen die eine einer nicht-verdrehten leicht fächerförmigen Textur und die andere einer halbkreisartig verdrehten Textur entspricht.

62. Verfahren nach einem der Ansprüche 58 bis 61, **dadurch gekennzeichnet, daß** es den Schritt umfaßt, der darin besteht, Fehlstellenkeimbildungszentren mit kontrollierter Dichte in Kontakt mit dem Flüssigkristall zu bringen.

63. Verfahren nach Anspruch 61, **dadurch gekennzeichnet, daß** die Textur der Moleküle der LCD in dem Volumen eine planare Zone aufweist und daß es darin besteht, Pulse eines elektrischen Feldes mit einer Amplitude über der Schwelle des irreversiblen Bruches anzuwenden, um die stabile Textur, die in dem Volumen eine planare Zone aufweist, in eine andere stabile Textur umzuwandeln.

64. Anzeigevorrichtung, die zwei transparente parallele Platten (10, 12), die auf ihren inneren Oberflächen mit Elektroden ausgestattet sind, umfaßt und die ein Flüssigkristallmaterial (20) enthält, **dadurch gekennzeichnet, daß** sie umfaßt:
- Mittel, die eine monostabile Verankerung mit jeder Platte (10, 12) definieren,
- Mittel (40), die auf Befehl einen Bruch mindestens einer dieser Verankerungen bei jedem Umschalten der Anzeige sicherstellen, und
- Mittel, die geeignet sind, einen hydrodynamischen Effekt zu generieren, um infolge dieses Bruches einen bistabilen Volumeneffekt zu induzieren.

65. Vorrichtung nach Anspruch 64, **dadurch gekennzeichnet, daß** die Mittel zum Verankerungsbruch (40) ausgebildet sind, um die Verankerungen mit den zwei Platten (10, 12) zu brechen.

66. Vorrichtung nach einem der Ansprüche 64 oder 65, **dadurch gekennzeichnet, daß** die monostabilen Verankerungen planar sind.

67. Vorrichtung nach einem der Ansprüche 64 oder 65, **dadurch gekennzeichnet, daß** die monostabilen Verankerungen homeotrop sind.

68. Vorrichtung nach einem der Ansprüche 64 oder 65, **dadurch gekennzeichnet, daß** mindestens eine der monostabilen Verankerung schiefwinklig bezüglich der Platten (10, 12) ist.

69. Vorrichtung nach einem der Ansprüche 64 oder 65, **dadurch gekennzeichnet, daß** die eine der Verankerungen homeotrop und die andere planar ist.

70. Vorrichtung nach einem der Ansprüche 64 oder 65, **dadurch gekennzeichnet, daß** die eine der Verankerungen planar und die andere schiefwinklig ist.

71. Vorrichtung nach einem der Ansprüche 64 oder 65, **dadurch gekennzeichnet, daß** die eine der Verankerungen homeotrop und die andere schiefwinklig ist.

72. Vorrichtung nach einem der Ansprüche 64 bis 71, **dadurch gekennzeichnet, daß** die Mittel zum Verankerungsbruch elektrische Steuermittel umfassen, die geeignet sind, ein elektrisches Feld aufzugeben.

73. Vorrichtung nach Anspruch 72, **dadurch gekennzeichnet, daß** die Mittel zum Verankerungsbruch Mittel umfassen, die geeignet sind, ein zu den Platten (10, 12) senkrechtes elektrisches Feld aufzugeben.

74. Vorrichtung nach Anspruch 73, **dadurch gekennzeichnet, daß** die Verankerung planar ist und das Flüssigkristall eine positive dielektrische Anisotropie besitzt.

75. Vorrichtung nach Anspruch 73, **dadurch gekennzeichnet, daß** die Verankerung homeotrop ist und das Flüssigkristall eine negative elektrische Anisotropie besitzt.

76. Vorrichtung nach einem der Ansprüche 64 bis 75, **dadurch gekennzeichnet, daß** die Mittel zum Verankerungsbruch ausgebildet sind, um das Flüssigkristall in eine instabile Lage zu bringen, in der die elastische Energie der Wechselwirkung der Moleküle der Oberfläche des Flüssigkristalls mit der Oberfläche der Platten (10, 12) maximal ist.

77. Vorrichtung nach einem Ansprüche 64 bis 76, **dadurch gekennzeichnet, daß** die Mittel, die einen bistabilen Volumeneffekt induzieren, Mittel umfassen, die geeignet sind, ein seitliches elektrisches Feld auf die Vorrichtung anzuwenden.

78. Vorrichtung nach Anspruch 77, **dadurch gekennzeichnet, daß** die Mittel, die einen bistabilen Volumeneffekt induzieren, ineinandergreifende Elektroden (50, 52) auf der einen der Platten (10) aufweisen, die der Platte (12), deren Verankerung gebrochen ist, gegenüberliegt, und Mittel aufweisen, die geeignet sind, eine Steuerspannung auf mindestens einer Elektrode, die aus diesen Elektroden alternativ ausgewählt wird, anzulegen.

79. Vorrichtung nach Anspruch 77, **dadurch gekennzeichnet, daß** die Mittel, die einen bistabilen Volumeneffekt induzieren, mindestens eine Elektrode (60) umfassen, die mindestens einen Rand (62) besitzt, der ein stärkerer Leiter als ihr zentraler Teil (64) ist.

80. Vorrichtung nach Anspruch 77, **dadurch gekennzeichnet, daß** die Mittel, die einen bistabilen Volumeneffekt induzieren, Elektroden auf der Schmalseite der Vorrichtung umfassen.

81. Vorrichtung nach einem der Ansprüche 64 bis 74, **dadurch gekennzeichnet, daß** die Mittel, die einen bistabilen Volumeneffekt induzieren, Mittel umfassen, die geeignet sind, eine Scherkraft auf die Flüssigkristallmoleküle nahe der Platte, dessen Verankerung gebrochen ist, zu generieren.

82. Vorrichtung nach Anspruch 81, **dadurch gekennzeichnet, daß** die Mittel, die einen bistabilen Volumeneffekt induzieren, Mittel umfassen, die geeignet sind, eine mechanische Verschiebung wenigstens eines Teils der Platte z.B. mit Hilfe eines piezoelektrischen Systems oder mit Hilfe von Schallwellen durchzuführen.

83. Verfahren nach Anspruch 81, **dadurch gekennzeichnet, daß** die Mittel, die einen bistabilen Volumeneffekt induzieren, Mittel umfassen, die geeignet sind, eine transversale mechanische Belastung auf die Platten sicherzustellen.

84. Vorrichtung nach Anspruch 81, **dadurch gekennzeichnet, daß** die Mittel, die einen bistabilen Volumeneffekt induzieren, Mittel umfassen, die eine Hilfselektrode (c) aufweisen, die neben einer Elektrode (p), die ein Pixel definiert, angeordnet ist.

85. Vorrichtung nach Anspruch 84, **dadurch gekennzeichnet, daß** die Verankerung mit der Hilfselektrode (c) schiefwinklig ist und Mittel vorgesehen sind, die selektiv ein Steuerfeld auf die Hilfselektrode in dem Moment anwenden, in dem man das elektrische Feld auf der Pixelelektrode (p) abschaltet, oder die ein Steuerfeld auf die Hilfselektrode zur gleichen Zeit wie das elektrische Feld auf der Pixelelektrode (p) anwenden.

86. Vorrichtung nach einem der Ansprüche 64 bis 74, **dadurch gekennzeichnet, daß** die Mittel, die einen bistabilen Volumeneffekt induzieren, Mittel umfassen, die eine hydrodynamische Kopplung zwischen den zwei Platten (10, 12) definieren.

87. Verfahren nach einem der Ansprüche 64 bis 86, **dadurch gekennzeichnet, daß** die Mittel zum Verankerungsbruch und zur bistabilen Volumenumschaltung ausgebildet sind, um auf homogene Weise die gesamte Oberfläche eines Pixels zu steuern.

88. Vorrichtung nach einem der Ansprüche 64 bis 86, **dadurch gekennzeichnet, daß** mindestens eines der Mittel zum Verankerungsbruch und zur bistabilen Volumenumschaltung ausgebildet ist, um einen variablen Teil eines Pixels zu steuern.

89. Vorrichtung nach Anspruch 81 oder 86 in Kombination mit Anspruch 72, **dadurch gekennzeichnet, daß**:
- die Platten (10, 12) verschiedene Verankerungsschwellen definieren,
- die Dicke der Vorrichtung zwischen den beiden Platten (10, 12) ausreichend gering ist, um eine hydrodynamische Kopplung zwischen deren internen Oberflächen zu ermöglichen, und
- die elektrischen Steuermittel Mittel (40) umfassen, die zwischen den Elektroden der zwei Platten alternativ einen Puls eines elektrischen Feldes zum Schreiben anwenden, der über einer Schwelle liegt, die geeignet ist, die Verankerungen mit den zwei Platten (10, 12) zu brechen, um nach Unterbrechung dieses elektrischen Feldes einen ersten stabilen gedrehten Zustand zu definieren, der aus einer hydrodynamischen Kopplung zwischen den zwei Platten (10, 12) resultiert, und die ein zweites elektrisches Feld anwenden, das unterhalb der besagten Schwelle, die geeignet ist, eine einzelne Verankerung zu brechen, liegt oder eine langsam variierende absteigende Flanke hat, um die Umschaltungen auf den zwei Platten zu entkoppeln, um einen zweiten homogenen stabilen Zustand zu definieren.

90. Vorrichtung nach Anspruch 89, **dadurch gekennzeichnet, daß** das Flüssigkristallmaterial (20) ein nematisches Flüssigkristall ist.

91. Vorrichtung nach Anspruch 89, **dadurch gekennzeichnet, daß** das Flüssigkristall (20) ein cholesterinisches Flüssigkristall ist.

92. Vorrichtung nach einem der Ansprüche 89 bis 91, **dadurch gekennzeichnet, daß** das Flüssigkristallmaterial (20) eine positive elektrische Anisotropie besitzt.

93. Vorrichtung nach einem der Ansprüche 89 bis 92, **dadurch gekennzeichnet, daß** die Dicke (d) des Flüssigkristallmaterials geringer als l/θₛ ist, wobei in dieser Beziehung:
l die Extrapolationslänge darstellt, die die zenitale Verankerungsenergie definiert, und
θₛ den Winkel der Moleküle zur Oberfläche darstellt.

94. Vorrichtung nach einem der Ansprüche 89 bis 93, **dadurch gekennzeichnet, daß** die Dicke (d) des Flüssigkristallmaterials der Beziehung gehorcht:
d/l < (η²/Kρ)^{1/3}
in der:
l die Extrapolationslänge darstellt, die die zenitale Verankerungsenergie definiert,
η eine Viskosität darstellt,
K die elastische Krümmungskonstante ist, und
ρ die spezifische Masse ist.

95. Vorrichtung nach einem der Ansprüche 89 bis 94, **dadurch gekennzeichnet, daß** die Dicke des Flüssigkristallmaterials kleiner als L/θₛ ist, wobei in dieser Beziehung L die Extrapolationslänge darstellt, die die azimutale Verankerungsenergie definiert und θₛ den Winkel der Moleküle zur Oberfläche darstellt.

96. Vorrichtung nach einem der Ansprüche 89 bis 95, **dadurch gekennzeichnet, daß** die Dicke (d) des Flüssigkristallmaterials (20) kleiner als 5 µm ist.

97. Vorrichtung nach einem der Ansprüche 89 bis 96, **dadurch gekennzeichnet, daß** die Richtungen der leichten Verankerung mit den zwei Platten (10, 12) untereinander nicht parallel sind.

98. Vorrichtung nach einem der Ansprüche 89 bis 96, **dadurch gekennzeichnet, daß** die Richtungen der leichten Verankerung mit den zwei Platten (10, 12) untereinander parallel sind.

99. Vorrichtung nach einem der Ansprüche 89 bis 96, **dadurch gekennzeichnet, daß** die Richtungen der leichten Verankerung mit den zwei Platten (10, 12) zueinander orthogonal sind.

100. Vorrichtung nach einem der Ansprüche 89 bis 96, **dadurch gekennzeichnet, daß** die Richtungen der leichten Verankerung mit den zwei Platten (10, 12) zueinander nicht orthogonal sind.

101. Vorrichtung nach einem der Ansprüche 89 bis 97, **dadurch gekennzeichnet, daß** die Richtungen der leichten Verankerung mit den zwei Platten (10, 12) etwa um 45° oder 135° gedreht sind.

102. Vorrichtung nach einem der Ansprüche 89 bis 101 in Kombination mit Anspruch 72, **dadurch gekennzeichnet, daß** sie als Matrixdisplay ausgebildet ist, das Zeilen und Spaltetn aufweist und daß die elektrischen Steuermittel (40) ausgebildet sind, um eine Zeile zu öffnen, indem auf sie eine Spannung aufgegeben wird, die etwas unterhalb von V=E₁₀d ist, der oberen Spannungsschwelle der am härtesten zu brechenden Oberfläche, und um auf die Spalten eine Spannung ±v < ±|E1-E2|d aufzugeben, was eine Spannung unterhalb des Spannungsunterschiedes zwischen den Schwellen der zwei Oberflächen ist.

103. Vorrichtung nach Anspruch 102, **dadurch gekennzeichnet, daß** die auf die Spalten aufgegebene zeitlich gemittelte Spannung unterhalb der Instabilitätsschwelle von Freedericksz ist.

104. Vorrichtung nach einem der Ansprüche 89 bis 103, **dadurch gekennzeichnet, daß** die Oberflächenbehandlungen auf den zwei Platten (10, 12) ausgebildet sind, um Verankerungsschwellen zu definieren, die sich um 5 bis 10% unterscheiden.

105. Vorrichtung nach einem der Ansprüche 89 bis 104, **dadurch gekennzeichnet, daß** die Verankerungsschwellen von der Polarität des angewendeten elektrischen Feldes abhängen.

106. Vorrichtung nach einem der Ansprüche 89 bis 105, **dadurch gekennzeichnet, daß** das Flüssigkristallmaterial (20) mit Ionen dotiert ist, die es ermöglichen, die Umschaltschwellen der Moleküle wenigstens auf einer der Platten zu modifizieren.

107. Vorrichtung nach Anspruch 106, **dadurch gekennzeichnet, daß** die Ionen aus der Gruppe ausgewählt sind, die Natriumtetraphenylborat, Tetrabutylammoniumchlorid und Cetyltributylammoniumbromid umfaßt.

108. Vorrichtung nach einem der Ansprüche 89 bis 107, **dadurch gekennzeichnet, daß** die Abfallzeit der Steuerspannung zum Schreiben kleiner als 30 µs ist.

109. Vorrichtung nach einem der Ansprüche 89 bis 108, **dadurch gekennzeichnet, daß** die Abfallzeit der Steuerspannung zum Löschen größer als 30 µs ist.

110. Vorrichtung nach einem der Ansprüche 89 bis 109 in Kombination mit Anspruch 72, **dadurch gekennzeichnet, daß** die elektrischen Steuermittel (40) ausgebildet sind, um eine elektrische Wechselspannung anzuwenden.

111. Vorrichtung nach einem der Ansprüche 68 oder 70 in Kombination mit Anspruch 72, **dadurch gekennzeichnet, daß** die elektrischen Steuermittel ausgebildet sind, um Pulse eines elektrischen Feldes zum Schreiben mit einer Amplitude über der Bruchschwelle der Verankerung mit der Platte (12), die der Hauptplatte (10) mit schiefwinkliger Verankerung gegenüberliegt, anzuwenden.

112. Vorrichtung nach Anspruch 111, **dadurch gekennzeichnet, daß** die elektrischen Steuermittel ausgebildet sind, um ein elektrisches Feld zum Löschen anzuwenden, dessen Amplitude progressiv abnimmt, um standardmäßig die Bruchschwelle der Verankerung mit der Platte (12), die gegenüber der Hauptplatte mit schiefwinkliger Verankerung liegt, zu überschreiten.

113. Vorrichtung nach Anspruch 111, **dadurch gekennzeichnet, daß** die elektrischen Steuermittel ausgebildet sind, um ein elektrisches Feld zum Löschen anzuwenden, das aus zwei aufeinanderfolgenden Stufen zusammengesetzt ist: die eine, erste Stufe, die deutlich über der Bruchschwelle der Verankerung mit der Platte (12), die gegenüber der Hauptplatte (10) mit schiefwinkliger Verankerung liegt, ist, und die andere, zweite Stufe, die gerade etwas oberhalb dieser Bruchschwelle der Verankerung ist, um den hydrodynamischen Effekt beim Abschalten dieser zweiten Stufe zu begrenzen.

114. Vorrichtung nach Anspruch 64, **dadurch gekennzeichnet, daß** die Verankerungen mit den zwei Platten (10, 12) schiefwinklig sind.

115. Vorrichtung nach Anspruch 114, **dadurch gekennzeichnet, daß** der Neigungswinkel der Verankerung mit einer Hauptplatte (10) groß ist und für eine Nebenplatte (12) geringer ist.

116. Vorrichtung nach einem der Ansprüche 114 oder 115 in Kombination mit Anspruch 72, **dadurch gekennzeichnet, daß** die elektrischen Steuermittel Mittel umfassen, die Pulse eines elektrischen Feldes zum Schreiben mit einer Amplitude über der Bruchschwelle der Verankerung mit den zwei Platten (10, 12) anwenden.

117. Vorrichtung nach einem der Ansprüche 114 bis 116, in Kombination mit Anspruch 72, **dadurch gekennzeichnet, daß** die elektrischen Steuermittel Mittel umfassen, die ein elektrisches Feld zum Löschen mit einer Amplitude über der Bruchschwelle der Verankerung mit der Nebenplatte (12) mit schiefwinkliger Verankerung anwenden.

118. Vorrichtung nach einem der Ansprüche 114 bis 117, **dadurch gekennzeichnet, daß** die Verankerungen mit den zwei Platten (10, 12) im Ruhezustand eine Vorverdrehung aufweisen, die den hydrodynamischen Effekt begünstigt.

119. Vorrichtung nach einem der Ansprüche 114 bis 118, **dadurch gekennzeichnet, daß** die Verankerungen mit den zwei Platten (10, 12) um 90° verdreht sind.

120. Vorrichtung nach einem der Ansprüche 64 bis 119, **dadurch gekennzeichnet, daß** das Flüssigkristall eine nematisch-cholesterinische Mischung umfaßt.

121. Vorrichtung nach einem der Ansprüche 64 oder 65, **dadurch gekennzeichnet, daß** für einen metastabilen Betrieb die Verankerungen mit den Platten (10, 12) bei Abwesenheit des Feldes zwei Texturen definieren: die eine mit einer viel größeren elastischen Energie als die andere.

122. Vorrichtung nach Anspruch 121, **dadurch gekennzeichnet, daß** die zwei Texturen einer schiefwinkligen Verankerung mit einer Platte (10) und einer planaren Verankerung mit der anderen (12) entsprechen.

123. Vorrichtung nach Anspruch 121, **dadurch gekennzeichnet, daß** die zwei Texturen schiefwinkligen Verankerungen mit jeder der Platten entsprechen.

124. Vorrichtung nach einem der Ansprüche 121 bis 123, **dadurch gekennzeichnet, daß** von den zwei Texturen die eine einer nicht-verdrehten leicht fächerförmigen Textur und die andere einer halbkreisartig verdrehten Textur entspricht.

125. Vorrichtung nach einem der Ansprüche 121 bis 124, **dadurch gekennzeichnet, daß** sie Fehlstellenkeimbildungszentren mit kontrollierter Dichte in Kontakt mit dem Flüssigkristall umfaßt.

126. Vorrichtung nach Anspruch 115, **dadurch gekennzeichnet, daß** die Textur der Moleküle der LCD in dem Volumen eine planare Zone aufweist und daß die Vorrichtung Mittel umfaßt, die geeignet sind, Pulse eines elektrischen Feldes mit einer Amplitude über der Schwelle des irreversiblen Bruches anzuwenden, um die stabile Textur, die in dem Volumen eine planare Zone aufweist, in eine andere stabile Textur umzuwandeln.

## Claims

1. Method of display using a device comprising two parallel transparent plates (10, 12) provided with electrodes on their internal surfaces and containing a liquid-crystal material (20), **characterized in that** it comprises the steps consisting in:
- defining a monostable anchoring on each plate (10, 12);
- applying, on command, a sufficiently high voltage to break at least one of these anchorings; and
- inducing, after this breaking, a bistable volume effect.

2. Method according to Claim 1, **characterized in that** it comprises the step consisting in breaking the anchorings on both the plates (10, 12).

3. Method according to either of Claims 1 and 2, **characterized in that** the monostable anchorings are planar.

4. Method according to either of Claims 1 and 2, **characterized in that** the monostable anchorings are homeotropic.

5. Method according to either of Claims 1 and 2, **characterized in that** at least one of the monostable anchorings is oblique with respect to the plates (10, 12).

6. Method according to either of Claims 1 and 2, **characterized in that** one of the anchorings is homeotropic and the other planar.

7. Method according to either of Claims 1 and 2, **characterized in that** one of the anchorings is planar and the other oblique.

8. Method according to either of Claims 1 and 2, **characterized in that** one of the anchorings is homeotropic and the other oblique.

9. Method according to one of Claims 1 to 8, **characterized in that** the step consisting in applying, on command, a sufficiently high voltage to break at least one of the anchorings consists in applying an electric field perpendicular to the plates (10, 12).

10. Method according to Claim 9, **characterized in that** the anchoring which breaks is planar and the liquid crystal possesses a positive dielectric anisotropy.

11. Method according to Claim 9, **characterized in that** the anchoring which breaks is homeotropic and the liquid crystal possesses a negative dielectric anisotropy.

12. Method according to one of Claims 1 to 10, **characterized in that** it comprises the step consisting in placing the liquid crystal in an unstable situation in which the elastic energy of interaction of the liquid-crystal surface molecules with the surface of the plates (10, 12) is maximum.

13. Method according to one of Claims 1 to 12, **characterized in that** the bistable volume effect is induced by applying a lateral electric field to the device.

14. Method according to Claim 13, **characterized in that** the bistable volume effect is induced by interdigitated electrodes (50, 52) on one of the plates (10) facing the plate (12) whose anchoring is broken, and means capable of applying a drive voltage to at least one of these electrodes, this being chosen alternately.

15. Method according to Claim 13, **characterized in that** the bistable volume effect is induced by at least one electrode (60) possessing at least one edge (62) which is more conducting than its central part (64).

16. Method according to Claim 13, **characterized in that** the bistable volume effect is induced by electrodes along the edge of the device.

17. Method according to one of Claims 1 to 10 and 12, **characterized in that** the bistable volume effect is induced by means capable of generating a hydrodynamic effect.

18. Method according to Claim 17, **characterized in that** the bistable volume effect is induced by means capable of generating a shear on the liquid-crystal molecules close to the plate whose anchoring is broken.

19. Method according to Claim 18, **characterized in that** the bistable volume effect is induced by means capable of producing a mechanical displacement of at least one part of the plate, for example by using a piezoelectric system or by using sound waves.

20. Method according to Claim 18, **characterized in that** the bistable volume effect is induced by means capable of ensuring a mechanical transverse stress to the plates.

21. Method according to Claim 18, **characterized in that** the bistable volume effect is induced by means which include an auxiliary electrode (c) placed alongside an electrode (p) defining a pixel.

22. Method according to Claim 21, **characterized in that** the anchoring is oblique on the auxiliary electrode (c) and **in that** the method consists in selectively applying a drive field to the auxiliary electrode at the moment when the electric field on the pixel electrode (p) is cut off or a drive field to the auxiliary electrode at the same time as the electric field on the pixel electrode (p).

23. Method according to either of Claims 17 and 18, **characterized in that** the bistable volume effect is induced by a hydrodynamic coupling between the two plates (10, 12).

24. Method according to one of Claims 1 to 23, **characterized in that** the electrodes define pixels and **in that** the method consists in homogeneously driving the entire surface of one of the said pixels.

25. Method according to one of Claims 1 to 23, **characterized in that** it consists in driving a variable part of a pixel.

26. Method according to Claim 18 or 23, **characterized in that**:
- the plates (10, 12) define different anchoring thresholds;
- the thickness of the device between the two plates (10, 12) is sufficiently small to allow hydrodynamic coupling between the internal surfaces of the plates; and
- **in that** the method consists in applying, between the electrodes of the two plates alternately, a write electric-field pulse above a threshold capable of breaking the anchorings on the two plates (10, 12) in order to define, after interruption of this electric field, a twisted first stable state resulting from hydrodynamic coupling between the two plates (10, 12) and a second electric field, below the said threshold capable of breaking a single anchoring or having a falling edge which varies very slowly in order to decouple the tilts on the two plates, so as to define a homogeneous second stable state.

27. Method according to Claim 26, **characterized in that** the liquid-crystal material (20) is a nematic liquid crystal.

28. Method according to Claim 26, **characterized in that** the liquid-crystal material (20) is a cholesteric liquid crystal.

29. Method according to one of Claims 26 to 28, **characterized in that** the liquid-crystal material (20) possesses a positive dielectric anisotropy.

30. Method according to one of Claims 26 to 29, **characterized in that** the thickness (d) of the liquid-crystal material is less than *l*/θₛ, in which expression:
*l* denotes the extrapolation length defining the zenithal anchoring energy; and
θₛ denotes the angle of the surface molecules.

31. Method according to one of Claims 26 to 30, **characterized in that** the thickness (d) of the liquid-crystal material satisfies the relationship:
d/l < (η²/K□)^{1/3}
in which:
*l* denotes the extrapolation length defining the zenithal anchoring energy;
η denotes a viscosity;
K is the elastic curvature constant; and
ρ is the density.

32. Method according to one of Claims 26 to 31, **characterized in that** the thickness of the liquid-crystal material is less than L/θₛ, in which expression L denotes the extrapolation length defining the azimuthal anchoring energy and θₛ denotes the angle of the surface molecules.

33. Method according to one of Claims 26 to 32, **characterized in that** the thickness (d) of the liquid-crystal material (20) is less than 5 µm.

34. Method according to one of Claims 26 to 33, **characterized in that** the directions of easy anchoring on the two plates (10, 12) are not parallel to each other.

35. Method according to one of Claims 26 to 33, **characterized in that** the directions of easy anchoring on the two plates (10, 12) are parallel to each other.

36. Method according to one of Claims 26 to 33, **characterized in that** the directions of easy anchoring on the two plates (10, 12) are orthogonal to each other.

37. Method according to one of Claims 26 to 35, **characterized in that** the directions of easy anchoring on the two plates (10, 12) are not orthogonal to each

38. Method according to one of Claims 26 to 34, **characterized in that** the directions of easy anchoring on the two plates (10, 12) are rotated through approximately 45° or 135°.

39. Method according to one of Claims 26 to 38, **characterized in that** it uses a matrix-configured screen consisting of rows and columns and **in that** it employs supply means (40) suitable for opening a row by applying to it a voltage slightly less than V = E₁d, the upper voltage threshold of the surface hardest to break and for applying to the columns a voltage ±v < ± _{.}E₁ - E_{2.} d, i.e. a voltage less than the difference in voltage between the thresholds of the two surfaces.

40. Method according to Claim 39, **characterized in that** the voltage applied to the columns, averaged over time, is less than the Freedericksz instability threshold.

41. Method according to one of Claims 26 to 40, **characterized in that** the surface treatments on the two plates (10, 12) are suitable for defining anchoring thresholds which differ by from 5 to 10%.

42. Method according to one of Claims 26 to 41, **characterized in that** the anchoring thresholds depend on the polarity of the applied electric field.

43. Method according to one of Claims 26 to 42, **characterized in that** the liquid-crystal material (20) is doped by ions which make it possible to modify the tilt thresholds of the molecules on at least one of the plates.

44. Method according to Claim 43, **characterized in that** the ions are chosen from the group comprising sodium tetraphenylborate, tetrabutylammonium chloride and cetyltributylammonium bromide.

45. Method according to one of Claims 26 to 44, **characterized in that** the fall time of the write drive voltage is less than 30 µs.

46. Method according to one of Claims 26 to 45, **characterized in that** the fall time of the erasure drive voltage is greater than 30 µs.

47. Method according to one of Claims 26 to 46, **characterized in that** it comprises a step of applying an alternating electrical voltage.

48. Method according to either of Claims 5 and 7, **characterized in that** it consists in applying write electric-field pulses with an amplitude greater than the threshold for breaking the anchoring on the plate (12) opposite the oblique anchoring master plate (10).

49. Method according to Claim 48, **characterized in that** it consists in applying an erasure electric field whose amplitude decreases gradually in order to get over, by default, the threshold for breaking the anchoring on the plate (12) opposite the oblique anchoring master plate (10).

50. Method according to Claim 48, **characterized in that** it consists in applying an erasure electric field consisting of two successive steps: a first step markedly above the threshold for breaking the anchoring on the plate (12) opposite the oblique anchoring master plate (10) and the second step just slightly above this anchoring breaking threshold in order to limit the hydrodynamic effect during the cut-off of this second step.

51. Method according to Claim 1, **characterized in that** the anchorings are oblique on the two plates (10, 12).

52. Method according to Claim 51, **characterized in that** the angle of inclination of the anchoring is large on a master plate (10) and lower for a slave plate (12).

53. Method according to either of Claims 51 and 52, **characterized in that** it consists in applying write electric-field pulses with an amplitude greater than the threshold for breaking the anchoring on both the plates (10, 12).

54. Method according to one of Claims 51 to 53, **characterized in that** it consists in applying an erasure electric field with an amplitude greater than the threshold for breaking the anchoring on the oblique anchoring slave plate (12).

55. Method according to one of Claims 51 to 54, **characterized in that** the anchorings on the two plates (10, 12) have a pretwist in the off-state, favouring the hydrodynamic effect.

56. Method according to one of Claims 51 to 55, **characterized in that** the anchorings on the two plates (10, 12) are twisted through 90°.

57. Method according to one of Claims 1 to 56, **characterized in that** the liquid crystal comprises a nematic/cholesteric mixture.

58. Method according to either of Claims 1 and 2, **characterized in that**, for a metastable operation, the anchorings on the plates (10, 12) define two textures in the absence of a field, one having an elastic energy much greater than the other.

59. Method according to Claim 58, **characterized in that** the two textures correspond to an oblique anchoring on one plate, (10), and a planar anchoring on the other, (12).

60. Method according to Claim 58, **characterized in that** the two textures correspond to oblique anchorings on each of the plates.

61. Method according to one of Claims 58 to 60, **characterized in that** the two textures correspond one to a slightly splayed non-twisted texture and the other to a half-turn twist texture.

62. Method according to one of Claims 58 to 61, **characterized in that** it comprises the step consisting in placing controlled-density defect nucleation centres in contact with the liquid-crystal material.

63. Method according to Claim 61, **characterized in that** the texture of the LCD molecules includes a volume planar zone, and **in that** the method consists in applying electric-field pulses with an amplitude greater than the irreversible breaking threshold in order to convert the stable texture having a volume planar zone into another stable texture.

64. Display device comprising two parallel transparent plates (10, 12) provided with electrodes on their internal surfaces and containing a liquid-crystal material (20), **characterized in that** it comprises:
- means defining a monostable anchoring on each plate (10, 12);
- means (40) breaking, on command, at least one of these anchorings at each switching of the display; and
- means capable of generating a hydrodynamic effect in order to induce, after this breaking, a bistable volume effect.

65. Device according to Claim 64, **characterized in that** the anchoring breaking means (40) are suitable for breaking the anchorings on both the plates (10, 12).

66. Device according to either of Claims 64 and 65, **characterized in that** the monostable anchorings are planar.

67. Device according to either of Claims 64 and 65, **characterized in that** the monostable anchorings are homeotropic.

68. Device according to either of Claims 64 and 65, **characterized in that** at least one of the monostable anchorings is oblique with respect to the plates (10, 12).

69. Device according to either of Claims 64 and 65, **characterized in that** one of the anchorings is homeotropic and the other planar.

70. Device according to either of Claims 64 and 65, **characterized in that** one of the anchorings is planar and the other oblique.

71. Device according to either of Claims 64 and 65, **characterized in that** one of the anchorings is homeotropic and the other oblique.

72. Device according to one of Claims 64 to 71, **characterized in that** the anchoring breaking means comprise electrical drive means capable of applying an electric field.

73. Device according to Claim 72, **characterized in that** the anchoring breaking means comprise means capable of applying an electric field perpendicular to the plates (10, 12).

74. Device according to Claim 73, **characterized in that** the anchoring is planar and the liquid crystal possesses a positive dielectric anisotropy.

75. Device according to Claim 73, **characterized in that** the anchoring is homeotropic and the liquid crystal possesses a negative dielectric anisotropy.

76. Device according to one of Claims 64 to 75, **characterized in that** the anchoring breaking means are suitable for placing the liquid crystal in an unstable situation in which the elastic energy of interaction of the liquid-crystal surface molecules with the surface of the plates (10, 12) is maximum.

77. Device according to one of Claims 64 to 76, **characterized in that** the means inducing a bistable volume effect comprise means capable of applying a lateral electric field to the device.

78. Device according to Claim 77, **characterized in that** the means inducing a bistable volume effect comprise interdigitated electrodes (50, 52) on one of the plates (10) facing the plate (12) whose anchoring is broken, and means capable of applying a drive voltage to at least one of these electrodes, this being chosen alternately.

79. Device according to Claim 77, **characterized in that** the means inducing a bistable volume effect comprise at least one electrode (60) possessing at least one edge (62) which is more conducting than its central part (64).

80. Device according to Claim 77, **characterized in that** the means inducing a bistable volume effect comprise electrodes along the edge of the device.

81. Device according to one of Claims 64 to 74, **characterized in that** the means inducing a bistable volume effect comprise means capable of generating a shear on the liquid-crystal molecules close to the plate whose anchoring is broken.

82. Device according to Claim 81, **characterized in that** the means inducing a bistable volume effect comprise means capable of producing a mechanical displacement of at least one part of the plate, for example by using a piezoelectric system or by using sound waves.

83. Device according to Claim 81, **characterized in that** the means inducing a bistable volume effect comprise means capable of ensuring a mechanical transverse stress to the plates.

84. Device according to Claim 81, **characterized in that** the means inducing a bistable volume effect comprise means which include an auxiliary electrode (c) placed alongside an electrode (p) defining a pixel.

85. Device according to Claim 84, **characterized in that** the anchoring is oblique on the auxiliary electrode (c) and is provided with means selectively applying a drive field to the auxiliary electrode at the moment when the electric field on the pixel electrode (p) is cut off or a drive field to the auxiliary electrode at the same time as the electric field on the pixel electrode (p).

86. Device according to one of Claims 64 to 74, **characterized in that** the means inducing a bistable volume effect comprise means defining a hydrodynamic coupling between the two plates (10, 12).

87. Device according to one of Claims 64 to 86, **characterized in that** the means for anchoring breaking and for bistable volume switching are suitable for homogeneously driving the entire surface of a pixel.

88. Device according to one of Claims 64 to 86, **characterized in that** at least one of the means for anchoring breaking and for bistable volume switching is suitable for driving a variable part of a pixel.

89. Device according to Claim 81 or 86 taken in combination with Claim 72, **characterized in that**:
- the plates (10, 12) define different anchoring thresholds;
- the thickness of the device between the two plates (10, 12) is sufficiently small to allow hydrodynamic coupling between the internal surfaces of the plates; and
- the electrical drive means comprise means (40) which apply, between the electrodes of the two plates alternately, a write electric-field pulse above a threshold capable of breaking the anchorings on the two plates (10, 12) in order to define, after interruption of this electric field, a twisted first stable state resulting from hydrodynamic coupling between the two plates (10, 12) and a second electric field, below the said threshold capable of breaking a single anchoring or having a falling edge which varies very slowly in order to decouple the tilts on the two plates, so as to define a homogeneous second stable state.

90. Device according to Claim 89, **characterized in that** the liquid-crystal material (20) is a nematic liquid crystal.

91. Device according to Claim 89, **characterized in that** the liquid-crystal material (20) is a cholesteric liquid crystal.

92. Device according to one of Claims 89 to 91, **characterized in that** the liquid-crystal material (20) possesses a positive dielectric anisotropy.

93. Device according to one of Claims 89 to 92, **characterized in that** the thickness (d) of the liquid-crystal material is less than *l*/θₛ, in which expression:
*l* denotes the extrapolation length defining the zenithal anchoring energy; and
θₛ denotes the angle of the surface molecules.

94. Device according to one of Claims 89 to 93, **characterized in that** the thickness (d) of the liquid-crystal material satisfies the relationship:
d/*l* < (η²/Kρ)^{1/3}
in which:
*l* denotes the extrapolation length defining the zenithal anchoring energy;
η denotes a viscosity;
K is the elastic curvature constant; and
ρ is the density.

95. Device according to one of Claims 89 to 94, **characterized in that** the thickness of the liquid-crystal material is less than L/θₛ, in which expression L denotes the extrapolation length defining the azimuthal anchoring energy and θₛ denotes the angle of the surface molecules.

96. Device according to one of Claims 89 to 95, **characterized in that** the thickness (d) of the liquid-crystal material (20) is less than 5 µm.

97. Device according to one of Claims 89 to 96, **characterized in that** the directions of easy anchoring on the two plates (10, 12) are not parallel to each other.

98. Device according to one of Claims 89 to 96, **characterized in that** the directions of easy anchoring on the two plates (10, 12) are parallel to each other.

99. Device according to one of Claims 89 to 96, **characterized in that** the directions of easy anchoring on the two plates (10, 12) are orthogonal to each other.

100. Device according to one of Claims 89 to 96, **characterized in that** the directions of easy anchoring on the two plates (10, 12) are not orthogonal to each other.

101. Device according to one of Claims 89 to 97, **characterized in that** the directions of easy anchoring on the two plates (10, 12) are rotated through approximately 45° or 135°.

102. Device according to one of Claims 89 to 101 taken in combination with Claim 72, **characterized in that** it is formed into a matrix-configured screen consisting of rows and columns and **in that** the electrical drive means (40) are suitable for opening a row by applying to it a voltage slightly less than V = E₁d, the upper voltage threshold of the surface hardest to break and for applying to the columns a voltage ±v < ±|E₁ - E₂|d, i.e. a voltage less than the difference in voltage between the thresholds of the two surfaces.

103. Device according to Claim 102, **characterized in that** the voltage applied to the columns, averaged over time, is less than the Freedericksz instability threshold.

104. Device according to one of Claims 89 to 103, **characterized in that** the surface treatments on the two plates (10, 12) are suitable for defining anchoring thresholds which differ by from 5 to 10%.

105. Device according to one of Claims 89 to 104, **characterized in that** the anchoring thresholds depend on the polarity of the applied electric field.

106. Device according to one of Claims 89 to 105, **characterized in that** the liquid-crystal material (20) is doped by ions which make it possible to modify the tilt thresholds of the molecules on at least one of the plates.

107. Device according to Claim 106, **characterized in that** the ions are chosen from the group comprising sodium tetraphenylborate, tetrabutylammonium chloride and cetyltributylammonium bromide.

108. Device according to one of Claims 89 to 107, **characterized in that** the fall time of the write drive voltage is less than 30 µs.

109. Device according to one of Claims 89 to 108, **characterized in that** the fall time of the erasure drive voltage is greater than 30 µs.

110. Device according to one of Claims 89 to 109, **characterized in that** the electrical drive means (40) are suitable for applying an alternating electrical voltage.

111. Device according to either of Claims 68 and 70 taken in combination with Claim 72, **characterized in that** the electrical drive means are suitable for applying write electric-field pulses with an amplitude greater than the threshold for breaking the anchoring on the plate (12) opposite the oblique anchoring master plate (10).

112. Device according to Claim 111, **characterized in that** the electrical drive means are suitable for applying an erasure electric field whose amplitude decreases gradually in order to get over, by default, the threshold for breaking the anchoring on the plate (12) opposite the oblique anchoring master plate (10).

113. Device according to Claim 111, **characterized in that** the electrical drive means are suitable for applying an erasure electric field consisting of two successive steps: a first step markedly above the threshold for breaking the anchoring on the plate (12) opposite the oblique anchoring master plate (10) and the second step just slightly above this anchoring breaking threshold in order to limit the hydrodynamic effect during the cut-off of this second step.

114. Device according to Claim 64, **characterized in that** the anchorings are oblique on the two plates (10, 12).

115. Device according to Claim 114, **characterized in that** the angle of inclination of the anchoring is large on a master plate (10) and lower for a slave plate (12).

116. Device according to either of Claims 114 and 115 taken in combination with Claim 72, **characterized in that** the electrical drive means comprise means applying write electric-field pulses with an amplitude greater than the threshold for breaking the anchoring on both the plates (10, 12).

117. Device according to one of Claims 114 to 116 taken in combination with Claim 72, **characterized in that** the electrical drive means comprise means applying an erasure electric field with an amplitude greater than the threshold for breaking the anchoring on the oblique anchoring slave plate (12).

118. Device according to one of Claims 114 to 117, **characterized in that** the anchorings on the two plates (10, 12) have a pretwist in the off-state, favouring the hydrodynamic effect.

119. Device according to one of Claims 114 to 118, **characterized in that** the anchorings on the two plates (10, 12) are twisted through 90°.

120. Device according to one of Claims 64 to 119, **characterized in that** the liquid crystal comprises a nematic/cholesteric mixture.

121. Device according to either of Claims 64 and 65, **characterized in that**, for a metastable operation, the anchorings on the plates (10, 12) define two textures in the absence of a field, one having an elastic energy much greater than the other.

122. Device according to Claim 121, **characterized in that** the two textures correspond to an oblique anchoring on one plate, (10), and a planar anchoring on the other, (12).

123. Device according to Claim 121, **characterized in that** the two textures correspond to oblique anchorings on each of the plates.

124. Device according to one of Claims 121 to 123, **characterized in that** the two textures correspond one to a slightly splayed non-twisted texture and the other to a half-turn twist texture.

125. Device according to one of Claims 121 to 124, **characterized in that** it comprises controlled-density defect nucleation centres in contact with the liquid-crystal material.

126. Device according to Claim 115, **characterized in that** the texture of the LCD molecules includes a volume planar zone, and **in that** the device includes means capable of applying electric-field pulses with an amplitude greater than the irreversible breaking threshold in order to convert the stable texture having a volume planar zone into another stable texture.
